# EUROPEAN PATENT APPLICATION

(11) **EP 4 827 137 A1**
(43) Date of publication of application: **21.10.2026**
(21) Application number: 25738563.3
(22) Date of filing: 10.01.2025
(51) Int. Cl.: H04W 8/18, H04W 4/70, H04W 76/28

(54) **SENSING METHOD, COMMUNICATION APPARATUS, AND SYSTEM**

(30) Priority: 12.01.2024 CN 202410053504
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); ZHU, Fangyuan, Shenzhen, Guangdong 518129 (CN); YING, Jiangwei, Shenzhen, Guangdong 518129 (CN)
(74) Representative: Huawei European IPR
(86) International application number: PCT/CN2025/071749
(87) International publication number: WO 2025/149036

(57) **Abstract**

A sensing method, and a communication apparatus and system are provided. In the method, after receiving a sensing request, a network element responsible for sensing management functions, for example, an SF or a sensing server, obtains a target service requirement based on the sensing request, where the target service requirement is for determining a KPI for sensing a terminal, and determining the target service requirement is related to a sensing permission of the terminal. When the target service requirement is different from a service requirement carried in the sensing request, the SF or the sensing server may further request confirmation from an external server (for example, an AS or an AF) whether the external server consents to use the target service requirement, and in the case of consent, initiate a sensing procedure for the terminal based on the target service requirement. By incorporating a terminal-specific sensing permission into the determination of target service requirements, the method enables flexible responses to the sensing request message based on security demands of the terminal devices, thereby satisfying security demands of different terminal devices.

## Description

This application claims priority to Chinese Patent Application No. 202410053504.3, filed with the China National Intellectual Property Administration on January 12, 2024 and entitled "SENSING METHOD, AND COMMUNICATION APPARATUS AND SYSTEM", which is incorporated herein by reference in its entirety.

### TECHNICAL FIELD

This application relates to the communication field, and in particular, to a sensing method, and a communication apparatus and system.

### BACKGROUND

In mobile communication networks, some base stations or terminals in the radio access network (radio access network, RAN) can be used as sensing nodes due to their capabilities to use electromagnetic waves for sensing. The principle of sensing is similar to that of radar. That is, a transmitter emits electromagnetic waves, which are reflected by an object to be sensed and then captured by a receiver. The receiver can further process the reflected signal (which may be referred to as sensing raw data (sensing raw data)) to generate sensing data, which may then be used to obtain sensing results. Both the transmitter and the receiver can be referred to as sensing nodes.

In current sensing procedures, an application function (application function, AF) network element or an application server (application server, AS) for sensing applications may send a sensing request to a network exposure function (network exposure function, NEF) network element, to request sensing for a specific terminal. Alternatively, an AF, an AS, or a terminal may directly send a sensing request to a network element responsible for sensing functions in the communication network. In response to the sensing request, the network element responsible for sensing functions may initiate a sensing procedure for the specified terminal.

However, currently, no security-related procedure is available for sensing for the specific terminal.

### SUMMARY

This application provides a sensing method, and a communication apparatus and system, enabling flexible responses to sensing request messages based on security demands of terminal devices, thereby satisfying security demands of different terminal devices.

According to a first aspect, a sensing method is provided. The method may be applied to a second communication apparatus. The second communication apparatus may be, for example, a sensing function (sensing function, SF) network element or a sensing server (sensing server), may be a component, for example, a processor, a chip, or a chip system, configured in the SF network element or the sensing server, or may be a logical module or software that can implement all or some functions of the second communication apparatus. This is not limited in this application.

The method includes: receiving a sensing request, where the sensing request is for requesting to sense a terminal; and obtaining a target service requirement, where the target service requirement is for determining a key performance indicator (key performance indicator, KPI) for sensing the terminal, the target service requirement is related to a sensing permission of the terminal, and the sensing permission is for determining whether sensing of the terminal is allowed.

The sensing request may be, for example, a sensing request from a first communication apparatus (for example, an AF network element or an AS), and may be for requesting to sense one or more terminals. For ease of understanding and description, the method provided in this application is described in this specification by using an example in which one terminal is requested to be sensed. The terminal may be any terminal that is requested to be sensed.

In the solution provided in this application, the target service requirement for determining the KPI for sensing the terminal is related to the sensing permission of the terminal, so that a sensing procedure initiated for the terminal is adaptive to the sensing permission of the terminal, instead of blindly and directly determining, based on a service requirement requested by the AF network element, the AS, or the like, the KPI for sensing the terminal. In other words, in this application, the target service requirement may be obtained at the granularity of a terminal. Specifically, target service requirements of different terminals may be determined based on respective corresponding sensing permissions. Therefore, in consideration of security demands of the different terminals, different target service requirements are obtained in a flexible manner based on the sensing permissions of the different terminals, to initiate sensing procedures for the different terminals based on different KPIs, instead of blindly sensing, by using a same KPI based on service requirements requested by the AF network element or the AS, all terminals that are requested to be sensed.

Optionally, the sensing permission of the terminal includes: a sensing permission subscribed to by the terminal, a sensing notification feedback from the terminal, or a result, determined based on the sensing permission subscribed to by the terminal and the sensing notification feedback from the terminal, of whether sensing of the terminal is allowed.

The sensing permission subscribed to by the terminal or a sensing permission fed back by the terminal may indicate whether sensing of the terminal is allowed, or both may be used in combination to determine whether sensing of the terminal is allowed.

The sensing permission subscribed to by the terminal is a sensing permission subscribed to by the terminal with a network operator, and may also be referred to as a configured sensing permission, a default sensing permission, or a sensing permission stored on a network side. For example, the terminal may determine, by subscribing with the operator, whether sensing of the terminal is allowed.

For example, the sensing permission subscribed to by the terminal includes one or more of the following: not allowed to be sensed; allowed to be sensed; or allowed to be sensed, with a need to notify the terminal (without requiring a reply from the terminal).

It is not difficult to learn that the sensing permission subscribed to by the terminal may indicate whether sensing of the terminal is allowed.

The sensing notification feedback from the terminal indicates a reply made by the terminal to a received sensing notification request, may indicate that the terminal replies with consent or non-consent to being sensed, may be further for determining whether sensing of the terminal is allowed, and therefore may also be referred to as the sensing permission fed back by the terminal. For example, the second communication apparatus that receives the sensing request may send the sensing notification request to the terminal, where the sensing notification request may be for requesting the terminal to reply with consent or non-consent to being sensed.

In some cases, whether sensing of the terminal is allowed may not be determined simply based on the sensing permission subscribed to by the terminal or the sensing notification feedback from the terminal, and both need to be combined for determining.

For example, the sensing permission subscribed to by the terminal is: allowed to be sensed when the terminal replies with consent or does not reply, with a need to notify the terminal; or allowed to be sensed only when the terminal replies with consent, with a need to notify the terminal.

"Allowed to be sensed when the terminal replies with consent or does not reply, with a need to notify the terminal" is specifically: allowed to be sensed when the terminal replies with consent or the terminal does not reply while not allowed to be sensed when the terminal replies with non-consent, with the need to notify the terminal. "Allowed to be sensed only when the terminal replies with consent, with a need to notify the terminal" is specifically: allowed to be sensed when the terminal replies with consent while not allowed to be sensed when the terminal replies with non-consent or the terminal does not reply, with the need to notify the terminal.

Whether sensing of the terminal is allowed may be determined based on whether the terminal replies to the received sensing notification request or content of the reply. For example, the second communication apparatus that receives the sensing request may send the sensing notification request to the terminal based on the sensing permission subscribed to by the terminal, where the sensing notification request may be for requesting the terminal to reply with consent or non-consent to being sensed. The terminal may reply to the sensing notification request with consent or non-consent. That is, the sensing notification feedback from the terminal indicates that the terminal replies with consent to being sensed; and correspondingly, the sensing permission of the terminal indicates that sensing of the terminal is allowed. Alternatively, the sensing notification feedback from the terminal indicates that the terminal replies with non-consent to being sensed; and correspondingly, the sensing permission of the terminal indicates that sensing of the terminal is not allowed. The terminal may alternatively not reply to the sensing notification request. That is, the sensing notification feedback from the terminal indicates that the terminal does not reply. In this case, determining may be performed based on the sensing permission subscribed to by the terminal: If the sensing permission subscribed to by the terminal is: allowed to be sensed when the terminal replies with consent or does not reply, with the need to notify the terminal, the sensing permission of the terminal indicates that sensing of the terminal is allowed. If the sensing permission subscribed to by the terminal is: allowed to be sensed only when the terminal replies with consent, with the need to notify the terminal, the sensing permission of the terminal indicates that sensing of the terminal is not allowed.

In conclusion, the result of whether sensing of the terminal is allowed is determined based on the sensing permission subscribed to by the terminal and/or the sensing notification feedback from the terminal.

With reference to the first aspect, in some possible implementations of the first aspect, the sensing permission subscribed to by the terminal includes one or more of the following: allowed to be sensed; not allowed to be sensed; allowed to be sensed, with a need to notify the terminal without requiring a reply from the terminal; allowed to be sensed when the terminal replies with consent or does not reply, with a need to notify the terminal; or allowed to be sensed only when the terminal replies with consent, with a need to notify the terminal.

The different sensing permissions can satisfy different security demands of the different terminals, so that the network (for example, the SF or the sensing server) can enable flexible responses based on the different security demands.

Certainly, these enumerations are merely examples. The sensing permission subscribed to by the terminal may be any one of the foregoing enumerations, or may be another permission. This application includes but is not limited thereto.

Further, the sensing permission subscribed to by the terminal may correspond to at least one area, and/or the sensing permission subscribed to by the terminal may correspond to at least one time period.

The sensing permission subscribed to by the terminal may vary with a location and/or time. For example, a sensing permission subscribed to by the terminal in an area 1 is different from that in an area 2, or a sensing permission subscribed to by the terminal in a time period 1 is different from that in a time period 2. Others are not enumerated.

Sensing permissions of a same terminal at different locations and/or in different time periods can further satisfy a security demand of the terminal, so that the second communication apparatus enables more flexible responses to the sensing request based on the sensing permissions of the terminal.

With reference to the first aspect, in some possible implementations, that the target service requirement is related to the sensing permission of the terminal includes: The target service requirement is obtained when it is determined that sensing of the terminal is allowed, and/or the target service requirement is determined based on the sensing permission of the terminal.

The target service requirement is obtained when it is determined that sensing of the terminal is allowed. That is, when it is determined that sensing of the terminal is allowed, the target service requirement is obtained; or when it is determined that sensing of the terminal is not allowed, the target service requirement is not obtained. Whether sensing of the terminal is allowed is determined based on the sensing permission of the terminal, in other words, is the sensing permission of the terminal. Therefore, the target service requirement is related to the sensing permission of the terminal.

Correspondingly, the obtaining the target service requirement includes: obtaining the target service requirement when determining that sensing of the terminal is allowed.

It is determined that sensing of the terminal is allowed. That is, that sensing of the terminal is allowed is determined based on the sensing permission of the terminal. In other words, the sensing permission of the terminal indicates that sensing of the terminal is allowed.

Optionally, the determining that sensing of the terminal is allowed includes: determining, based on the sensing permission subscribed to by the terminal and/or a sensing notification feedback, that sensing of the terminal is allowed, where the sensing notification feedback indicates that the terminal consents to be sensed or that the terminal does not reply.

In other words, whether sensing of the terminal is allowed may be determined based on the subscribed sensing permission and/or the sensing notification feedback from the terminal.

It should be understood that the foregoing has described in detail, for the sensing permission of the terminal, several possible implementations of determining whether sensing of the terminal is allowed. For a specific implementation of determining that sensing of the terminal is allowed, refer to the foregoing description. Details are not described again.

Further, the method further includes: sending a sensing notification request, where the sensing notification request is for requesting the terminal to reply with consent or non-consent to being sensed; and obtaining the sensing notification feedback based on a response message to the sensing notification request.

That is, the sensing notification feedback from the terminal is obtained by sending the sensing notification request to the terminal. The response message to the sensing notification request may be a response message for the sensing notification request, and may indicate the sensing notification feedback. In a possible design, the response message to the sensing notification request carries the sensing notification feedback.

The sensing permission subscribed to by the terminal may be obtained from a data management function network element, or may be preconfigured in the second communication apparatus. This is not limited in this application. If the sensing permission subscribed to by the terminal is obtained from the data management function network element, optionally, the method further includes: obtaining, from a data management function network element, the sensing permission subscribed to by the terminal.

That the target service requirement is determined based on the sensing permission of the terminal may include: The target service requirement is determined based on the sensing permission subscribed to by the terminal and/or the sensing notification feedback from the terminal; or the target service requirement is determined based on a result of that sensing of the terminal is allowed, and the result of that sensing of the terminal is allowed is determined based on the sensing permission subscribed to by the terminal and/or the sensing notification feedback from the terminal. Therefore, alternatively, the target service requirement is determined based on the sensing permission subscribed to by the terminal and/or the sensing notification feedback.

The target service requirement may be determined by the data management function network element (for example, a unified data management (unified data management, UDM) network element), and then sent to the second communication apparatus; or may be determined by the second communication apparatus.

The target service requirement may be obtained when it is determined that sensing of the terminal is allowed, or may be obtained when it is not determined that sensing of the terminal is allowed. The following provides multiple possible implementations.

In a possible implementation, the target service requirement is obtained from the data management function network element.

Optionally, the obtaining the target service requirement when determining that sensing of the terminal is allowed includes: when it is determined that sensing of the terminal is allowed, sending a service requirement request to the data management function network element; and receiving the target service requirement from the data management function network element, where the target service requirement is determined based on the service requirement request.

In a possible case, the service requirement request may be sent to the data management function network element when the second communication apparatus determines that sensing of the terminal is allowed. In other words, sending of the service requirement request may be triggered by a condition that sensing of the terminal is allowed. After receiving the service requirement request, the data management function network element may determine the target service requirement, and send the target service requirement to the second communication apparatus. In other words, sending of the service requirement request may implicitly indicate that sensing of the terminal is allowed. After receiving the service requirement request, the data management function network element may consider by default that sensing of the terminal is allowed.

In another possible case, the service requirement request may alternatively be sent when the second communication apparatus determines the result of whether sensing of the terminal is allowed, and the service requirement request may indicate whether sensing of the terminal is allowed. In other words, regardless of whether sensing of the terminal is allowed, the second communication apparatus may send the service requirement request to the data management function network element. The data management function network element may first determine, based on the received service requirement request, whether sensing of the terminal is allowed, determine the target service requirement when sensing of the terminal is allowed, and send the target service requirement to the second communication apparatus, but does not need to determine the target service requirement when sensing of the terminal is not allowed. In other words, the data management function network element does not necessarily need to determine and send the target service requirement.

Optionally, the service requirement request carries the sensing notification feedback, the sensing notification feedback indicates that the terminal consents to be sensed in response to the sensing notification request or that the terminal does not reply, and the sensing notification request is for requesting the terminal to reply with consent or non-consent to being sensed.

That is, when it is not determined that sensing of the terminal is allowed, the target service requirement is obtained from the data management function network element by using the service requirement request. The service requirement request carries the sensing notification feedback. That is, the second communication apparatus directly notifies the data management function network element of the sensing notification feedback, and the data management function network element determines the target service requirement based on the sensing notification feedback and the sensing permission subscribed to by the terminal. The data management function network element may further determine the target service requirement when determining that sensing of the terminal is allowed, or may directly determine the target service requirement based on the sensing permission subscribed to by the terminal and the sensing notification feedback.

Further, the method further includes: sending a sensing notification request, where the sensing notification request is for requesting the terminal to reply with consent or non-consent to being sensed; and obtaining the sensing notification feedback based on a response message to the sensing notification request.

That is, the sensing notification feedback from the terminal is obtained by sending the sensing notification request to the terminal.

Optionally, the service requirement request further includes location information of the terminal and/or time information of the sensing request. The location information of the terminal indicates a location of the terminal. The location information may be carried in, for example, the service requirement request.

The time information of the sensing request indicates one or more of the following: time at which the first communication apparatus initiates the sensing request, time at which the second communication apparatus receives the sensing request, time at which sensing is requested and that is indicated by the sensing request, or time at which the data management function network element receives the service requirement request. The time information may be carried in, for example, the service requirement request, or may be determined by the data management function network element based on the time at which the service requirement request is received. This is not limited in this application.

The service requirement request carries the location information of the terminal and/or the time information of the sensing request, so that the target service requirement may be further determined with based on the location information and/or the location information.

In conclusion, it is not difficult to learn that the target service requirement may be determined based on one or two of an information element (information element, IE) and/or the time information carried in the service requirement request. The information element includes one or more of the following: the sensing permission subscribed to by the terminal, an indication indicating that sensing of the terminal is allowed, the sensing notification feedback, the location information, the time at which the sensing request is initiated, or the time at which the sensing request is received.

In another possible implementation, the target service requirement is determined by the second communication apparatus.

Optionally, the obtaining the target service requirement when determining that sensing of the terminal is allowed includes: when it is determined that sensing of the terminal is allowed, determining the target service requirement based on a location of the terminal and/or time information of the sensing request.

In other words, when determining that sensing of the terminal is allowed, the second communication apparatus determines the target service requirement.

When the location of the terminal and the time information of the sensing request are not distinguished, the second communication apparatus may directly determine the target service requirement when sensing of the terminal is allowed. However, this application is not limited thereto. The second communication apparatus may alternatively determine the target service requirement based on the location of the terminal or the time information of the sensing request.

The time information of the sensing request indicates one or more of the following: time at which the first communication apparatus initiates the sensing request, time at which the second communication apparatus receives the sensing request, or time at which sensing is requested and that is indicated by the sensing request.

During specific implementation, the second communication apparatus may determine the target service requirement based on a mapping relationship and an area to which the location of the terminal belongs, where the mapping relationship includes a correspondence between at least one service requirement and the at least one area. Alternatively, the second communication apparatus may determine the target service requirement based on a mapping relationship and the time information of the sensing request, where the mapping relationship includes a correspondence between at least one service requirement and the at least one time period. Alternatively, the second communication apparatus may determine the target service requirement based on a mapping relationship, the time information of the sensing request, and an area to which the location of the terminal belongs, where the mapping relationship includes a correspondence between at least one service requirement and at least one combination of an area and a time period.

Optionally, the obtaining the target service requirement includes: determining the target service requirement based on the sensing permission subscribed to by the terminal, the sensing notification feedback, and a mapping relationship, where the sensing notification feedback indicates that the terminal consents to be sensed in response to the sensing notification request or that the terminal does not reply to the sensing notification request, the sensing notification request is for requesting the terminal to reply with consent or non-consent to being sensed, and the mapping relationship includes a correspondence between at least one service requirement and at least one combination of the sensing permission and the sensing notification feedback.

That is, when it is not determined that sensing of the terminal is allowed, the second communication apparatus may alternatively directly determine the target service requirement based on the sensing permission subscribed to by the terminal, the sensing notification feedback, and the mapping relationship.

It may be understood that, when it is not determined that sensing of the terminal is allowed, the target service requirement may alternatively not be obtained. In this case, the target service requirement may be considered as rejection of the sensing request. In other words, the rejection of the sensing request may be considered as one type of the target service requirement.

The mapping relationship may be received from the data management function network element, or may be preconfigured in the second communication apparatus. This is not limited in this application. If the mapping relationship is received from the data management function network element, optionally, the method further includes: receiving the mapping relationship from the data management function network element.

Further, in the foregoing mapping relationship, each of the at least one combination of the sensing permission and the sensing notification feedback may correspond to one or more service requirements, and the one or more service requirements correspond to one or more areas. Correspondingly, the determining the target service requirement based on the sensing permission subscribed to by the terminal, the sensing notification feedback, and the mapping relationship includes: determining the target service requirement based on the sensing permission subscribed to by the terminal, the sensing notification feedback, the area to which the location of the terminal belongs, and the mapping relationship.

In other words, the terminal may have different service requirements in different areas, and the second communication apparatus may further determine the target service requirement based on the area to which the location of the terminal belongs.

Alternatively, in the foregoing mapping relationship, each of the at least one combination of the sensing permission and the sensing notification feedback may correspond to one or more service requirements, and the one or more service requirements correspond to one or more time periods. Correspondingly, the determining the target service requirement based on the sensing permission subscribed to by the terminal, the sensing notification feedback, and the mapping relationship includes: determining the target service requirement based on the sensing permission subscribed to by the terminal, the sensing notification feedback, the time information of the sensing request, and the mapping relationship.

As described above, the time information of the sensing request indicates one or more of the following: the time at which the first communication apparatus initiates the sensing request, the time at which the second communication apparatus receives the sensing request, or the time at which sensing is requested and that is indicated by the sensing request.

That is, in different time periods, the terminal may also have different service requirements, and the second communication apparatus may further determine the target service requirement based on a time period to which the time at which the sensing request is initiated or received or the time at which sensing is requested belongs.

In conclusion, it can be learned that the target service requirement may be determined based on one or more of the sensing permission of the terminal, the sensing notification feedback, the location of the terminal, or the time information. In other words, the target service requirement may be determined based on the mapping relationship, where the mapping relationship may include a correspondence between the at least one service requirement and one or more of the following: the sensing permission subscribed to by the terminal, the sensing notification feedback, the area, or the time period.

It can be learned from the multiple possible implementations of determining the target service requirement provided above that, regardless of whether the target service requirement is obtained when it is determined that sensing of the terminal is allowed or the target service requirement is obtained when it is not determined that sensing of the terminal is allowed, the target service requirement is related to the sensing permission of the terminal. Specifically, that sensing of the terminal is allowed needs to be determined based on the sensing permission subscribed to by the terminal and/or the sensing notification feedback from the terminal. Even if the target service requirement is obtained when it is not determined whether sensing of the terminal is allowed, the target service requirement further needs to be determined based on the sensing permission subscribed to by the terminal and the sensing notification feedback from the terminal. Therefore, in general, the target service requirement is related to the sensing permission of the terminal.

In addition, the target service requirement may be further determined based on the location of the terminal and/or the time information, so that more abundant service requirements can be provided for the sensing request, to satisfy a security demand of the terminal.

Optionally, the foregoing mapping relationship corresponds to the terminal.

That is, mapping relationships corresponding to a same service type and the different terminals may be the same or different.

The sensing request further carries an identifier of a terminal that is requested to be sensed. The mapping relationship may be a group of mapping relationships that correspond to the terminal and that are determined from at least one group of preconfigured mapping relationships corresponding to at least one terminal.

In a possible design, the foregoing mapping relationship is preconfigured in the second communication apparatus.

In another possible design, the foregoing mapping relationship is obtained from the data management function network element. Correspondingly, the method further includes: receiving the mapping relationship from the data management function network element.

A correspondence between the different terminals and different service requirements is defined at the granularity of a terminal, so that the security demands of the different terminals can be satisfied.

Optionally, the foregoing mapping relationship corresponds to a requested service type.

That is, mapping relationships corresponding to the same terminal and different service types may be the same or different.

The sensing request further indicates the requested service type. The mapping relationship may be a group of mapping relationships that correspond to the requested service type and that are determined from at least one group of preconfigured mapping relationships corresponding to at least one service type.

A correspondence between the different service types and different service requirements is defined at the granularity of a service type, so that different service demands can be satisfied.

Optionally, the foregoing mapping relationship corresponds to the terminal and the requested service type.

That is, the mapping relationship may be a group of mapping relationships that correspond to the terminal and the requested service type and that are determined from multiple groups of preconfigured mapping relationships corresponding to at least one terminal and at least one service type.

A correspondence between the different terminals and the different service types, and different service requirements is defined, and both the security demands of the different terminals and different service demands are considered, so that more flexible responses to the sensing request can be enabled.

With reference to the first aspect, in some possible implementations of the first aspect, the sensing request is from a first communication apparatus, the sensing request further carries a requested service requirement, and the method further includes: sending a service requirement confirmation request to the first communication apparatus, where the service requirement confirmation request is for requesting to use the target service requirement, and the target service requirement is different from the requested service requirement; receiving a service requirement confirmation reply from the first communication apparatus, where the service requirement confirmation reply indicates consent or non-consent to using the target service requirement; and when the service requirement confirmation reply indicates consent to using the target service requirement, initiating a sensing procedure for the terminal based on the target service requirement; or when the service requirement confirmation reply indicates non-consent to using the target service requirement, sending a rejection message to the first communication apparatus, where the rejection message is for rejecting the sensing request.

When the target service requirement is different from the requested service requirement, the second communication apparatus may further request confirmation from the first communication apparatus whether the first communication apparatus consents to use the target service requirement.

In a possible case, the sending the service requirement confirmation request to the first communication apparatus includes: when a level of the target service requirement is lower than that of the requested service requirement, sending the service requirement confirmation request to the first communication apparatus.

In other words, when the service requirement is degraded, the first communication apparatus is further confirmed with whether the first communication apparatus consents to degrade.

In another possible case, the sending the service requirement confirmation request to the first communication apparatus includes: when a level of the target service requirement is higher than that of the requested service requirement, sending the service requirement confirmation request to the first communication apparatus.

In other words, when the service requirement is upgraded, the first communication apparatus is further confirmed with whether the first communication apparatus consents to upgrade.

In conclusion, it can be learned that the target service requirement is determined by considering both the security demand of the terminal and a demand of the first communication apparatus, so that good use experience can be provided.

Optionally, the method further includes: when determining that sensing of the terminal is not allowed, sending a rejection message to a first communication apparatus, where the rejection message is for rejecting the sensing request.

Sensing of the terminal is not allowed, which has been described in detail above based on the sensing permission of the terminal, and is not described again.

The rejection message and the foregoing rejection message that is sent by the second communication apparatus when the first communication apparatus does not consent to use the target service requirement may be messages with a same function, but causes of triggering of the second communication apparatus to send the rejection messages are different. Either of the two rejection messages may be sent.

Further, the rejection message carries a cause for rejecting the sensing request.

For example, the cause for rejecting the sensing request may be that sensing of the terminal is not allowed or the first communication apparatus does not consent to use the target service requirement. Others are not enumerated.

According to a second aspect, a sensing method is provided. The method may be applied to a data management function network element (for example, a UDM). The method may be performed by, for example, the data management function network element, may be a component, for example, a processor, a chip, or a chip system, configured in the data management function network element, or may be a logical module or software that can implement all or some functions of the communication apparatus. This is not limited in this application.

The method includes: receiving a service requirement request from a second communication apparatus, where the service requirement request is for requesting to obtain a target service requirement, and the target service requirement is for determining a KPI for sensing a terminal; determining the target service requirement, where the target service requirement is related to a sensing permission of the terminal, and the sensing permission of the terminal is for determining whether sensing of the terminal is allowed; and sending the target service requirement to the second communication apparatus.

In this solution, the second communication apparatus may be, for example, an SF network element or a sensing server. The second communication apparatus may request the target service requirement from the data management function network element. Subscription data of the terminal is pre-stored in the data management function network element, for example, a sensing permission subscribed to by the terminal, and other information that may be for determining the target service requirement, for example, a mapping relationship. Therefore, the data management function network element may determine the target service requirement corresponding to the terminal, and send the target service requirement to the second communication apparatus.

Optionally, the sensing permission of the terminal includes: the sensing permission subscribed to by the terminal, a sensing notification feedback from the terminal, or a result, determined based on the sensing permission subscribed to by the terminal and the sensing notification feedback from the terminal, of whether sensing of the terminal is allowed.

The sensing permission of the terminal, the sensing permission subscribed to by the terminal, the sensing notification feedback from the terminal, and the result, determined based on the sensing permission subscribed to by the terminal and the sensing notification feedback from the terminal, of whether sensing of the terminal is allowed have been described in detail in the first aspect. Refer to the related descriptions in the first aspect. Details are not described again.

Optionally, that the target service requirement is related to the sensing permission of the terminal includes: The target service requirement is obtained when it is determined that sensing of the terminal is allowed, or the target service requirement is determined based on the sensing permission of the terminal.

Whether sensing of the terminal is allowed is determined based on the sensing permission of the terminal, in other words, is the sensing permission of the terminal. Therefore, in general, the target service requirement is related to the sensing permission of the terminal.

For descriptions of that the target service requirement is related to the sensing permission of the terminal, refer to the related descriptions in the first aspect. Details are not described again.

With reference to the second aspect, in some possible implementations, the service requirement request indicates that sensing of the terminal is allowed, and the determining the target service requirement includes: determining a default service requirement as the target service requirement, where the default service requirement may be a preconfigured service requirement, or may be a requested service requirement. This is not limited in this application.

In other words, the target service requirement may be directly determined when sensing of the terminal is allowed. Determining the target service requirement is simple and convenient.

Optionally, the service requirement request further carries one or more of the following: location information, time information of a sensing request, or time information of the service requirement request, and the sensing request is for requesting to sense the terminal; and the determining the target service requirement includes: determining the target service requirement based on the service requirement request.

In other words, the data management function network element may determine the target service requirement based on an area to which a location of the terminal belongs and a mapping relationship, where the mapping relationship indicates a correspondence between at least one service requirement and at least one area; and/or the data management function network element may determine the target service requirement based on one of the time information of the sensing request or the time information of the service requirement request and a mapping relationship, where the mapping relationship indicates a correspondence between the at least one service requirement and at least one time period.

The location information indicates the location of the terminal. The time information of the sensing request indicates time at which a first communication apparatus initiates the sensing request or time at which the second communication apparatus receives the sensing request. The time information of the service requirement request indicates time at which the second communication apparatus sends the service requirement request or time at which the data management function network element receives the service requirement request.

With reference to the second aspect, in some possible implementations, the service requirement request carries a sensing notification feedback from the terminal, the sensing notification feedback indicates that the terminal consents to be sensed in response to a sensing notification request or that the terminal does not reply to the sensing notification request, and the sensing notification request is for requesting the terminal to reply with consent or non-consent to being sensed; and the determining the target service requirement includes: determining the target service requirement based on the sensing permission of the terminal, the sensing notification feedback, and a mapping relationship, where the mapping relationship includes a correspondence between at least one service requirement and at least one combination of the sensing permission and the sensing notification feedback.

In other words, when it is not determined that sensing of the terminal is allowed, the target service requirement may also be determined. The data management function network element may determine the target service requirement based on the sensing notification feedback and the sensing permission subscribed to by the terminal. The data management function network element may further determine the target service requirement when determining that sensing of the terminal is allowed, or may directly determine the target service requirement based on the sensing permission subscribed to by the terminal and the sensing notification feedback.

Optionally, the service requirement request further carries one or more of the following: location information, time information of a sensing request, or time information of the service requirement request, and the sensing request is for requesting to sense the terminal; and the determining the target service requirement includes: determining the target service requirement based on a location of the terminal and/or the time information of the sensing request.

For related descriptions of the location information and the time information, refer to the foregoing descriptions. Details are not described again.

In conclusion, it is not difficult to learn that the target service requirement may be determined based on one or two of an IE and/or the time information carried in the service requirement request. The information element includes one or more of the following: an indication indicating that sensing of the terminal is allowed, the sensing notification feedback, the location information, the time at which the sensing request is initiated, or the time at which the sensing request is received.

In other words, the target service requirement may be determined based on one or more of the sensing permission of the terminal, the sensing notification feedback, the location of the terminal, or the time information. In other words, the target service requirement may be determined based on the mapping relationship, where the mapping relationship may include a correspondence between the at least one service requirement and one or more of the following: the sensing permission subscribed to by the terminal, the sensing notification feedback, the area, or the time period.

It can be learned from the two possible implementations of determining the target service requirement provided above that determining the target service requirement is not merely related to the sensing permission of the terminal, and the target service requirement may be further determined based on the location of the terminal and/or the time information, so that more abundant service requirements can be provided for the sensing request, to satisfy a security demand of the terminal.

Optionally, the foregoing mapping relationship corresponds to the terminal.

Optionally, the foregoing mapping relationship corresponds to a requested service type.

Optionally, the foregoing mapping relationship corresponds to the terminal and the requested service type.

Related content of that the mapping relationship corresponds to the terminal and/or the requested service type has been described in detail in the first aspect. Refer to the related descriptions in the first aspect. Details are not described again.

With reference to the second aspect, in some possible implementations of the second aspect, before the receiving the service requirement request from the second communication apparatus, the method further includes: receiving a sensing authorization request, where the sensing authorization request is for requesting to authorize the sensing request, and the sensing request is for requesting to sense the terminal; and sending a sensing authorization reply based on the sensing permission subscribed to by the terminal, where the sensing authorization reply indicates authorization for the sensing request or rejection of authorizing the sensing request.

The data management function network element may preliminarily screen sensing requests based on the sensing permission subscribed to by the terminal, so that a sensing request for a terminal of which sensing is not allowed is directly rejected, and does not need to be sent to the second communication apparatus. In this way, signaling overheads caused by subsequently sending the sensing request to the second communication apparatus, a processing amount caused by determining, by the second communication apparatus, whether sensing of the terminal is allowed, and signaling overheads and a processing amount that are caused by obtaining the target service requirement can be reduced.

Optionally, the sensing authorization reply indicates authorization for the sensing request, the sensing authorization reply carries the sensing permission subscribed to by the terminal and/or the mapping relationship for determining the target service requirement, and the target service requirement is for determining the KPI for sensing the terminal.

When determining to authorize the sensing request, the data management function network element may forward the sensing permission subscribed to by the terminal and/or the mapping relationship to the second communication apparatus via a third communication apparatus by using the sensing authorization reply. That is, the sensing authorization reply and the sensing request sent by the third communication apparatus to the second communication apparatus may be reused, so that signaling overheads can be reduced.

Optionally, the sensing authorization reply indicates rejection of authorizing the sensing request, and the sensing authorization reply indicates a cause of the rejection.

When determining to reject authorization for the sensing request, the data management function network element also indicates the cause of the rejection to the third communication apparatus by using the sensing authorization reply, so that the third communication apparatus provides the cause of the rejection for the first communication apparatus. For example, the cause of the rejection is that sensing of the terminal is not allowed. In this way, initiating a sensing request for the terminal by the first communication apparatus again can be avoided, to reduce signaling overheads.

According to a third aspect, a sensing method is provided. The method may be applied to a data management function network element (for example, a UDM). The communication apparatus may be, for example, the data management function network element, may be a component, for example, a processor, a chip, or a chip system, configured in the data management function network element, or may be a logical module or software that can implement all or some functions of the communication apparatus. This is not limited in this application.

The method includes: receiving a sensing authorization request, where the sensing authorization request is for requesting to authorize a sensing request, and the sensing request is for requesting to sense a terminal; and sending a sensing authorization reply based on a sensing permission subscribed to by the terminal, where the sensing authorization reply indicates authorization for the sensing request or rejection of authorizing the sensing request.

In this solution, the data management function network element may preliminarily screen sensing requests based on the sensing permission subscribed to by the terminal, so that a sensing request for a terminal of which sensing is not allowed is directly rejected, and does not need to be sent to a second communication apparatus. In this way, signaling overheads caused by subsequently sending the sensing request to the second communication apparatus, a processing amount caused by determining, by the second communication apparatus, whether sensing of the terminal is allowed, and signaling overheads and a processing amount that are caused by obtaining a target service requirement can be reduced.

With reference to the third aspect, in some possible implementations, the sensing authorization reply indicates authorization for the sensing request, the sensing authorization reply carries the sensing permission subscribed to by the terminal and/or a mapping relationship for determining a target service requirement, and the target service requirement is for determining a KPI for sensing the terminal.

When determining to authorize the sensing request, the data management function network element may forward the sensing permission subscribed to by the terminal and/or the mapping relationship to the second communication apparatus via a third communication apparatus by using the sensing authorization reply. That is, the sensing authorization reply and the sensing request sent by the third communication apparatus to the second communication apparatus may be reused, so that signaling overheads can be reduced.

With reference to the third aspect, in some possible implementations, the sensing authorization reply indicates rejection of authorizing the sensing request, and the sensing authorization reply indicates a cause of the rejection.

When determining to reject authorization for the sensing request, the data management function network element also indicates the cause of the rejection to the third communication apparatus by using the sensing authorization reply, so that the third communication apparatus provides the cause of the rejection for a first communication apparatus. For example, the cause of the rejection is that sensing of the terminal is not allowed. In this way, initiating a sensing request for the terminal by the first communication apparatus again can be avoided, to reduce signaling overheads.

With reference to the second aspect or the third aspect, in some possible implementations, the sensing permission subscribed to by the terminal includes one or more of the following: allowed to be sensed; not allowed to be sensed; allowed to be sensed, with a need to notify the terminal without requiring a reply from the terminal; allowed to be sensed when the terminal replies with consent or does not reply, with a need to notify the terminal; or allowed to be sensed only when the terminal replies with consent, with a need to notify the terminal.

For related descriptions of the sensing permission subscribed to by the terminal, refer to the related descriptions in the first aspect. Details are not described again.

According to a fourth aspect, a sensing method is provided. The method may be applied to a first communication apparatus. The first communication apparatus may be, for example, an AF network element or an AS, or a server integrating functions of the AF and the AS, may be a component, for example, a processor, a chip, or a chip system, configured in the AF network element, the AS, or the server, or may be a logical module or software that can implement all or some functions of the first communication apparatus. This is not limited in this application.

The method includes: receiving a service requirement confirmation request from a second communication apparatus, where the service requirement confirmation request is for requesting to use a target service requirement, and the target service requirement is different from a requested service requirement; and sending a service requirement confirmation reply to the second communication apparatus, where the service requirement confirmation reply indicates consent or non-consent to using the target service requirement.

When the target service requirement is different from the requested service requirement, the second communication apparatus may further request confirmation from the first communication apparatus whether the first communication apparatus consents to use the target service requirement. In a possible implementation, the service requirement confirmation request carries the target service requirement. The first communication apparatus may determine, based on the target service requirement carried in the service requirement confirmation request, whether to consent to use the target service requirement. Therefore, the target service requirement is determined by considering both a security demand of a terminal and a demand of the first communication apparatus, so that good use experience can be provided.

With reference to the fourth aspect, in some possible implementations of the fourth aspect, the method further includes: receiving a rejection message from the second communication apparatus, where the rejection message is for rejecting a sensing request.

It may be understood that the rejection message is sent by the first communication apparatus when the service requirement confirmation reply indicates non-consent to using the target service requirement.

Optionally, the rejection message indicates a cause of the rejection.

For example, the cause of the rejection is that the first communication apparatus does not consent to use the target service requirement.

According to a fifth aspect, a sensing method is provided. The method may be applied to a system including a data management function network element and a second communication apparatus.

The method includes: The second communication apparatus receives a sensing request, where the sensing request is for requesting to sense a terminal. The second communication apparatus obtains a target service requirement from the data management function network element, where the target service requirement is for determining a KPI for sensing the terminal.

With reference to the fifth aspect, in some possible implementations, that the second communication apparatus obtains the target service requirement from the data management function network element includes: When determining that sensing of the terminal is allowed, the second communication apparatus sends a service requirement request to the data management function network element, where the service requirement request indicates that sensing of the terminal is allowed. The data management function network element determines the target service requirement. The data management function network element sends the target service requirement to the second communication apparatus.

Optionally, the target service requirement carries one or more of the following: location information, time information of the sensing request, or time information of the service requirement, and the sensing request is for requesting to sense the terminal; and that the data management function network element determines the target service requirement includes: The data management function network element determines the target service requirement based on the target service requirement.

During specific implementation, the data management function network element may determine the target service requirement based on an area to which a location of the terminal belongs and a mapping relationship, where the mapping relationship includes a correspondence between at least one service requirement and at least one area. Alternatively, the data management function network element may determine the target service requirement based on the time information of the sensing request and/or time information of the service requirement request, and a mapping relationship, where the mapping relationship includes a correspondence between at least one service requirement and at least one time period. Alternatively, the data management function network element may determine the target service requirement based on an area to which a location of the terminal belongs, one or two of the time information of the sensing request or time information of the service requirement request, and a mapping relationship, where the mapping relationship includes a correspondence between at least one service requirement and at least one combination of an area and a time period.

With reference to the fifth aspect, in some possible implementations, the method further includes: The second communication apparatus determines that sensing of the terminal is allowed.

Optionally, that the second communication apparatus determines that sensing of the terminal is allowed includes: The second communication apparatus determines, based on a sensing permission subscribed to by the terminal and/or a sensing notification feedback, that sensing of the terminal is allowed, where the sensing notification feedback indicates that the terminal consents to be sensed or that the terminal does not reply.

Optionally, the method further includes: The second communication apparatus obtains, from the data management function network element, the sensing permission subscribed to by the terminal.

With reference to the fifth aspect, in some possible implementations, that the second communication apparatus obtains the target service requirement from the data management function network element includes: The second communication apparatus sends a sensing notification request to the terminal, where the sensing notification request is for requesting the terminal to reply with consent or non-consent to being sensed. The second communication apparatus obtains the sensing notification feedback based on a response message to the sensing notification request, where the sensing notification feedback indicates that the terminal consents to be sensed or that the terminal does not reply. The second communication apparatus sends the service requirement request to the data management function network element, where the service requirement request carries the sensing notification feedback. The data management function network element determines the target service requirement. The data management function network element sends the target service requirement to the second communication apparatus.

Optionally, that the data management function network element determines the target service requirement includes: The data management function network element determines the target service requirement based on a mapping relationship, where the mapping relationship includes a correspondence between at least one service requirement and one or more of the following: the sensing permission subscribed to by the terminal, the sensing notification feedback, the location of the terminal, the time information of the sensing request, or the time information of the service requirement request.

According to a sixth aspect, a communication apparatus is provided, and can implement the sensing method according to any one of the first aspect to the fourth aspect and the possible implementations of the first aspect to the fourth aspect. The apparatus includes one or more corresponding functional units or modules configured to perform the foregoing method. The functional unit or module included in the apparatus may be implemented by software and/or hardware.

According to a seventh aspect, a communication apparatus is provided, and includes a processor. The processor is configured to perform the sensing method according to any one of the first aspect to the fourth aspect and the possible implementations of the first aspect to the fourth aspect.

Optionally, the apparatus may further include a memory, configured to store instructions and data. The memory is coupled to the processor. When executing the instructions stored in the memory, the processor may implement the methods described in the foregoing aspects.

Optionally, the apparatus may further include a communication interface. The communication interface is used by the apparatus to communicate with another device. For example, the communication interface may be a transceiver, a circuit, a bus, a module, or another type of communication interface.

According to an eighth aspect, a chip system is provided. The chip system includes at least one processor, configured to support implementation of a function in any one of the first aspect to the fourth aspect and the possible implementations of the first aspect to the fourth aspect, for example, receiving or processing of data and/or information in the foregoing method.

In a possible design, the chip system further includes a memory. The memory is configured to store program instructions and data. The memory is located inside or outside the processor.

In a possible design, the chip system further includes an interface circuit and/or a power supply circuit. The interface circuit is for data transmission. The power supply circuit is configured to supply power to the chip system.

The chip system may include a chip, or may include the chip and another discrete device.

According to a ninth aspect, a communication system is provided. The communication system includes one or more of the foregoing first communication apparatus, second communication apparatus, or data management function network element. The second communication apparatus may be configured to implement a function in any one of the first aspect and the possible implementations of the first aspect. The data management function network element may be configured to implement a function in any one of the second aspect or the third aspect and the possible implementations of the second aspect or the third aspect. The first communication apparatus may be configured to implement a function in any one of the fourth aspect and the possible implementations of the fourth aspect.

Optionally, the communication system may be configured to implement the method according to any one of the fifth aspect and the possible implementations of the fifth aspect.

According to a tenth aspect, a computer-readable storage medium is provided, and includes a computer program. When the computer program is run on a computer, the computer is caused to implement the method according to any one of the first aspect to the fifth aspect and the possible implementations of the first aspect to the fifth aspect.

According to an eleventh aspect, a computer program product is provided. The computer program product includes a computer program (which may also be referred to as code or instructions). When the computer program is run, a computer is caused to perform the method according to any one of the first aspect to the fifth aspect and the possible implementations of the first aspect to the fifth aspect.

It should be understood that the technical solutions of the fifth aspect to the eleventh aspect of this application correspond to the technical solutions of the first aspect to the fourth aspect of this application, and beneficial effects achieved in the aspects and corresponding feasible implementations are similar. Details are not described again.

### BRIEF DESCRIPTION OF DRAWINGS

FIG. 1a and FIG. 1b are diagrams of two possible architectures in a 5th generation (5th generation, 5G) network;
FIG. 2 is a diagram of a service-based architecture (service-based architecture, SBA) network architecture according to an embodiment of this application;
FIG. 3a and FIG. 3b are a diagram of performing a sensing operation by a base station;
FIG. 4 is a diagram of parameters of sensing accuracy and a sensing resolution;
FIG. 5a and FIG. 5b are a schematic flowchart of a sensing method according to an embodiment of this application;
FIG. 6a and FIG. 6b are another schematic flowchart of a sensing method according to an embodiment of this application;
FIG. 7 is still another schematic flowchart of a sensing method according to an embodiment of this application;
FIG. 8 is yet another schematic flowchart of a sensing method according to an embodiment of this application;
FIG. 9 is yet another schematic flowchart of a sensing method according to an embodiment of this application;
FIG. 10 is a schematic block diagram of a communication apparatus according to an embodiment of this application; and
FIG. 11 is another schematic block diagram of a communication apparatus according to an embodiment of this application.

### DESCRIPTION OF EMBODIMENTS

With reference to the accompanying drawings, the following describes technical solutions provided in this application.

Methods provided in this application may be applied to various communication systems, for example, a long term evolution (long term evolution, LTE) system, an LTE frequency division duplex (frequency division duplex, FDD) system, an LTE time division duplex (time division duplex, TDD) system, a 5G generation mobile communication system, or a new radio access technology (new radio access technology, NR). The 5G mobile communication system may include non-standalone (non-standalone, NSA) and/or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine to machine (machine to machine, M2M) network, an internet of things (internet of things, IoT) network, or another network. The IoT network may include, for example, an internet of vehicles. Communication modes in an internet of vehicles system are collectively referred to as a vehicle to X (vehicle to X, V2X, where X may represent everything) system. For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application.

For ease of understanding, a network architecture applicable to the methods provided in embodiments of this application is first described in more detail with reference to the accompanying drawings.

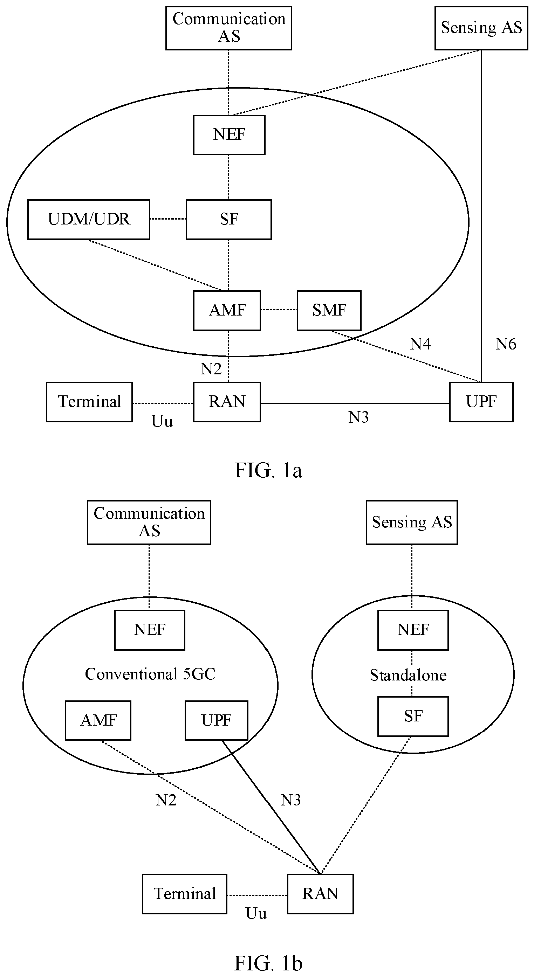

FIG. 1a and FIG. 1b respectively show two possible architectures in a 5G network: an integrated architecture (refer to FIG. 1a) and a standalone architecture (refer to FIG. 1b). A difference between the integrated architecture and the standalone architecture lies in a deployment location of an SF dedicated for a sensing service.

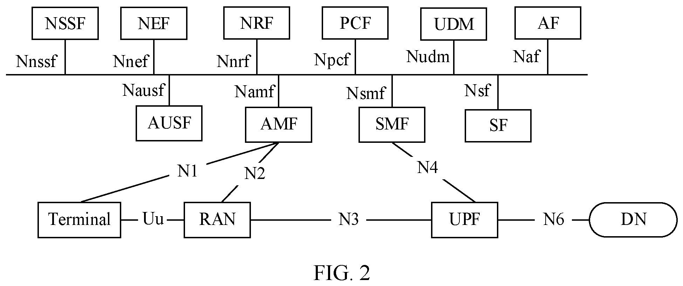

As shown in FIG. 1a, in the integrated architecture, the SF may be deployed in a conventional 5G core network (5G core network, 5GC), and is connected to another network element by using a service-based architecture, SBA interface. For more detailed description of an SBA, refer to FIG. 2. Details are not described herein. The SF is connected to a NEF, and may interact with a server outside the 5GC via the NEF, for example, receive a sensing request message from the external server. The SF may be further connected to a UPF, and a RAN device like a base station may send, by using a user plane, received sensing data to the SF for processing.

As shown in FIG. 1b, in the standalone architecture, the SF may be deployed outside a conventional 5GC, and the SF cannot be connected to another network element by using an SBA interface, and may need to interact with the another 5GC network element via a NEF (for example, a NEF 1 in the figure). The SF may also be connected to a NEF (for example, a NEF 2 in the figure), and interact with an external server via the NEF; or the SF may directly interact with an external server without a NEF. In addition, the SF may be connected to a RAN device, to interact with a terminal device.

It should be understood that the two possible architectures respectively shown in FIG. 1a and FIG. 1b are merely examples of a 5GC architecture, and should not constitute any limitation on this application. The methods provided in this application are not limited to being used in the two architectures shown in FIG. 1a and FIG. 1b.

FIG. 2 is a diagram of an SBA network architecture in a 5G network according to an embodiment of this application. As shown in FIG. 2, the 5G network architecture may include three parts: a terminal, a data network (data network, DN), and an operator network.

The following briefly describes network elements involved in FIG. 1a, FIG. 1b, and FIG. 2.

The terminal may also be referred to as user equipment (user equipment, UE), an access terminal, a subscriber unit, a subscriber station, a mobile station, a remote station, a remote terminal, a mobile device, a user terminal, a terminal device, a wireless communication device, a user agent, or a user apparatus.

The terminal is a device that has a wireless transceiver function. The terminal may communicate with one or more core network (core network, CN) devices (also referred to as core devices) via an access network device (also referred to as an access device) in a radio access network. The terminal device may be deployed on land, and includes an indoor, outdoor, handheld, or vehicle-mounted device; may be deployed on water (for example, on a ship); or may be deployed in the air (for example, on an aircraft, a balloon, and a satellite).

The terminal may also be a terminal in an internet of things (internet of things, IoT) system, and may also be referred to as an IoT node. An IoT is an important component in future information technology development. A main technical feature of the IoT is to connect things to a network by using a communication technology, to implement an intelligent network for human-machine interconnection and thing-thing interconnection. The connection may be implemented by using a broadband technology or a narrowband (narrowband, NB) technology. An IoT technology can implement massive connections, deep coverage, and terminal power saving by using, for example, the narrowband technology.

In embodiments of this application, an apparatus configured to implement a function of the terminal may be the terminal, or may be an apparatus that can support the terminal in implementing the function, for example, a chip system. The apparatus may be installed in the terminal or used together with the terminal. In embodiments of this application, the chip system may include a chip, or may include the chip and another discrete device. In embodiments of this application, an example in which the apparatus configured to implement the function of the terminal device is the terminal device is merely used for description, and does not constitute a limitation on the solutions in embodiments of this application.

The terminal in this application may be a hardware device, may be a software function running on dedicated hardware or a software function running on general-purpose hardware, or may be a virtualized device, for example, implemented by using general-purpose hardware and an instantiated virtualization function, or dedicated hardware and an instantiated virtualization function. The general-purpose hardware may be a server, for example, a cloud server.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a network repository function (network repository function, NRF) network element, an application function (application function, AF) network element, an access and mobility management function (access and mobility management function, AMF) network element, a session management function (session management function, SMF) network element, and a user plane function (user plane function, UPF) network element, a network slice selection function (network slice selection function, NSSF) network element, an access network (access network, AN) (for example, a radio access network (radio access network, RAN) network element), and the like. In the foregoing operator network, a part other than the RAN network element may be referred to as a core network part. For ease of description, the term "network element" is omitted below. For example, the AF network element is referred to as an AF for short, the UDM network element is referred to as a UDM for short, and an SF network element is referred to as the SF for short.

The RAN is a network including multiple RAN nodes, and implements a radio physical layer function, resource scheduling, radio resource management, radio access control, and a mobility management function. A 5G-RAN may be connected to the user plane function (user plane function, UPF) through a user plane interface N3, to transfer data of the terminal device. The 5G-RAN establishes a control plane signaling connection to the access and mobility management function (access and mobility management function, AMF) through a control plane interface N2, to implement a function like radio access bearer control.

The RAN node may provide a wireless communication function service, and enable the terminal to access a wireless network. The RAN node may also be referred to as the RAN device, the access network device, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server.

In another possible scenario, multiple RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

In embodiments of this application, an apparatus configured to implement a function of the RAN node may be the RAN node, or may be an apparatus that can support the RAN node in implementing the function, for example, a chip system, a hardware circuit, a software module, or a combination of the hardware circuit and the software module. The apparatus can be installed in the RAN node or be used in conjunction with the RAN node. In embodiments of this application, an example in which the apparatus configured to implement the function of the RAN node is the RAN node is merely used for description, and does not constitute a limitation on the solutions in embodiments of this application.

The RAN node in this application may be a hardware device, may be a software function running on dedicated hardware or a software function running on general-purpose hardware, or may be a virtualized device, for example, implemented by using general-purpose hardware and an instantiated virtualization function, or dedicated hardware and an instantiated virtualization function. The general-purpose hardware may be a server, for example, a cloud server.

The SF is mainly responsible for related processing of the sensing service, for example, determining a sensing result based on the obtained sensing data, for example, whether a person intrudes, or calculating a range to a reflective object in a sensing area, and a direction and a location of the reflective object.

The AMF is mainly responsible for functions such as terminal authentication, terminal mobility management (mobility management, MM), network slice selection, and SMF selection, serves as an anchor for N1 and N2 signaling connection, provides routing of an N1/N2 session management (session management, SM) message for the SMF, and maintains and manages status information of the terminal.

The SMF is mainly responsible for all control plane functions of terminal session management, including UPF selection, internet protocol (internet protocol, IP) address allocation, session quality of service (quality of service, QoS) management, PCC (policy and charging control) policy obtaining (from the PCF), and the like.

The UPF serves as an anchor point of a protocol data unit (protocol data unit, PDU) session connection, and is responsible for data packet filtering, data transmission/forwarding, rate control, charging information generation, and the like for the terminal.

A UDR is mainly configured to store user data, including subscription data invoked by the UDM, policy information invoked by the PCF, structured data for capability exposure, application data invoked by the NEF, and the like.

The UDM is mainly configured to manage and control the user data, for example, manage subscription information, including obtaining the subscription information from the UDR and providing the subscription information for another network element (for example, the AMF); generating a 3GPP authentication credential for the terminal; and registering and maintaining a network element currently serving the terminal (for example, an AMF represented by an AMF ID 1 is a current serving AMF of the terminal, namely, a serving AMF).

The NEF is configured to connect interaction between another internal network element of a core network and the application function (application function, AF) network element corresponding to an external application server (application server, AS) of the core network, to provide a network exposure capability for the AF, or provide information provided by the AF for a core network element.

An AUSF authentication server function is configured to perform security authentication on the terminal when the terminal accesses the network.

The PCF mainly performs policy control and the like on a quality of service (quality of service, QoS) policy and a charging (charging) policy, provides configuration policy information for the terminal, and provides a control plane network element (for example, the AMF or the SMF) of the network with policy information for managing and controlling the terminal.

The AF mainly transfers a demand of an application side for a network side, and may be considered as an application server or a proxy of the application server. The AF may interact with the core network element to provide some services, for example, interact with the PCF to perform service policy control, interact with the NEF to obtain some network capability information or provide some application information for the network, and provide some data network access point information for the PCF to generate corresponding data service routing information.

The DN mainly provides a service for a user.

The network elements communicate with each other through interfaces. For example, an interface between the terminal and the AMF is an N1 interface, an interface between the AN and the AMF is an N2 interface, an interface between the AN and the UPF is an N3 interface, an interface between the SMF and the UPF is an N4 interface, and an interface between the UPF and the DN is an N6 interface. Some network elements may communicate with each other based on a service-based interface. Nnssf, Nnef, Nnrf, Npcf, Nudm, Naf, Nusf, Namf, Npcf, and Nsf in FIG. 1a and FIG. 1b are service-based interfaces. The interface Nsf is merely a possible name, and a name of a service-based interface corresponding to the SF is not limited in this application.

The foregoing network elements in the core network device and the interfaces between the network elements are merely examples for description, and should not constitute any limitation on this application. In addition, the network elements shown in the figure may be understood as network elements configured to implement different functions in the core network, for example, may be combined into a network slice as required. These core network elements may be independent devices, or may be integrated into a same device to implement different functions. Specific forms of the foregoing network elements are not limited in this application.

It may be understood that network elements used in a future communication system may be the foregoing network elements, or may be a network element having another name and having a same or similar function. This is not limited in this application.

In embodiments of this application, apparatuses configured to implement functions of the core network may be core network elements corresponding to the functions, or may be apparatuses that can support the core network elements in implementing the functions thereof, for example, chip systems, hardware circuits, software modules, or combinations of the hardware circuits and the software modules. The apparatus may be installed in the core network element or be used in conjunction with the core network element. In embodiments of this application, an example in which the apparatus configured to implement the function of the core network is the core network element is merely used for description, and does not constitute a limitation on the solutions in embodiments of this application.

The core network element in this application may be a hardware device, may be a software function running on dedicated hardware or a software function running on general-purpose hardware, or may be a virtualized device, for example, implemented by using general-purpose hardware and an instantiated virtualization function, or dedicated hardware and an instantiated virtualization function. The general-purpose hardware may be a server, for example, a cloud server.

Currently, some base stations or terminals in the RAN can be used as sensing nodes due to their capabilities to use electromagnetic waves for sensing. The principle of sensing is similar to that of radar. That is, a transmitter (namely, a sensing node) emits electromagnetic waves, which are reflected by an object to be sensed and then captured by a receiver. The receiver (namely, a sensing node) can further process the reflected signal (which may be referred to as sensing raw data) to generate sensing data, which may then be used to obtain sensing results.

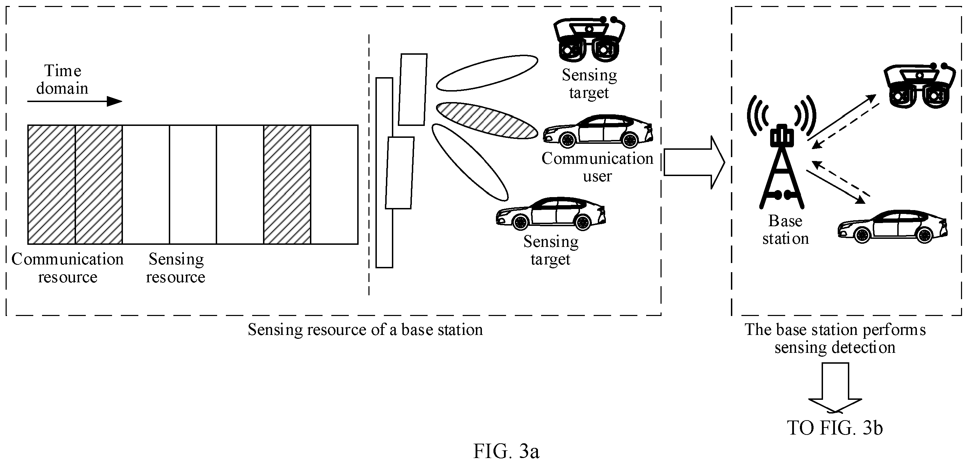

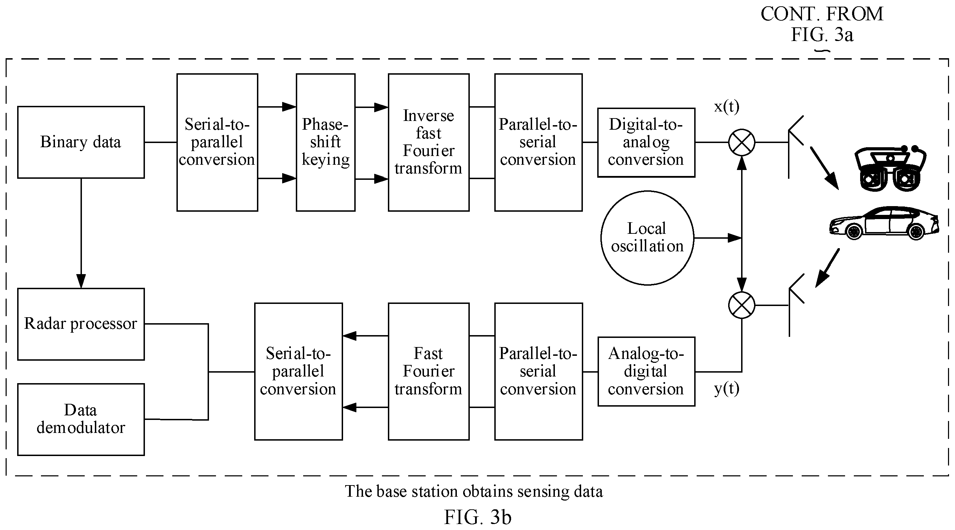

For example, when a base station is used as a sensing node, the base station has functions shown in Table A, FIG. 3a, and FIG. 3b. Table A shows an example of sensing capabilities of velocity measurement radar, surveillance radar, and imaging radar.

**Table A**

| Sensing capability | Specification parameter | Range resolution | Angle resolution | Sensing usage |
|---|---|---|---|---|
| Velocity measurement radar | 1 transmit (transmit, T) 1 receive (receive, R) (1T1R), with a 20 megahertz (megahertz, MHz) bandwidth | 7.5 meters | Not applicable (not applicable, N/A) | Velocity measurement and photographing triggering |
| Surveillance radar | 2T8R, with a 200 MHz bandwidth | 0.75 meter | 6 degrees | Target check; lane-based counting; and coarse-grained classification of moving targets (accuracy: 70%) |
| Imaging radar | 12T16R, with a 1 gigahertz (gigahertz, GHz) bandwidth | 0.15 meter | 2 degrees | Refined classification of moving targets (accuracy: 90%) and three-dimensional point cloud imaging |

FIG. 3a and FIG. 3b are a diagram of performing a sensing operation by a base station. FIG. 3a and FIG. 3b are an example of integrated sensing and communication (integrated sensing and communication, ISAC). The base station shown in FIG. 3a and FIG. 3b may reuse an electromagnetic wave signal of a communication system to perform sensing. As shown in the figure, a resource used by the base station for communication and a resource used by the base station for sensing may be time-division multiplexed (as shown in FIG. 3a), or may be spatial-division multiplexed. The base station may perform sensing detection by using the electromagnetic wave signal; and may also receive a signal that is transmitted back after reaching an obstacle (namely, a detected target object) (which may be referred to as a reflected signal or an echo signal for short), and obtain sensing data based on the echo signal. As shown in FIG. 3b, the base station may perform serial-to-parallel conversion, phase-shift keying, inverse fast Fourier transform (inverse fast Fourier transform, IFFT), parallel-to-serial conversion, digital-to-analog conversion, and the like on a to-be-sent signal, and the base station may also perform analog-to-digital conversion, parallel-to-serial conversion, fast Fourier transform (fast Fourier transform), serial-to-parallel conversion, demodulation, and the like on the received echo signal. The to-be-sent signal may be further sent to a radar processor, so that the radar processor obtains the sensing data based on the to-be-sent signal and the received echo signal (it may be understood that the echo signal herein is an echo signal obtained through the foregoing processing). It should be understood that processing performed by the base station on the to-be-sent signal and the received echo signal shown in FIG. 3b is merely an example, and should not constitute any limitation on this application.

A sensing node in a communication system may perform sensing and recognition on a specified area, a specified object, or an event, to satisfy sensing demands in multiple aspects such as autonomous driving, security supervision, family healthcare, and meteorological monitoring. Specific examples are as follows.

### 1. Autonomous driving

In a V2X scenario and an uncrewed aerial vehicle (uncrewed aerial vehicle, VAU) scenario, for example, because a sensing range of a vehicle or an uncrewed aerial vehicle is short or a non-line-of-sight (non-line-of-sight, NLOS) path cannot be sensed, a dynamic map may be generated based on sensing data. For another example, in a traveling process of a vehicle or an uncrewed aerial vehicle, there may be a traffic hazard event like a sudden appearance of a pedestrian, a non-motor vehicle, or the like, or a pedestrian, a non-motor vehicle, or the like in a blind spot, the hazard event may be recognized based on sensing data, and the vehicle or the uncrewed aerial vehicle may be notified to perform an emergency operation. For still another example, for autonomous driving assistance of a vehicle or an uncrewed aerial vehicle, a customized high-definition dynamic map is generated based on sensing data to assist the vehicle or the uncrewed aerial vehicle in autonomous driving.

### 2. Security supervision

In the V2X scenario and the uncrewed aerial vehicle scenario, driving violation of the vehicle or the uncrewed aerial vehicle, for example, the vehicle occupying an emergency lane or the uncrewed aerial vehicle leaving an airway for driving, may be recognized based on sensing data, and a real-time alarm may be issued.

In a perimeter security protection scenario, a case like an intrusion of a foreign object into a railway track or an intrusion of the uncrewed aerial vehicle into a no-fly zone (for example, an airport) may be detected based on sensing data, a violation object may be tracked, and real-time emergency processing may be performed.

### 3. Family healthcare

For example, an abnormal posture may be recognized based on sensing data, so that a case like a fall can be recognized, and an alarm can be issued in time. For another example, a physiological parameter like a human breath or a heartbeat can be obtained based on sensing data, so that an anomaly can be recognized, and an alarm can be issued in time.

### 4. Meteorological monitoring

An environment, a climate, a weather change, and the like may be sensed and predicted.

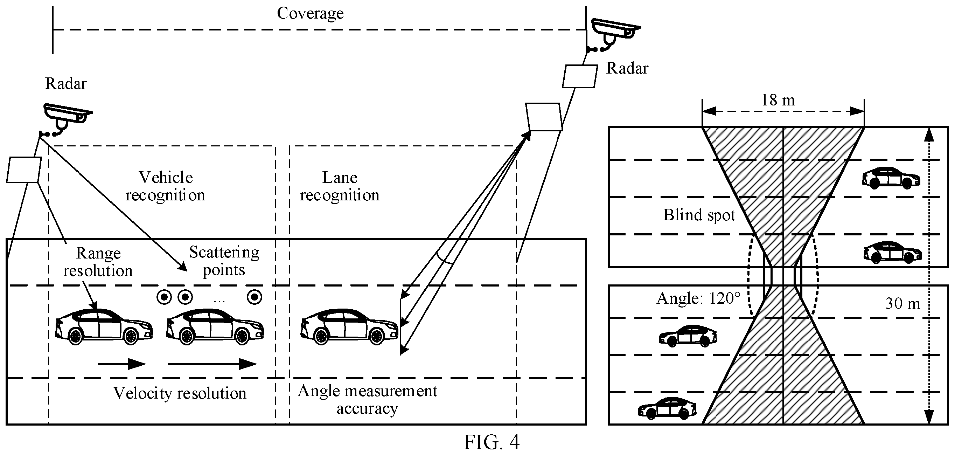

FIG. 4 is a diagram of parameters that affect sensing accuracy and a sensing resolution. FIG. 4 shows, by using an internet of vehicles scenario as an example, several parameters that affect positioning sensing accuracy (including vertical and horizontal), velocity sensing accuracy (including vertical and horizontal), and the sensing resolution (including an area and a velocity) in sensing KPIs.
1. Range resolution α: a capability to distinguish between adjacent targets in terms of range, which is usually measured by a minimum resolvable range interval, and is for recognizing different vehicles.
2. Velocity resolution β: a capability to distinguish between targets in terms of radial velocity.
3. Angle measurement accuracy θ: a capability of radar to distinguish between adjacent targets in terms of angle, which is usually measured by a minimum resolvable angle.
4. Horizontal field of view (field of view, FOV): An FOV shown in FIG. 4 is 120°. With the FOV of 120°, when a bidirectional road is 30 meters wide, a bidirectional blind spot scope is less than 18 m, and a blind spot area proportion is less than 1%.

For ease of understanding of embodiments of this application, the following several descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-sintered, or preconfigured. Alternatively, information A may be indicated by using information B and a preset rule.

Second, in this application, that information C is for determining information D includes that the information D is determined based only on the information C, and also includes that the information D is determined based on the information C and other information. In addition, that the information C is for determining the information D may further include an indirect determining case, for example, a case in which the information D is determined based on information E, and the information E is determined based on the information C.

Third, in this application, "at least one" indicates one or more, "multiple" indicates two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following" or a similar expression thereof indicates any combination of the items, and includes a singular item or any combination of plural items. For example, at least one of a, b, or c may indicate a, b, c, a and b, a and c, b and c, or a, b, and c. a, b, and c each may be singular or plural.

Fourth, in this application, prefix words such as "first" and "second" are merely for ease of distinguishing and describing different things belonging to a same name category, and are not intended to limit a sequence, sizes, or a quantity of things. For example, a "first communication apparatus" and a "second communication apparatus" are merely different communication apparatuses, and there is no size relationship or priority relationship between both.

Fifth, "sending" and "receiving" in this application indicate signal transmission directions. For example, "sending information to a terminal" may be understood as that a destination of the information is the terminal, and may include direct sending through an air interface, or may include indirect sending by another unit or module through an air interface. "Receiving information from the terminal" may be understood as that a source of the information is the terminal, and may include direct receiving from the terminal through an air interface, or may include indirect receiving from the terminal through an air interface from another unit or module. "Sending" may alternatively be understood as "outputting" of a chip interface, and "receiving" may alternatively be understood as "inputting" of the chip interface.

Sixth, in embodiments of this application, "when" and "if" both mean that the apparatus performs corresponding processing in an objective case, are not intended to limit time, do not require the apparatus to necessarily have a determining action during implementation, and do not mean other limitation.

Seventh, in this application, a term like "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Exactly, use of the term "example", "for example", "such as", or "like" is intended to present a relative concept in a specific manner.

Eighth, in this application, multiple message names are introduced, for example, a sensing request, a sensing authorization request, a sensing authorization reply, a service requirement request, a service requirement reply, and a sensing notification request. These messages are merely for ease of distinguishing between examples, and should not constitute any limitation on this application. Names of signaling are not limited in this application.

Ninth, correspondences shown in tables in this application are merely examples, and should not constitute any limitation on this application. Content in the tables is merely examples, and may be configured as other content. This is not limited in this application. During configuration of these correspondences, it is not necessarily required that all correspondences shown in the tables need to be configured. For example, correspondences shown in some rows may alternatively not be configured. For another example, some columns may alternatively be replaced with other forms. For still another example, appropriate deformation and adjustment may be performed based on the tables shown in this specification, for example, splitting or merging.

In addition, the table is merely a possible form of a correspondence. During specific implementation, another data structure like an array, a queue, a container, a stack, a linear table, a pointer, a linked list, a tree, a graph, a structure, a class, a pile, or a hash table, may alternatively be used.

In current sensing procedures, an AF or an AS for sensing applications may send a sensing request message to a NEF, to request sensing for a specific terminal. Alternatively, an AF or an AS for a sensing application or a terminal that carries the sensing applications may directly send a sensing request message to a network element responsible for sensing functions in a communication network. In response to the sensing request message, the network element (for example, an SF or a sensing server) responsible for sensing functions may initiate a sensing procedure for the specified terminal.

In a sensing request message for a specific service type or the specified terminal, the AF, the AS, or the terminal usually indicates a service requirement, where the service requirement may be for describing a demand of a sender of the sensing request message for a sensing result, for example, accuracy, a resolution, a delay, or a refresh rate. Different terminals may have different security demands. Some terminals may not expect to expose information (for example, locations or movement velocities) about the terminals to the outside, some terminals may not expect to expose information about the terminals to the outside with high accuracy, and so on. However, the AF, the AS, or the terminal that initiates sensing requests does not necessarily know in advance security demands of terminals that are requested to be sensed. In consideration of a cause like simple processing, the SF or the sensing server may directly initiate sensing on the terminals based on service requirements in the sensing request messages, and cannot adaptively adjust the service requirements in a flexible manner based on different security demands of the terminals. Consequently, the different security demands of the different terminals cannot be satisfied. It is not difficult to learn that, currently, no security-related procedure is available for sensing for the specified terminal.

This application provides a sensing method. When receiving the sensing request message for the terminal, the network element (for example, the SF or the sensing server) responsible for sensing functions in the network may obtain the service requirement (namely, a target service requirement below) for sensing the terminal, where the service requirement is related to a sensing permission of the terminal, so that the sensing procedure initiated for the terminal is adaptive to the sensing permission of the terminal, instead of blindly and directly determining, based on the service requirement requested by the AF network element, the AS, or the like, a KPI for sensing the terminal. In other words, in this application, the target service requirement may be obtained at the granularity of a terminal. Specifically, target service requirements of the different terminals may be determined based on respective corresponding sensing permissions. Therefore, in consideration of the security demands of the different terminals, different target service requirements are obtained in a flexible manner based on the sensing permissions of the different terminals, to initiate sensing procedures for the different terminals based on different KPIs, instead of blindly sensing, by using a same KPI based on service requirements requested by the AF network element or the AS, all terminals that are requested to be sensed.

With reference to the accompanying drawings, the following describes in detail the methods provided in this application.

It should be noted that, in the following embodiments shown with reference to multiple accompanying drawings, the methods provided in this application are described by using a UDM as an example of a data management function network element, by using an AF and an AS as two examples of a first communication apparatus, and by using an SF and a sensing server as two examples of a second communication apparatus. These devices are merely examples, and should not constitute any limitation on this application. The AF, the AS, the UDM, the SF, the sensing server, and the like may alternatively be replaced with other network elements that can implement same or similar functions. This is not limited in this application.

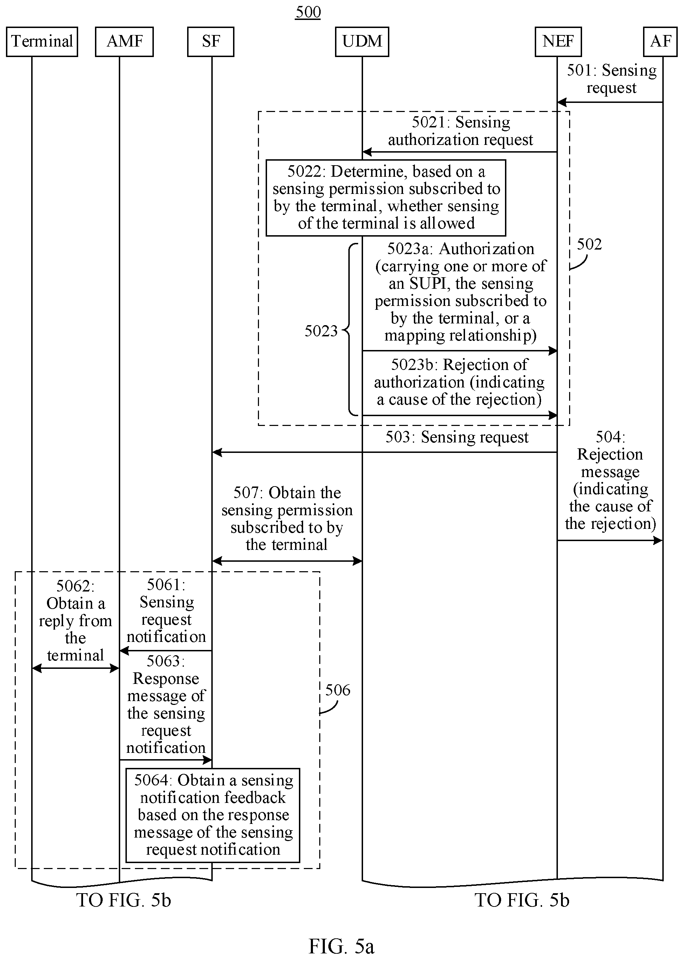

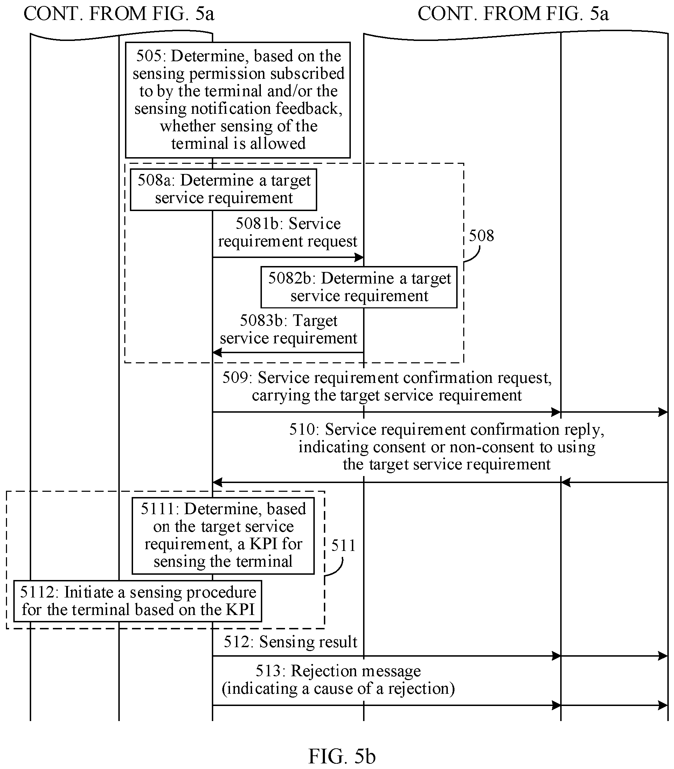

FIG. 5a and FIG. 5b are a schematic flowchart of a sensing method according to this application. FIG. 5a and FIG. 5b show the method from a perspective of device interaction. As shown in FIG. 5a and FIG. 5b, the method 500 includes step 501 to step 513. An SF in FIG. 5a and FIG. 5b may alternatively be replaced with a component, for example, a chip, a chip system, or a processor, in the SF, or may be replaced with a logical module or software that can implement some or all functions of the SF. A UDM in FIG. 5a and FIG. 5b may alternatively be replaced with a component, for example, a chip, a chip system, or a processor, in the UDM, or may be replaced with a logical module or software that can implement some or all functions of the UDM. An AF in FIG. 5a and FIG. 5b may alternatively be replaced with a component, for example, a chip, a chip system, or a processor, in the AF, or may be replaced with a logical module or software that can implement some or all functions of the AF.

The following describes the steps in the method 500 in detail.

In step 501, the AF sends a sensing request to a NEF, where the sensing request is for requesting to sense a terminal.

For example, the sensing request may carry an external identifier of the terminal that is requested to be sensed and one or more of the following: an identifier of the AF, a requested service type, a requested service requirement, or time information of the sensing request.

The external identifier of the terminal may identify the terminal. Because the AF does not know an identifier of the terminal in a communication system, the external identifier is used as a name herein, to distinguish the external identifier from the identifier of the terminal in the communication system.

The identifier of the AF identifies the AF. It may be understood that, when the AF is an AS, the identifier of the AF may alternatively be replaced with an identifier of the AS.

The requested service type may be one or more of at least one predefined service type. The at least one service type may include, for example, but is not limited to, uncrewed aerial vehicle intrusion detection, autonomous driving, security supervision, family healthcare, or meteorological monitoring. This application includes the foregoing, but is not limited thereto.

The requested service requirement may be for describing a demand for a requested sensing result. For example, the requested service requirement includes one or more of the following: positioning sensing accuracy, velocity sensing accuracy, a sensing resolution, or duration needed for sensing. The service requirement may be for determining a KPI corresponding to the sensing result requested by using the sensing request.

For example, in the 3rd generation partnership project (3rd generation partnership project, 3GPP) technical specification (technical specification, TS) 22.173, the following indicators are defined for the sensing KPI: a confidence interval, positioning sensing accuracy (including vertical and horizontal), the velocity sensing accuracy (including vertical and horizontal), the sensing resolution (including an area and a velocity), a maximum sensing service delay, and a refresh rate. These parameters may be for describing accuracy with which sensing data needs to be obtained.

Certainly, these indicators are merely an example of the sensing KPI. Indicators specifically included in the sensing KPI are not limited in this application.

The time information of the sensing request may be for the time at which sensing is requested. The time information of the sensing request may specifically be time at which the terminal is requested to be sensed or time at which a sensing procedure for the terminal is requested to be initiated.

It can be learned from the foregoing architectures shown in FIG. 1a and FIG. 1b that the SF may be deployed in an integrated architecture, or may be deployed in a standalone architecture. The AF may send the sensing request to the SF via the NEF. Therefore, accordingly, in step 501, the NEF receives the sensing request from the AF.

In step 502, the NEF obtains authorization for the sensing request from the UDM.

For example, step 502 may include the following step 5021 to step 5023:
Step 5021: The NEF sends a sensing authorization request to the UDM, where the sensing authorization request is for requesting the UDM to authorize the sensing request, or is for requesting the UDM to perform an authorization check on the sensing request.
Step 5022: The UDM determines, based on a sensing permission subscribed to by the terminal, whether sensing of the terminal is allowed.
Step 5023: The UDM sends a sensing authorization reply to the NEF, where the sensing authorization reply indicates authorization or rejection of authorizing the sensing request.

The sensing authorization request may carry, for example, the information in the sensing request, for example, the external identifier of the terminal and one or more of the following: the identifier of the AF, the requested service type, the requested service requirement, or the time information of the sensing request. In a possible design, the sensing authorization request may be the sensing request. In another possible design, the sensing authorization request is obtained by processing the sensing request. This is not limited in this application.

The UDM may determine, based on the sensing permission subscribed to by the terminal, whether sensing of the terminal is allowed (that is, whether sensing of the terminal is allowed), and indicate the authorization or rejection of authorizing the sensing request by using the sensing authorization reply. When determining that sensing of the terminal is allowed, the UDM may indicate authorization for the sensing request by using the sensing authorization reply, as shown in 5023a in the figure. When determining that sensing of the terminal is not allowed, the UDM may indicate rejection of authorizing the sensing request by using the sensing authorization reply, as shown in 5023b in the figure. It may be understood that 5023a and 5023b may be considered as two possible cases of step 5023, and either thereof may be selected for execution.

It may be understood that, when the sensing authorization reply indicates authorization for the sensing request, the sensing authorization reply may also be referred to as an authorization message. When the sensing authorization reply indicates rejection of authorizing the sensing request, the sensing authorization reply may also be referred to as an authorization rejection message.

The sensing permission subscribed to by the terminal is a sensing permission subscribed to by the terminal with a network operator, and may also be referred to as a configured sensing permission, a default sensing permission, or a sensing permission stored on a network side. For example, the terminal may determine, by subscribing with the operator, whether sensing of the terminal is allowed. The sensing permission subscribed to by the terminal may be preconfigured in the UDM, for example, may be manually stored in the UDM, or may be sent by the AF to the UDM in advance. This is not limited in this application.

For example, the sensing permission subscribed to by the terminal may include one of the following multiple types of permissions: allowed to be sensed; not allowed to be sensed; allowed to be sensed, with a need to notify the terminal without requiring a reply from the terminal; allowed to be sensed when the terminal replies with consent or does not reply, with a need to notify the terminal; or allowed to be sensed only when the terminal replies with consent, with a need to notify the terminal. "Allowed to be sensed when the terminal replies with consent or does not reply, with a need to notify the terminal" is specifically: allowed to be sensed when the terminal replies with consent or the terminal does not reply while not allowed to be sensed when the terminal replies with non-consent, with the need to notify the terminal. "Allowed to be sensed only when the terminal replies with consent, with a need to notify the terminal" is specifically: allowed to be sensed when the terminal replies with consent while not allowed to be sensed when the terminal replies with non-consent or the terminal does not reply, with the need to notify the terminal.

Table 1 shows several types of possible permissions.

**Table 1**

| Index | Permission |
|---|---|
| 1 | Allowed to be sensed |
| 2 | Not allowed to be sensed |
| 3 | Allowed to be sensed, with the need to notify the terminal without requiring a reply from the terminal |
| 4 | Allowed to be sensed when the terminal replies with consent or does not reply, with the need to notify the terminal |
| 5 | Allowed to be sensed only when the terminal replies with consent, with the need to notify the terminal |

A sensing permission subscribed to by each terminal is one of the multiple types of permissions shown in Table 1. Alternatively, the sensing permission subscribed to by the terminal may include one of the following multiple types of permissions: allowed to be sensed; not allowed to be sensed; allowed to be sensed, with a need to notify the terminal without requiring a reply from the terminal; not allowed to be sensed when the terminal replies with non-consent or does not reply, with a need to notify the terminal; or not allowed to be sensed only when the terminal replies with non-consent, with a need to notify the terminal. "Not allowed to be sensed when the terminal replies with non-consent or does not reply, with a need to notify the terminal" is specifically: not allowed to be sensed when the terminal replies with non-consent or the terminal does not reply, with the need to notify the terminal. "Not allowed to be sensed only when the terminal replies with non-consent, with a need to notify the terminal" is specifically: allowed to be sensed when the terminal replies with consent or does not reply while not allowed to be sensed when the terminal replies with non-consent, with the need to notify the terminal. The sensing permission subscribed to by each terminal may alternatively be one of the multiple types of permissions.

The sensing permission subscribed to by each terminal may be preconfigured in the UDM, for example, indicated by using an identifier of the terminal and an index of the permission included in the sensing permission subscribed to by the terminal. For example, a sensing permission subscribed to by a terminal 1 is allowed to be sensed, a sensing permission subscribed to by a terminal 2 is not allowed to be sensed, a sensing permission of a terminal 3 is allowed to be sensed, with a need to notify the terminal without requiring a reply from the terminal, a sensing permission subscribed to by a terminal 4 is allowed to be sensed when the terminal replies with consent or does not reply, with a need to notify the terminal, and a sensing permission subscribed to by a terminal 5 is allowed to be sensed only when the terminal replies with consent, with a need to notify the terminal. Sensing permissions subscribed to by the five terminals may be shown in Table 2.

**Table 2**

| Terminal | Subscribed sensing permission |
|---|---|
| 1 | 1 |
| 2 | 2 |
| 3 | 3 |
| 4 | 4 |
| 5 | 5 |

Certainly, the column, namely, the subscribed sensing permissions, in Table 2 may alternatively be replaced with the sensing permissions respectively subscribed to by the terminals, and is not indicated by using the indexes. Table 2 is merely an example, and should not constitute any limitation on this application.

In step 5022, if the sensing permission subscribed to by the terminal is allowed to be sensed, or is allowed to be sensed, with the need to notify the terminal without requiring a reply from the terminal, the UDM may directly determine that sensing of the terminal is allowed, and may authorize the sensing request. If the sensing permission subscribed to by the terminal is not allowed to be sensed, the UDM may directly determine that sensing of the terminal is not allowed, and may reject authorization for the sensing request. If the sensing permission subscribed to by the terminal is allowed to be sensed when the terminal replies with consent or does not reply, with the need to notify the terminal, is allowed to be sensed when the terminal does not reply, with the need to notify the terminal, is not allowed to be sensed when the terminal does not reply, with the need to notify the terminal, or is allowed to be sensed only when the terminal replies with consent, with the need to notify the terminal, the UDM cannot temporarily determine whether sensing of the terminal is allowed, and further needs to determine, based on the reply from the terminal, whether sensing of the terminal is allowed. In this case, the UDM may authorize the sensing request, to perform a subsequent procedure. It should be noted that, authorizing the sensing request by the UDM does not mean that the sensing request is necessarily executed. Instead, to facilitate execution of the subsequent procedure, the sensing request is temporarily authorized, so that another network element determines whether sensing of the terminal is allowed. For example, in this embodiment, the SF determines whether sensing of the terminal is allowed. After receiving the sensing request, the SF may determine whether sensing of the terminal is allowed; and obtain a target service requirement when determining that sensing of the terminal is allowed; or reject the sensing request when determining that sensing of the terminal is not allowed. In other words, requesting authorization for the sensing request from the UDM may be regarded as that the UDM preliminarily screen sensing requests, and may not be necessarily capable of filtering out all sensing requests initiated for terminals of which sensing is not allowed. For brevity, descriptions of a same or similar case are omitted below.

Further, the sensing permission subscribed to by the terminal may correspond to at least one area and/or correspond to at least one time period. In other words, the sensing permission subscribed to by the terminal includes at least one type of sensing permission corresponding to the at least one area, and/or the sensing permission subscribed to by the terminal includes at least one type of sensing permission corresponding to the at least one time period. In other words, the sensing permission subscribed to by the terminal may vary with a location and/or time. For example, a sensing permission subscribed to by the terminal in an area 1 is different from that in an area 2, or a sensing permission subscribed to by the terminal in a time period A is different from that in a time period B. Others are not enumerated. For example, the location may include one or more of the following: coordinate information, a geographical area identifier, address information, a tracking area identity (tracking area identity, TAI), or a cell identity (cell identity, cell ID).

For example, Table 3 shows correspondences between different permissions and different locations as well as different time.

**Table 3**

| Index | Permission | Area | Time |
|---|---|---|---|
| 1 | Allowed to be sensed | N/A | N/A |
| 2 | | Area 1 | N/A |
| 3 | | N/A | Time period A |
| 4 | Not allowed to be sensed | N/A | N/A |
| 5 | | Area 2 | N/A |
| 6 | | N/A | Time period B |
| 7 | Allowed to be sensed, with the need to notify the terminal without requiring a reply from the terminal | N/A | N/A |
| 8 | | Area 3 | N/A |
| 9 | | N/A | Time period C |
| 10 | Allowed to be sensed when the terminal replies with consent or does not reply, with the need to notify the terminal | N/A | N/A |
| 11 | | Area 4 | N/A |
| 12 | | N/A | Time period D |
| 13 | Allowed to be sensed only when the terminal replies with consent, with the need to notify the terminal | N/A | N/A |
| 14 | | Area 5 | N/A |
| 15 | | N/A | Time period E |

The sensing permission subscribed to by each terminal includes one or more of the multiple groups of correspondences shown as examples in Table 3. In other words, a sensing permission subscribed to by a terminal may correspond to a specific area and/or a specific time period. Further, the terminal may correspond to a same sensing permission or different sensing permissions in different areas; and may correspond to a same sensing permission or different sensing permissions in different time periods.

It should be understood that Table 3 is merely an example, and may alternatively be split into two tables, namely, a table indicating correspondences between the different permissions and the different time periods and a table indicating correspondences between the different permissions and the different areas.

If the sensing permission subscribed to by the terminal includes the at least one type of sensing permission corresponding to the at least one area, the UDM cannot determine the sensing permission subscribed to by the terminal temporarily, given that the UDM may not be capable of obtaining a location of the terminal temporarily because the UDM cannot directly interact with the terminal; and therefore may not be capable of determining whether sensing of the terminal is allowed. Therefore, the sensing request may be authorized, to perform the subsequent procedure.

If the sensing permission subscribed to by the terminal includes the at least one type of sensing permission corresponding to the at least one time period, the UDM may determine, based on a time period to which time at which the sensing request is received belongs, a sensing permission corresponding to the time period, to determine whether sensing of the terminal is allowed. Certainly, the UDM may also need to perform determining based on the reply from the terminal. Therefore, when the time period to which the time of the sensing request belongs is within a scope of the at least one time period, and that sensing of the terminal is allowed needs to be further determined based on the reply from the terminal, the sensing request may be authorized, to perform the subsequent procedure.

In conclusion, it can be learned that the UDM may preliminarily screen the sensing requests based on the sensing permission subscribed to by the terminal, so that the sensing request for the terminal of which sensing is not allowed is directly rejected, and does not need to be sent to the SF. Therefore, signaling overheads caused by subsequently sending the sensing request to the SF and processing amounts caused by determining, by the SF, whether sensing of the terminal is allowed and determining the target service requirement can be reduced.

Optionally, when determining to authorize the sensing request, the UDM may determine the identifier of the terminal in the communication system, for example, a subscription permanent identifier (subscription permanent identifier, SUPI) of the terminal, based on the external identifier of the terminal, and include the SUPI of the terminal in the sensing authorization reply. In other words, the sensing authorization reply carries the SUPI of the terminal.

Optionally, when determining to authorize the sensing request, the UDM may include, in the sensing authorization reply, the sensing permission subscribed to by the terminal and/or a mapping relationship for determining the target service requirement. In other words, the sensing authorization reply carries the sensing permission subscribed to by the terminal and/or the mapping relationship for determining the target service requirement. The mapping relationship for determining the target service requirement may include one or more of the following: a correspondence between at least one service requirement and at least one time period, a correspondence between at least one service requirement and at least one area, or a correspondence between at least one service requirement and at least one combination of a time period and an area. Because the mapping relationship is described in detail based on a first mapping relationship, a second mapping relationship, and a third mapping relationship in step 505 below, details are not described herein. Optionally, when determining to reject authorization for the sensing request, the UDM may include a cause of the rejection in the sensing authorization reply. In other words, the sensing authorization reply carries the cause of the rejection. For example, the cause for rejecting the sensing request is that sensing of the terminal is not allowed.

In conclusion, the sensing authorization reply (in other words, the authorization message) indicates authorization for the sensing request, and carries one or more of the following: the SUPI of the terminal, the sensing permission subscribed to by the terminal, or the mapping relationship for determining the target service requirement, as shown in 5023a in the figure; or the sensing authorization reply (in other words, the authorization rejection message) indicates rejection of authorizing the sensing request, and indicates the cause of the rejection, as shown in 5023b in the figure.

The NEF may determine, based on the received sensing authorization reply, whether to continue to send the sensing request to the SF. If the sensing authorization reply indicates authorization for the sensing request, step 503 may be performed. That is, the NEF sends the sensing request to the SF; or if the sensing authorization reply indicates rejection of authorizing the sensing request, step 504 may be performed. That is, the NEF sends a rejection message to the AF.

It should be noted that step 502 is not necessarily performed. For example, in the standalone architecture shown in FIG. 1b, the NEF may directly forward the sensing request to the SF without requesting the authorization from the UDM. Even in the integrated architecture shown in FIG. 1a, the NEF may also directly forward the sensing request to the SF. This is not limited in this application.

In step 503, the NEF sends a sensing request to the SF.

In a possible implementation, the NEF may directly forward the received sensing request to the SF. Therefore, the sensing request received by the SF also carries the external identifier of the terminal that is requested to be sensed and one or more of the following: the identifier of the AF, the requested service type, the requested service requirement, or the time information of the sensing request.

In another possible implementation, before sending the sensing request to the SF, the NEF may first send the received sensing request to the UDM, and then forward the sensing request to the SF after the sensing request is authorized by the UDM.

If the NEF has obtained the authorization from the UDM through step 502 before step 503, step 503 may be performed when the authorization message is received from the UDM. For ease of understanding, in this specification, it is assumed that the UDM determines that sensing of the terminal is allowed, and sends the authorization message to the NEF.

As described above, the sensing authorization reply may carry the SUPI of the terminal. The NEF may replace the external identifier of the terminal in the sensing request received from the AF with the SUPI of the terminal based on the SUPI of the terminal carried in the sensing authorization reply, and send the sensing request in which the external identifier of the terminal is replaced with the SUPI of the terminal to the SF. The sensing authorization reply may further carry the sensing permission subscribed to by the terminal and/or the mapping relationship for determining the target service requirement. The NEF may also send the sensing permission and/or the mapping relationship for determining the target service requirement that are/is carried in the sensing authorization reply to the SF via the sensing request. In this case, the sensing request sent by the AF in step 501 may also be referred to as a first sensing request, and the sensing request sent by the NEF in step 502 may also be referred to as a second sensing request. It may be understood that both the first sensing request and the second sensing request may be for requesting to sense the terminal. A difference lies in: An identifier of the terminal carried in the first sensing request is the external identifier of the terminal, an identifier of the terminal carried in the second sensing request is the SUPI of the terminal, and the second sensing request may further carry the sensing permission and/or the mapping relationship for determining the target service requirement. In other words, the second sensing request carries the SUPI of the terminal, and one or more of the following: the identifier of the AF, the requested service type, the requested service requirement, the sensing permission subscribed to by the terminal, or the mapping relationship for determining the target service requirement.

In conclusion, the sensing request received by the SF in step 502 may be the first sensing request, or may be the second sensing request. For ease of description, the first sensing request and the second sensing request are collectively referred to as sensing requests below.

Certainly, the UDM may alternatively not include the SUPI of the terminal in the authorization message. In this case, the sensing request sent by the NEF to the SF may be the sensing request received from the AF. This is not limited in this application.

In addition, if no authorization for the sensing request is obtained from the UDM before step 503 (for example, in the standalone architecture shown in FIG. 1b, the NEF may directly forward the sensing request to the SF without requesting the authorization from the UDM, or the NEF directly forwards the sensing request to the SF), and the sensing request sent by the NEF to the SF may also be the sensing request received from the AF.

In step 504, the NEF sends the rejection message to the AF, where the rejection message is for rejecting the sensing request.

As described above, if the sensing authorization reply received by the NEF from the UDM indicates rejection of authorizing the sensing request, the NEF may send the rejection message to the AF, to reject the sensing request. Optionally, the rejection message may indicate the cause for rejecting the sensing request. The cause of the rejection may be obtained from the sensing authorization reply from the UDM, or may be determined by the NEF. This is not limited in this application.

In a possible implementation, the NEF may directly forward, to the AF, the sensing authorization reply received from the UDM. That is, the sensing authorization reply and the rejection message may be a same message. In another possible implementation, the NEF may generate the rejection message based on the sensing authorization reply received from the UDM. That is, the sensing authorization reply and the rejection message may be different messages. In step 505, the SF determines whether sensing of the terminal is allowed.

In this embodiment of this application, that the target service requirement is related to a sensing permission of the terminal includes: The target service requirement is obtained when it is determined that sensing of the terminal is allowed, and/or the target service requirement is determined based on the sensing permission of the terminal. This embodiment mainly provides a processing procedure of obtaining the target service requirement when it is determined that sensing of the terminal is allowed.

After receiving the sensing request, the SF may first determine whether sensing of the terminal is allowed (that is, whether sensing of the terminal is allowed), to obtain the target service requirement when sensing of the terminal is allowed.

Whether sensing of the terminal is allowed may be determined based on the sensing permission subscribed to by the terminal and/or a sensing notification feedback from the terminal. The sensing permission subscribed to by the terminal has been described in detail in the foregoing step 502. Refer to the foregoing related content. Details are not described again.

In a possible implementation, the SF determines, based on the sensing permission subscribed to by the terminal, whether sensing of the terminal is allowed. If whether sensing of the terminal is allowed does not need to be determined based on the reply from the terminal (for example, the sensing notification feedback in this specification), for example, the sensing permission subscribed to by the terminal is not allowed to be sensed, is allowed to be sensed, or is allowed to be sensed, with the need to notify the terminal without requiring a reply from the terminal, whether sensing of the terminal is allowed may be directly determined. The sensing permission subscribed to by the terminal may be obtained from the UDM, or may be preconfigured in the SF. This is not limited in this application.

It may be understood that, if step 502 has been performed, the UDM may determine, based on the sensing permission subscribed to by the terminal, whether sensing of the terminal is allowed, and step 505 may not need to be performed.

In addition, if the sensing permission subscribed to by the terminal includes the at least one type of sensing permission corresponding to the at least one area, the SF may obtain the location of the terminal (for example, by initiating a positioning procedure for the terminal), to determine a corresponding sensing permission based on an area to which the location of the terminal belongs, thereby determining whether sensing of the terminal is allowed.

For example, the SF may trigger a RAN node to initiate the positioning procedure for the terminal. The RAN node may send a reference signal, to obtain measurement data of the terminal for the reference signal, for example, relative time of arrival (relative time of arrival, RTOA), an angle of arrival (angle of arrival, AoA) of the reference signal, or a reference signal received power (reference signal received power, RSRP). The RAN node may determine the location of the terminal based on the measurement data, and report the location to the SF. For a specific implementation process of the positioning procedure for the terminal, refer to a conventional technology. Details are not described in this specification.

In another possible implementation, the SF may determine, based on the sensing notification feedback from the terminal, whether sensing of the terminal is allowed.

The sensing notification feedback may indicate that the terminal replies with consent to being sensed, that the terminal replies with non-consent to being sensed, or that the terminal does not reply. When the sensing notification feedback indicates that the terminal replies with consent to being sensed, the SF may determine sensing of the terminal is allowed. When the terminal replies with non-consent to being sensed, the SF may determine that sensing of the terminal is not allowed. When the terminal does not reply, the SF may determine, based on a preset rule (for example, the sensing permission subscribed to by the terminal), whether sensing of the terminal is allowed.

In still another possible implementation, the SF determines, based on the sensing permission subscribed to by the terminal and the sensing notification feedback from the terminal, whether sensing of the terminal is allowed.

For example, if the sensing permission subscribed to by the terminal is allowed to be sensed when the terminal replies with consent or does not reply, with the need to notify the terminal, and the sensing notification feedback from the terminal indicates that the terminal does not reply, it may be determined that sensing of the terminal is allowed.

For another example, if the sensing permission subscribed to by the terminal is allowed to be sensed only when the terminal replies with consent, with the need to notify the terminal, and the sensing notification feedback from the terminal indicates that the terminal does not reply, it may be determined that sensing of the terminal is not allowed.

In some cases, although the sensing permission subscribed to by the terminal is allowed to be sensed, with the need to notify the terminal without requiring a reply from the terminal, the terminal replies with non-consent to being sensed. In this case, the sensing notification feedback from the terminal may be mainly for determining that sensing of the terminal is not allowed. In other words, a priority of the sensing notification feedback from the terminal is higher than that of the sensing permission subscribed to by the terminal.

For the sensing permission subscribed to by the terminal, refer to the foregoing related descriptions. Details are not described again.

Optionally, the method further includes step 506: The SF obtains the sensing notification feedback from the terminal.

The SF may obtain the sensing notification feedback from the terminal by sending a sensing notification request. The sensing notification request is for requesting the terminal to reply with consent or non-consent to being sensed. Optionally, step 506 specifically includes: The SF sends the sensing notification request. The SF obtains the sensing notification feedback from the terminal from a response message to the sensing notification request.

The figure shows a possible implementation of step 506 from a perspective of device interaction. For example, step 506 specifically includes the following step 5061 to step 5064:
Step 5061: The SF sends the sensing notification request to an AMF.
Step 5062: The AMF forwards the sensing notification request to the terminal, to obtain the reply from the terminal.
Step 5063: The AMF sends the response message to the sensing notification request to the SF, where the response message to the sensing notification request indicates that the terminal replies with consent to being sensed, that the terminal replies with non-consent to being sensed, or that the terminal does not reply.
Step 5064: The SF obtains the sensing notification feedback based on the response message to the sensing notification request.

For example, the sensing notification request carries the sensing request, or the sensing notification request carries the SUPI of the terminal and one or more of the following: the ID of the AF, the requested service requirement, or the requested service type. Further, the sensing notification request further indicates the AMF to reply with the sensing notification feedback.

The response message to the sensing notification request may be a response message for the sensing notification request, and may indicate the sensing notification feedback. In a possible design, the response message to the sensing notification request carries the sensing notification feedback.

It should be noted that the SF and the terminal may communicate with each other via network elements such as the AMF and the RAN node. Therefore, the sensing notification request may be forwarded to the terminal via the AMF and the RAN node. Alternatively, the AMF may indicate the sensing notification feedback from the terminal by using the response message to the sensing notification request based on content of the reply from the terminal or a state of no reply. The SF may determine, based on the sensing notification feedback, whether sensing of the terminal is allowed.

It should be further noted that, the sensing notification feedback from the terminal indicates the content of the reply from the terminal or a status of whether the terminal replies, but does not indicate that the terminal necessarily makes a feedback. The sensing notification feedback from the terminal may be understood as being obtained by the AMF based on the sensing notification request and whether the terminal replies or the content of the reply.

In conclusion, there may be the following multiple possible cases in which sensing of the terminal is allowed:
(1) The sensing permission subscribed to by the terminal is allowed to be sensed.
(2) The sensing permission subscribed to by the terminal is allowed to be sensed, with the need to notify the terminal without requiring a reply from the terminal, and the terminal does not reply.
(3) Being sensed is allowed when the terminal replies with consent or does not reply, with the need to notify the terminal, and the sensing notification feedback from the terminal indicates that the terminal replies with consent to being sensed or the sensing notification feedback from the terminal indicates that the terminal does not reply.
(4) Being sensed is allowed only when the terminal replies with consent, with the need to notify the terminal, and the sensing notification feedback from the terminal indicates that the terminal replies with consent to being sensed.
(5) The terminal does not have a subscribed sensing permission, but the sensing notification feedback from the terminal indicates that the terminal consents to be fed back.

In contrast, there may be the following multiple possible cases in which sensing of the terminal is not allowed:
(1) The sensing permission subscribed to by the terminal is not allowed to be sensed.
(2) Being sensed is allowed when the terminal replies with consent or does not reply, with the need to notify the terminal, and the sensing notification feedback from the terminal indicates that the terminal replies with non-consent to being sensed.
(3) Being sensed is allowed only when the terminal replies with consent, with the need to notify the terminal, and the sensing notification feedback from the terminal indicates that the terminal replies with non-consent to being sensed or the sensing notification feedback from the terminal indicates that the terminal does not reply.
(4) The terminal does not have a subscribed sensing permission, but the sensing notification feedback from the terminal indicates that the terminal replies with non-consent to being sensed.
(5) The sensing permission subscribed to by the terminal is allowed to be sensed, with the need to notify the terminal without requiring a reply from the terminal, but the terminal replies with non-consent to being sensed.

Based on the multiple types of possible permissions and the multiple examples, the foregoing shows the multiple possible implementations of determining whether sensing of the terminal is allowed. These examples are shown merely for ease of understanding, and should not constitute any limitation on this application.

In addition, the sensing permission subscribed to by the terminal may be pre-stored in the SF, or may be obtained by the SF from the UDM.

Optionally, the method further includes step 507: The SF obtains, from the UDM, the sensing permission subscribed to by the terminal.

The SF may determine, based on the received sensing request, that the sensing request is for a specific terminal, and may request, from the UDM, a sensing permission subscribed to by the terminal.

As described above, the sensing request further carries the identifier of the AF. The SF may determine, based on the identifier of the AF, whether the sensing request is from an authoritative institution or a supervision institution. For example, an AF list may be pre-stored in the SF, and the AF list includes an identifier of an AF corresponding to a predefined institution. The predefined institution may be understood as follows: A sensing request from the predefined institution needs to be executed, and it is not necessary to confirm whether sensing of the terminal is allowed. In other words, step 508 to step 510 may be skipped, and step 511 and step 512 are directly performed. The predefined institution may be, for example, the authoritative institution or the supervision institution. The SF determines, based on the institution list and the identifier of the AF carried in the sensing request, whether the sensing request is from the predefined institution.

In addition, if the identifier of the terminal obtained by the SF from the sensing request received from the NEF is the external identifier rather than the SUPI, the SF may alternatively obtain the SUPI of the terminal in step 507.

If the SF determines, in step 505, that sensing of the terminal is allowed, a part of step 508 to step 513 may continue to be performed. If the SF determines, in step 505, that sensing of the terminal is not allowed, step 513 may be performed. That is, the SF sends a rejection message to the AF.

In step 508, the SF obtains the target service requirement.

A possible implementation of step 508 is shown in step 508a: The SF determines the target service requirement.

In a possible design, a service requirement may be pre-stored in the SF, and the service requirement may be referred to as a default (default) service requirement. The SF may directly determine the target service requirement when sensing of the terminal is allowed.

In another possible design, the sensing request may carry the requested service requirement, and the SF may determine the requested service requirement as the target service requirement when sensing of the terminal is allowed. In other words, the SF may define a default service requirement as the requested service requirement, and does not preconfigure the default service requirement.

In still another possible design, the target service requirement may be determined based on time information of the sensing request and/or the location of the terminal. In other words, the SF may determine the target service requirement corresponding to the time information of the sensing request and/or the location of the terminal.

In an example, the target service requirement may be determined based on the time information of the sensing request.

The time information of the sensing request may indicate one or more of the following: time at which the AF initiates the sensing request, time at which the SF receives the sensing request, or the time at which sensing is requested and that is carried in the sensing request.

The SF may determine, based on the time information, a time period to which the time indicated by the time information belongs, to determine the target service requirement.

For example, the time indicated by the time information is a night rest time, for example, 21:00 to 7:00. Because a user is in a rest state, and does not expect privacy to be exposed, the target service requirement may be determined as a service requirement with lower sensing accuracy.

In another example, the target service requirement may be determined based on the location of the terminal.

The location of the terminal may be obtained by the SF, and the target service requirement corresponding to the location may be determined based on the location of the terminal.

For example, the location of the terminal is a home of a user, and the user may not expect privacy to be exposed. Therefore, the target service requirement may be determined as a service requirement with lower sensing accuracy.

In still another example, the target service requirement may be determined based on the time information of the sensing request and the location of the terminal.

For example, time indicated by the time information is in a morning peak time period or an evening peak time period, for example, 7:00 to 9:00 or 17:00 to 19:00, and the location of the terminal is a highway. Because there are a large quantity of terminals on highways in the morning peak time period or the evening peak time period, sensing with higher sensing accuracy may involve leakage of some privacy or sensitive information. Therefore, the target service requirement may be determined as a service requirement with lower sensing accuracy.

In conclusion, it can be learned that, in combination with the time information of the sensing request and/or the location of the terminal, exposure of the privacy of the user can be effectively avoided, and leakage of the sensitive information can be reduced, which not only can satisfy a security demand of the terminal, but also can effectively and flexibly provide a network exposure capability.

In a possible implementation, the target service requirement corresponding to the time information of the sensing request and/or the location of the terminal may be defined by using the mapping relationship. The target service requirement may be determined based on the time information of the sensing request and/or the location of the terminal, and the mapping relationship.

Optionally, the mapping relationship may include the correspondence between the at least one service requirement and the at least one time period, and for ease of distinguishing and description, is denoted as the first mapping relationship below. Table 4 shows an example of the first mapping relationship.

**Table 4**

| Service requirement | Time period |
|---|---|
| Service requirement A | Time period A |
| Service requirement B | Time period B |
| ... | ... |

Optionally, the mapping relationship may include the correspondence between the at least one service requirement and the at least one area, and for ease of distinguishing and description, is denoted as the second mapping relationship below.

Table 5 shows an example of the second mapping relationship.

**Table 5**

| Service requirement | Area |
|---|---|
| Service requirement 1 | Area 1 |
| Service requirement 2 | Area 2 |
| ... | ... |

Optionally, the mapping relationship may include the correspondence between the at least one service requirement and the at least one combination of the area and the time period, and for ease of distinguishing and description, is denoted as the third mapping relationship below.

Table 6 shows an example of the third mapping relationship.

**Table 6**

| Service requirement | Time period | Area |
|---|---|---|
| Service requirement 1 | Time period A | Area 1 |
| Service requirement 2 | Time period B | Area 2 |
| ... | ... | ... |

It should be understood that the first mapping relationship to the third mapping relationship shown as examples in Table 4 to Table 6 are merely shown for ease of understanding, and should not constitute any limitation on this application. The mapping relationship for determining the target service requirement may include one or more of the first mapping relationship, the second mapping relationship, or the third mapping relationship. In addition, a specific form of the mapping relationships is not limited in this application, for example, may be a table, or may be another form, for example, enumeration arrangement of different combinations. This is not limited in this application.

It may be understood that the service requirement A and the service requirement B in Table 4, and the service requirement 1 and the service requirement 2 in Table 5 and Table 6 may all be considered as several examples of the default service requirement. In other words, there may be one or more default service requirements. This is not limited in this application.

In correspondence to the mapping relationships listed above, a possible implementation in which the SF determines the target service requirement based on the time information of the sensing request is that the SF determines the target service requirement based on the time information of the sensing request and the first mapping relationship. That is, the SF may determine, based on the first mapping relationship, the target service requirement corresponding to the time information. For example, the time at which the AF initiates the sensing request is used as an example. The SF may determine, based on a time period to which the time belongs and the first mapping relationship, the target service requirement corresponding to the time information.

A possible implementation in which the SF determines the target service requirement based on the location of the terminal is that the SF determines the target service requirement based on the location of the terminal and the second mapping relationship. That is, the SF may determine the area to which the location of the terminal belongs in the at least one area, and then determine, based on the second mapping relationship, the target service requirement corresponding to the area.

A possible implementation in which the SF determines the target service requirement based on the time information of the sensing request and the location of the terminal is that the SF determines the target service requirement based on the time information of the sensing request, the location of the terminal, and the mapping relationship. In other words, the SF may determine the area to which the location of the terminal belongs and the time period to which the time information belongs, and then determine the corresponding target service requirement based on the third mapping relationship.

Optionally, the method further includes: The SF obtains the mapping relationship for determining the target service requirement.

The mapping relationship (for example, including one or more of the first mapping relationship, the second mapping relationship, or the third mapping relationship) for determining the target service requirement may be configured in the SF, or may be configured in the UDM. Correspondingly, in step 5071a, the SF may locally obtain the mapping relationship, or may obtain the mapping relationship from the UDM.

A possible implementation in which the SF locally obtains the mapping relationship is that the mapping relationship may be manually stored in a memory of the SF, or may be sent to the SF in advance by using the AF, and the SF stores the received mapping relationship in the memory. That the SF locally obtains the mapping relationship may be specifically obtaining the mapping relationship from the memory.

Several possible implementations in which the SF obtains the mapping relationship from the UDM are as follows: For example, in step 5023a, the UDM may send the sensing authorization reply that carries the sensing permission subscribed to by the terminal and the mapping relationship, so that in step 503, the NEF may send the sensing permission subscribed to by the terminal and the mapping relationship to the SF via the sensing request. In this case, the SF may obtain, by using step 5023a and step 503, the mapping relationship for determining the target service requirement. For another example, in step 507, when obtaining, from the UDM, the sensing permission subscribed to by the terminal, the SF may also obtain the mapping relationship. In this case, the SF may obtain, by using step 507, the mapping relationship for determining the target service requirement. Certainly, the SF may alternatively request the mapping relationship from the UDM by using additional signaling. This is not limited in this application.

Another possible implementation of step 508 is shown in step 508b: The SF obtains the target service requirement from the UDM.

For example, step 508b may specifically include the following steps 5081b to 5083b:
5081b: The SF sends a service requirement request to the UDM.
5082b: The UDM determines the target service requirement based on the service requirement request.
5083b: The UDM sends the target service requirement to the SF.

In step 5081b, in a possible case, the service requirement request may be sent to the data management function network element when the SF determines that sensing of the terminal is allowed. In other words, sending of the service requirement request may be triggered by a condition that sensing of the terminal is allowed. After receiving the service requirement request, the data management function network element may determine the target service requirement, and send the target service requirement to the SF. In other words, sending of the service requirement request may implicitly indicate that sensing of the terminal is allowed. After receiving the service requirement request, the data management function network element may consider by default that sensing of the terminal is allowed.

In another possible case, the service requirement request may alternatively be sent when the SF determines a result of whether sensing of the terminal is allowed, and the service requirement request may indicate whether sensing of the terminal is allowed. In other words, regardless of whether sensing of the terminal is allowed, the SF may send the service requirement request to the data management function network element. The data management function network element may first determine, based on the received service requirement request, whether sensing of the terminal is allowed, determine the target service requirement when sensing of the terminal is allowed, and send the target service requirement to the SF, but does not need to determine the target service requirement when sensing of the terminal is not allowed. In other words, the data management function network element does not necessarily need to determine and send the target service requirement. In this embodiment, for ease of describing a subsequent procedure, it is assumed that the service requirement request indicates that sensing of the terminal is allowed, and the UDM may determine the target service requirement based on the service requirement request.

In step 5082b, an implementation in which the UDM determines the target service requirement is similar to the implementation in which the SF determines the target service requirement in the foregoing example. A default service requirement may be determined as the target service requirement, or the requested service requirement may be determined as the target service requirement. If the UDM determines the default service requirement as the target service requirement, the default service requirement may be pre-stored in the UDM, or the requested service requirement is defined as the default service requirement.

Optionally, the service requirement request carries time information and/or location information. Correspondingly, step 5082b may specifically include: The UDM determines the target service requirement based on the location information and/or the time information.

The location information indicates the location of the terminal, and the location information may be, for example, carried in the service requirement request. The time information may indicate one or more of the following: time at which the AF initiates the sensing request, time at which the SF receives the sensing request, the time at which sensing is requested and that is carried in the sensing request, time at which the SF sends the service requirement request, or time at which the UDM receives the service requirement request. The time information (for example, the time at which the AF initiates the sensing request, the time at which the SF receives the sensing request, the time at which sensing is requested and that is carried in the sensing request, the time at which the SF sends the service requirement request) may be carried in the service requirement request, or may be determined based on time at which the UDM receives the service requirement request.

The UDM may determine the target service requirement based on the location information. That is, the UDM may determine the target service requirement based on the location of the terminal. In a possible implementation, the UDM may determine the target service requirement based on the location of the terminal and the first mapping relationship. For a specific process in which the UDM determines the target service requirement based on the location of the terminal, refer to the related descriptions in step 508a in which the SF determines the target service requirement based on the location of the terminal. Details are not described again.

The UDM may alternatively determine the target service requirement based on the time information. In a possible implementation, the UDM determines the target service requirement based on the time information and the second mapping relationship. For a specific process in which the UDM determines the target service requirement based on the time information, refer to the related descriptions in step 508a in which the SF determines the target service requirement based on the time information. Details are not described again.

The UDM may alternatively determine the target service requirement based on the location information and the time information. In a possible implementation, the UDM determines the target service requirement based on the location of the terminal, the time information, and the third mapping relationship. For a specific process in which the UDM determines the target service requirement based on the location information and the time information, refer to the related descriptions in step 508a in which the SF determines the target service requirement based on the location information and the time information. Details are not described again.

In this implementation shown in step 508b, the mapping relationship for determining the target service requirement may be locally preconfigured in the UDM. For example, the mapping relationship may be manually stored in a memory of the UDM, or may be sent to the UDM in advance by using the AF, and the UDM stores the received mapping relationship in the memory. Although not shown in the figure, it may be understood that the UDM may obtain the mapping relationship from a local memory.

In step 509, the SF sends a service requirement confirmation request to the AF, where the service requirement confirmation request is for requesting to use the target service requirement.

The SF may send the service requirement confirmation request to the AF when the target service requirement is different from the requested service requirement. For example, after obtaining the target service requirement, the SF may compare the target service requirement with the requested service requirement, to determine whether the target service requirement is the same as the requested service requirement. Alternatively, after obtaining the sensing notification feedback in step 5064, the SF may directly determine, based on the sensing notification feedback, whether the service requirement needs to be adjusted, for example, degraded or upgraded. That is, that the target service requirement is different from the requested service requirement is not necessarily determined by comparing the target service requirement with the requested service requirement after the target service requirement is obtained.

Certainly, if the SF determines that the target service requirement is the same as the requested service requirement, if the SF determines that the requested service requirement does not need to be adjusted, or if the SF directly determines the requested service requirement as the target service requirement, step 509 and step 510 do not need to be performed, and step 511 and step 512 are directly performed.

The SF may include the target service requirement in the service requirement confirmation request, to request to use the target service requirement.

The SF may include the target service requirement in the service requirement confirmation request, and the service requirement request indicates, to the AF, that a service requirement different from that in the sensing request is used to perform the sensing procedure, and is for requesting the AF to confirm whether the target service requirement can be used to perform sensing.

In a possible case, a level of the target service requirement is different from that of the requested service requirement. For example, the level of the target service requirement is lower than that of the requested service requirement. In this case, the service requirement confirmation request may be understood as being for requesting the AF to confirm whether a service requirement for performing sensing can be degraded. The service requirement confirmation request may also be referred to as a degradation confirmation request.

In another possible case, a level of the target service requirement is different from that of the requested service requirement. For example, the level of the target service requirement is higher than that of the requested service requirement. In this case, the service requirement confirmation request may be understood as being for requesting the AF to confirm whether a service requirement for performing sensing can be upgraded. The service requirement confirmation request may also be referred to as an upgrade confirmation request.

It should be noted that a level of a service requirement may be determined based on a value of each indicator corresponding to the service requirement. An indicator corresponding to the service requirement may be included in the service requirement, may be indicated by the service requirement, or may be an indicator in a KPI converted from the service requirement. This is not limited in this application.

Several examples in which the level of the target service requirement is lower than that of the requested service requirement are as follows: For example, location sensing accuracy in indicators corresponding to the target service requirement is 1 m, and the location sensing accuracy in indicators corresponding to the requested service requirement is 1 mm. Because accuracy of 1 mm is higher than accuracy of 1 m, it may be considered that the level of the target service requirement is lower than that of the requested service requirement. For another example, a sensing resolution in indicators corresponding to the target service requirement is 5 m, and the sensing resolution in indicators corresponding to the requested service requirement is 1 m. Because the sensing resolution of 1 m has higher accuracy than the sensing resolution of 5 m, it may be considered that the level of the target service requirement is lower than that of the requested service requirement. For another example, a maximum sensing service delay in indicators corresponding to the target service requirement is 0.5 ms, and a maximum sensing service delay in indicators corresponding to the requested service requirement is 0.2 ms. Because a delay of 0.2 ms is shorter than a delay of 0.5 ms, it may be considered that the level of the target service requirement is lower than that of the requested service requirement.

Several examples in which the level of the target service requirement is higher than that of the requested service requirement are as follows: For example, location sensing accuracy in indicators corresponding to the target service requirement is 1 mm, and the location sensing accuracy in indicators corresponding to the requested service requirement is 1 m. Because accuracy of 1 mm is higher than accuracy of 1 m, it may be considered that the level of the target service requirement is higher than that of the requested service requirement. For another example, a sensing resolution in indicators corresponding to the target service requirement is 1 m, and the sensing resolution in indicators corresponding to the requested service requirement is 5 m. Because the sensing resolution of 1 m has higher accuracy than the sensing resolution of 5 m, it may be considered that the level of the target service requirement is higher than that of the requested service requirement. For another example, a maximum sensing service delay in indicators corresponding to the target service requirement is 0.2 ms, and a maximum sensing service delay in indicators corresponding to the requested service requirement is 0.5 ms. Because a delay of 0.2 ms is shorter than a delay of 0.5 ms, it may be considered that the level of the target service requirement is higher than that of the requested service requirement.

Certainly, when the target service requirement is different from the requested service requirement, the SF may alternatively initiate the sensing procedure for the terminal based on the target service requirement, without confirming with the AF whether the AF consents to use the target service requirement. For example, when the level of the target service requirement is higher than that of the requested service requirement, the sensing procedure for the terminal is initiated based on the target service requirement, without confirming with the AF whether the AF consents to use the target service requirement. In this case, the SF does not need to determine whether the target service requirement is the same as the requested service requirement. In other words, step 508 to step 510 are optional steps, and do not necessarily need to be performed.

In step 510, the AF sends a service requirement confirmation reply to the SF, where the service requirement confirmation reply indicates consent or non-consent to using the target service requirement.

The AF may determine, based on factors such as a service demand, whether to consent to use the target service requirement, and indicate, to the SF by using the service requirement confirmation reply, whether the AF consents to use the target service requirement.

If the service requirement confirmation reply indicates consent to using the target service requirement, step 511 and step 512 may be performed. If the service requirement confirmation reply indicates non-consent to using the target service requirement, step 513 may be performed.

In step 511, the SF initiates the sensing procedure for the terminal based on the target service requirement.

For example, step 511 may specifically include the following step 5111 and step 5112:
5111: The SF determines, based on the target service requirement, a KPI for sensing the terminal.
5112: The SF initiates the sensing procedure for the terminal based on the KPI.

The target service requirement may be the KPI, may include the KPI, or may include information for determining the KPI, for example, an identifier or a parameter corresponding to the KPI. The KPI is for describing the accuracy with which the sensing data needs to be obtained. For example, the KPI may include one or more of the following indicators: a confidence interval, positioning sensing accuracy (including vertical and horizontal), velocity sensing accuracy (including vertical and horizontal), a sensing resolution (including an area and a velocity), a maximum sensing service delay, or a refresh rate. These indicators are merely an example of the KPI. Indicators specifically included in the KPI are not limited in this application.

If the target service requirement is the KPI, or includes the KPI, the SF may directly obtain, based on the target service requirement, the KPI for sensing the terminal, and initiate the sensing procedure for the terminal.

If the target service requirement includes the information for determining the KPI, the SF may convert the target service requirement into the KPI. In other words, a possible implementation in which the SF determines, based on the target service requirement, the KPI for sensing the terminal is determining the target service requirement as the KPI for sensing the terminal, and another possible implementation is converting the target service requirement into the KPI for sensing the terminal.

In a possible implementation, the target service requirement may include an identifier corresponding to the KPI, and the SF may convert, based on the identifier in the target service requirement, the target service requirement into the KPI for sensing the terminal. In a possible implementation, a correspondence between at least one identifier and at least one KPI is pre-stored in the SF, and each KPI may include one or more indicators. The SF may find, from the prestored correspondence based on the identifier included in the target service requirement, the KPI corresponding to the identifier.

In another possible implementation, the target service requirement may alternatively include a parameter corresponding to the KPI, and the SF may convert, based on the parameter in the target service requirement, the target service requirement into the KPI for sensing the terminal. In a possible implementation, a correspondence between at least one group of parameters and at least one KPI is pre-stored in the SF, each group of parameters may include one or more parameters, and each KPI may include one or more indicators. The SF may find, from the prestored correspondence based on a group of parameters included in the target service requirement, a KPI corresponding to the group of parameters.

Conversion may be performed based on a predefined correspondence between a service requirement and a KPI. For example, the target service requirement is a specific identifier, and the SF predefines a KPI corresponding to the specified identifier. Alternatively, parameters in the sensing requirement may be translated into parameters of the KPI. For example, the parameters in the sensing requirement one-to-one correspond to the parameters of the KPI. The SF respectively determines the parameters in the sensing requirements as the corresponding parameters of the KPI. The sensing requirement may also be equivalent to the KPI. That is, the SF does not need to perform translation.

After determining the KPI, the SF may initiate the sensing procedure for the terminal based on the KPI.

That the SF initiates the sensing procedure for the terminal may be specifically that the SF selects specific sensing nodes (a transmitter and a receiver), indicates the sensing nodes to use the KPI to send a sensing signal to the terminal and receive a sensing signal from the terminal, and determines a sensing result after obtaining sensing data.

The following Table 7 shows an example of six possible sensing modes. The six sensing modes are distinguished for the transmitter and the receiver of the sensing signals, and are specifically: A RAN node performs self-sending and self-receiving; a RAN node A performs sending, and a RAN node B performs receiving; a RAN node performs sending, and a terminal performs receiving; a terminal performs sending, and a RAN node performs receiving; a terminal performs self-sending and self-receiving; and a terminal A performs sending, and a terminal B performs receiving. It can be learned that the transmitter may be a terminal or a RAN node, and the receiver may be a terminal or a RAN node.

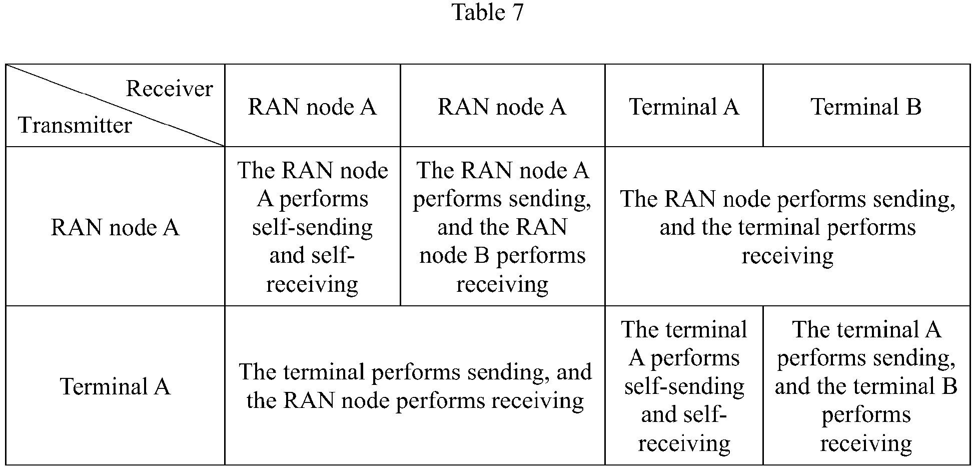

In this embodiment, the SF may use one of the sensing modes to initiate the sensing procedure for the terminal. For example, the transmitter and the receiver are determined based on the selected sensing mode, to indicate the foregoing KPI to the transmitter and the receiver.

For a specific process in which the SF initiates the sensing procedure for the terminal, refer to a conventional technology. For brevity, details are not described.

In step 512, the SF sends the sensing result to the AF.

After completing the sensing procedure for the terminal, the SF may send the sensing result to the AF via a network element like the NEF or a UPF.

In step 513, the SF sends the rejection message to the AF, where the rejection message indicates rejection of the sensing request.

If the SF determines, in step 505, that sensing of the terminal is not allowed, or receives, in step 510, the service requirement confirmation reply indicating non-consent to using the target service requirement, the SF may send the rejection message to the AF via the NEF, to reject the sensing request.

Optionally, the rejection message indicates a cause for rejecting the sensing request. For example, the cause for rejecting the sensing request may be that sensing of the terminal is not allowed or the AF does not consent to use the target service requirement. Others are not enumerated.

In a possible implementation, different causes are indicated by using different cause values, and the rejection message carries a cause value, where the cause value indicates the cause for rejecting the sensing request.

In addition, in the integrated architecture, the UDM and the SF may interact with the AF via a same NEF. Therefore, sending of the rejection message in step 504 and sending of the rejection message in step 513 may be a same sending step for the NEF.

According to the foregoing solution, when receiving the sensing request, the SF may first determine whether sensing of the terminal is allowed, and then obtain, when sensing of the terminal is allowed, the target service requirement for determining the KPI for sensing the terminal, so that the sensing procedure initiated for the terminal is adaptive to the sensing permission of the terminal, instead of blindly and directly determining, based on a service requirement requested by the AF network element, the AS, or the like, the KPI for sensing the terminal. In other words, in this application, the target service requirement may be obtained at the granularity of a terminal. Therefore, in consideration of security demands of different terminals, flexible responses are enabled based on the security demands of the different terminals, instead of blindly performing sensing based on the sensing request of the AF without distinguishing between the terminals. In addition, a correspondence between a service requirement and an area, a time period, a service type, or the like is preconfigured for each terminal, so that the SF can determine the target service requirement based on factors such as the terminal that is requested to be sensed, the location of the terminal, the time information of the sensing request, and the requested service type. In this way, a network can use different service requirements to sense the terminal in different areas, in different time periods, and with different service types, thereby providing a more flexible network exposure capability.

With reference to FIG. 5a and FIG. 5b, the foregoing shows a possible procedure of the method provided in this application. The steps shown in FIG. 5a and FIG. 5b are merely examples, and do not indicate that all steps in FIG. 5a and FIG. 5b necessarily need to be performed. For example, either step 503 or step 504 may be performed, either step 511 and step 512 or step 513 may be performed, and either step 507a or step 507b may be performed. Sequence numbers of the steps do not mean an execution sequence either, and an execution sequence of the steps should be determined based on functions and internal logic of the steps.

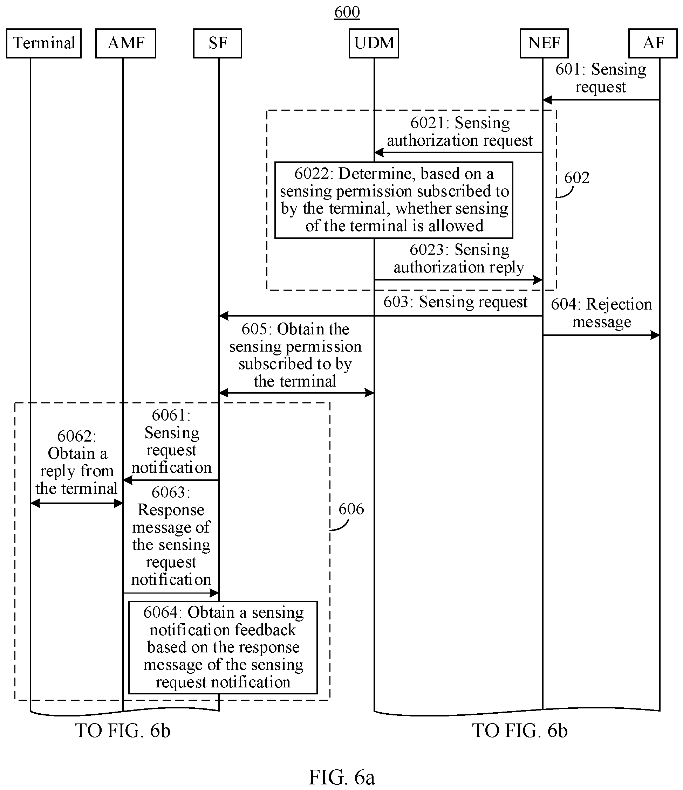

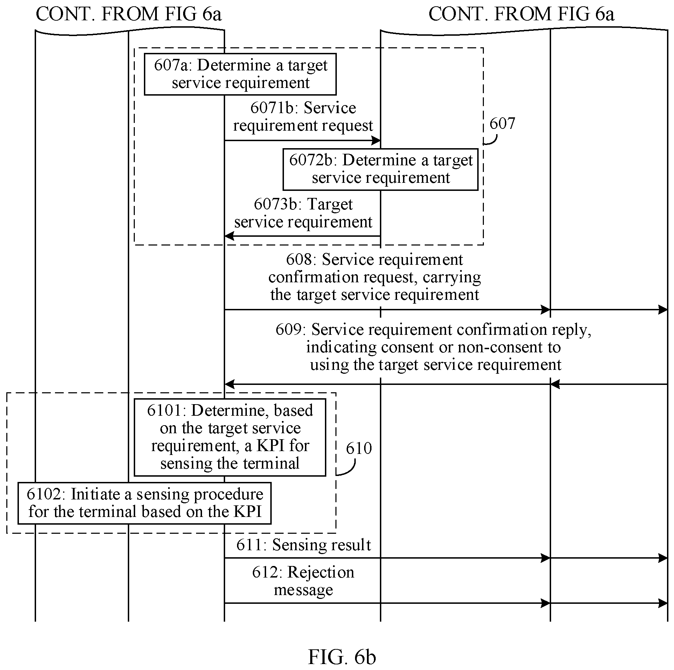

FIG. 6a and FIG. 6b are another schematic flowchart of a sensing method according to an embodiment of this application. Different from the method 500 shown in FIG. 5a and FIG. 5b, the method 600 shown in FIG. 6a and FIG. 6b provides another processing logic for obtaining a target service requirement. The following focuses on steps that are different from those in the method 500. For descriptions of steps and terms that are the same as those in the method 500, refer to the related descriptions in the foregoing method 500. Details are not described again.

As shown in FIG. 6a and FIG. 6b, the method 600 may include step 601 to step 611. The following describes the steps in the method 600 in detail.

In step 601, an AF sends a sensing request to a NEF, where the sensing request is for requesting to sense a terminal.

In step 602, the NEF obtains authorization for the sensing request from a UDM.

Optionally, step 602 specifically includes the following step 6021 to step 6023:
Step 6021: The NEF sends a sensing authorization request to the UDM, where the sensing authorization request is for requesting the UDM to authorize the sensing request.
Step 6022: The UDM determines, based on a sensing permission subscribed to by the terminal, whether sensing of the terminal is allowed.
Step 6023: The UDM sends a sensing authorization reply to the NEF, where the sensing authorization reply indicates authorization or rejection of authorizing the sensing request.

In step 603, the NEF sends a sensing request to an SF.

In step 604, the NEF sends a rejection message to the AF, where the rejection message is for rejecting the sensing request.

In step 605, the SF obtains the sensing permission subscribed to by the terminal.

A specific process of step 601 to step 605 is the same as that of step 501 to step 504 and step 506 in the method 500. Refer to the related descriptions in step 501 to step 504 and step 507 in the foregoing method 500. Details are not described again.

In step 606, the SF obtains a sensing notification feedback from the terminal. The SF may obtain the sensing notification feedback from the terminal by sending a sensing notification request. The sensing notification request is for requesting the terminal to reply with consent or non-consent to being sensed. Optionally, step 606 specifically includes: The SF sends the sensing notification request. The SF obtains the sensing notification feedback from the terminal based on a response message to the sensing notification request.

The figure shows a possible implementation of step 606 from a perspective of device interaction. For example, optionally, step 606 specifically includes the following step 6061 to step 6064:
Step 6061: The SF sends the sensing notification request to an AMF.
Step 6062: The AMF forwards the sensing notification request to the terminal, to request to obtain a reply from the terminal.
Step 6063: The SF receives the response message to the sensing notification request, where the response message to the sensing notification request indicates that the terminal replies with consent to being sensed, that the terminal replies with non-consent to being sensed, or that the terminal does not reply.
Step 6064: The SF obtains the sensing notification feedback based on the response message to the sensing notification request.

A specific process of step 606 is similar to that of step 506 in the method 500. Refer to the related descriptions in step 506 in the method 500. The SF may obtain the target service requirement without determining that sensing of the terminal is allowed. This is different from the method 500. Therefore, the SF does not need to first determine whether sensing of the terminal is allowed, but may directly perform step 607.

In step 607, the SF obtains the target service requirement.

In this embodiment of this application, that the target service requirement is related to a sensing permission of the terminal includes: The target service requirement is obtained when it is determined that sensing of the terminal is allowed, and/or the target service requirement is determined based on the sensing permission of the terminal. This embodiment mainly provides a processing procedure of determining the target service requirement based on the sensing permission of the terminal.

In other words, in this embodiment, the SF can obtain the target service requirement without determining whether sensing of the terminal is allowed. Specifically, the target service requirement is obtained based on the sensing notification feedback from the terminal and/or the sensing permission subscribed to by the terminal.

A possible implementation of step 607 is shown in step 607a: The SF determines the target service requirement.

The SF may determine the target service requirement based on the sensing permission subscribed to by the terminal and/or the sensing notification feedback from the terminal. In other words, the SF may determine the target service requirement corresponding to the sensing permission subscribed to by the terminal and/or the sensing notification feedback.

In a possible implementation, the target service requirement corresponding to the sensing permission subscribed to by the terminal and/or the sensing notification feedback from the terminal may be defined by using a mapping relationship. The mapping relationship indicates a correspondence between at least one service requirement and at least one combination of the sensing permission subscribed to by the terminal and the sensing notification feedback from the terminal. The SF may determine the target service requirement based on the foregoing mapping relationship and one or two of the sensing permission subscribed to by the terminal or the sensing notification feedback from the terminal.

Optionally, the mapping relationship includes the at least one service requirement and the at least one combination of the sensing permission subscribed to by the terminal and the sensing notification feedback. For ease of distinguishing and description, the mapping relationship is denoted as a fourth mapping relationship below.

For ease of understanding, Table 8 shows an example of the fourth mapping relationship.

**Table 8**

| Index | Subscribed sensing permission | Sensing notification feedback | Service requirement |
|---|---|---|---|
| 1 | Not allowed to be sensed | N/A | Reject the sensing request |
| 2 | Allowed to be sensed | N/A | Service requirement 1 |
| 3 | Allowed to be sensed, with a need to notify the terminal without requiring a reply from the terminal | N/A | Service requirement 1 |
| 4 | Allowed to be sensed when the terminal replies with consent or does not reply, with a need to notify the terminal | Reply with non-consent to being sensed | Reject the sensing request |
| 5 | | Reply with consent to being sensed | Service requirement 1 |
| 6 | | No reply | Service requirement 2 |
| 7 | Allowed to be sensed only when the terminal replies with consent, with a need to notify the terminal | Reply with non-consent to being sensed | Reject the sensing request |
| 8 | | Reply with consent to being sensed | Service requirement 1 |
| 9 | | No reply | Reject the sensing request |

For each terminal, the fourth mapping relationship may include one of the multiple groups of correspondences shown in Table 8.

It can be learned that, in the fourth mapping relationship shown in Table 8, the service requirement corresponds to the sensing permission subscribed to by the terminal in the two groups of correspondences corresponding to the indexes 1 and 2. Therefore, the target service requirement may be determined based on the sensing permission subscribed to by the terminal, without considering the sensing notification feedback. Although not shown in the figure, it may be understood that the fourth mapping relationship may further include a correspondence between the sensing notification feedback and the service requirement. In this case, the target service requirement may alternatively be determined based on the sensing notification feedback from the terminal, without considering the sensing permission subscribed to by the terminal.

Further, the SF may further determine the target service requirement based on a location of the terminal and/or time information. In other words, the mapping relationship includes a correspondence between the at least one service requirement and one or more of the following: the sensing permission subscribed to by the terminal, the sensing notification feedback from the terminal, an area, or a time period.

Optionally, the mapping relationship includes the at least one service requirement and at least one combination of the sensing permission subscribed to by the terminal, the sensing notification feedback, and the area. For ease of distinguishing and description, the mapping relationship is denoted as a fifth mapping relationship below.

For ease of understanding, Table 9 shows an example of the fifth mapping relationship.

**Table 9**

| Index | Area | Subscribed sensing permission | Sensing notification feedback | Service requirement |
|---|---|---|---|---|
| 1 | Area 1 | Not allowed to be sensed | N/A | Reject the sensing request |
| 2 | Area 2 | Allowed to be sensed | N/A | Service requirement 1 |
| 3 | Area 3 | Allowed to be sensed, with the need to notify the terminal without requiring a reply from the terminal | N/A | Service requirement 1 |
| 4 | Area 4 | Allowed to be sensed when the terminal replies with consent or does not reply, with the need to notify the terminal | Reply with non-consent to being sensed | Reject the sensing request |
| 5 | | | Reply with consent to being sensed | Service requirement 1 |
| 6 | | | No reply | Service requirement 2 |
| 7 | Area 5 | Allowed to be sensed only when the terminal replies with consent, with the need to notify the terminal | Reply with non-consent to being sensed | Reject the sensing request |
| 8 | | | Reply with consent to being sensed | Service requirement 1 |
| 9 | | | No reply | Reject the sensing request |

For each terminal, the fifth mapping relationship may include one or more of the multiple groups of correspondences shown in Table 9.

Optionally, the mapping relationship includes the at least one service requirement and at least one combination of the sensing permission subscribed to by the terminal, the sensing notification feedback, and the time period. For ease of distinguishing and description, the mapping relationship is denoted as a sixth mapping relationship below.

For ease of understanding, Table 10 shows an example of the sixth mapping relationship.

**Table 10**

| Index | Time period | Subscribed sensing permission | Sensing notification feedback | Service requirement |
|---|---|---|---|---|
| 1 | Time period A | Not allowed to be sensed | N/A | Reject the sensing request |
| 2 | Time period B | Allowed to be sensed | N/A | Service requirement 1 |
| 3 | Time period C | Allowed to be sensed, with the need to notify the terminal without requiring a reply from the terminal | N/A | Service requirement 1 |
| 4 | Time period D | Allowed to be sensed when the terminal replies with consent or does not reply, with the need to notify the terminal | Reply with non-consent to being sensed | Reject the sensing request |
| 5 | | | Reply with consent to being sensed | Service requirement 1 |
| 6 | | | No reply | Service requirement 2 |
| 7 | Time period E | Allowed to be sensed only when the terminal replies with consent, with the need to notify the terminal | Reply with non-consent to being sensed | Reject the sensing request |
| 8 | | | Reply with consent to being sensed | Service requirement 1 |
| 9 | | | No reply | Reject the sensing request |

For each terminal, the sixth mapping relationship may include one or more of the multiple groups of correspondences shown in Table 10.

Optionally, the mapping relationship includes the at least one service requirement and at least one combination of the sensing permission subscribed to by the terminal, the sensing notification feedback, the time period, and the area. For ease of distinguishing and description, the mapping relationship is denoted as a seventh mapping relationship below.

For ease of understanding, Table 11 shows an example of the seventh mapping relationship.

**Table 11**

| Index | Time period | Area | Subscribed sensing permission | Sensing notification feedback | Service requirement |
|---|---|---|---|---|---|
| 1 | Time period A | Area 1 | Not allowed to be sensed | N/A | Reject the sensing request |
| 2 | Time period B | Area 2 | Allowed to be sensed | N/A | Service requirement 1 |
| 3 | Time period C | Area 3 | Allowed to be sensed, with the need to notify the terminal without requiring a reply from the terminal | N/A | Service requirement 1 |
| 4 | Time period D | Area 4 | Allowed to be sensed when the terminal replies with consent or does not reply, with the need to notify the terminal | Reply with non-consent to being sensed | Reject the sensing request |
| 5 | | | | Reply with consent to being sensed | Service requirement 1 |
| 6 | | | | No reply | Service requirement 2 |
| 7 | Time period E | Area 5 | Allowed to be sensed only when the terminal replies with consent, with the need to notify the terminal | Reply with non-consent to being sensed | Reject the sensing request |
| 8 | | | | Reply with consent to being sensed | Service requirement 1 |
| 9 | | | | No reply | Reject the sensing request |

For each terminal, the seventh mapping relationship may include one or more of the multiple groups of correspondences shown in Table 11.

Further, the fourth mapping relationship, the fifth mapping relationship, the sixth mapping relationship, and the seventh mapping relationship may further correspond to a service type. In other words, the mapping relationships shown in Table 8, Table 9, Table 10, and Table 11 may be mapping relationships corresponding to a specific service type, and the fourth mapping relationship, the fifth mapping relationship, the sixth mapping relationship, and the seventh mapping relationship may further include a mapping relationship corresponding to one or more other service types. For brevity, examples are not listed in tables herein again. It may be understood that, if the foregoing mapping relationships correspond to the service type, the SF may determine a mapping relationship based on a requested service types indicated by the sensing request, and further determine the target service requirement based on the mapping relationship.

In addition, the service requirement 1 and the service requirement 2 shown in Table 8, Table 9, Table 10, and Table 11 may both be understood as default service requirements. In this embodiment, default service requirements may also be classified into multiple levels. For example, a level of the service requirement 1 is higher than that of the service requirement 2. The SF may select a service requirement as the target service requirement based on the sensing permission subscribed to by the terminal and the sensing notification feedback. For specific content of a level of a service requirement, refer to the related descriptions in step 509 in the foregoing method 500. Details are not described again.

For example, the default service requirements are classified into two levels (that is, including the service requirement 1 and the service requirement 2). In a possible design, both the service requirement 1 and the service requirement 2 may be preconfigured. In another possible design, the service requirement 1 is a requested service requirement. In other words, the service requirement 1 does not need to be preconfigured. The service requirement 2 is preconfigured. In this case, the service requirement 1 may also be referred to as the requested service requirement.

The service requirement 1 and the service requirement 2 in the tables are merely an example. The default service requirements may alternatively be classified into more levels, or may not be classified into levels. In this case, the fourth mapping relationship, the fifth mapping relationship, the sixth mapping relationship, and the seventh mapping relationship shown as examples in Table 8, Table 9, Table 10, and Table 11 may be adjusted accordingly. For brevity, examples are not listed in tables herein again.

It may be understood that levels are not distinguished for the default service requirements, so that the processing on a network side is simpler. Multiple levels are defined for the default service requirements, so that the network side can select service requirements in a flexible manner based on different sensing notification feedbacks of the terminal, to consider both a security demand of the terminal and a service demand of the AF can be considered, and provide good use experience.

It should be further noted that, in the method 600, the SF does not determine, in advance, whether sensing of the terminal is allowed, and the terminal may reply with non-consent to being sensed. That is, sensing of the terminal is not allowed. Therefore, in the fourth mapping relationship, the fifth mapping relationship, the sixth mapping relationship, and the seventh mapping relationship respectively shown in Table 8, Table 9, Table 10, and Table 11, a service requirement corresponding to some combinations of the sensing permission subscribed to by the terminal and the sensing notification feedback may be defined as rejecting the sensing request, or may be set to a predefined value (for example, "0" or "null (NULL)"), to indicate rejection of the sensing request. These combinations may include: The sensing permission subscribed to by the terminal is "not allowed to be sensed", and the sensing notification feedback is "N/A"; the sensing permission subscribed to by the terminal is "allowed to be sensed when the terminal replies with consent or does not reply, with the need to notify the terminal; while not allowed to be sensed when the terminal replies with non-consent, with the need to notify the terminal", and the sensing notification feedback is "replying with non-consent to being sensed"; the sensing permission subscribed to by the terminal is "not allowed to be sensed when the terminal replies with non-consent or does not reply, with the need to notify the terminal; while allowed to be sensed when the terminal replies with consent, with the need to notify the terminal", and the sensing notification feedback is "replying with non-consent to being sensed".

A process in which the SF determines the target service requirement is described below by using examples based on the fourth mapping relationship, the fifth mapping relationship, and the sixth mapping relationship separately.

In an implementation, the SF determines the target service requirement based on the sensing notification feedback from the terminal, the sensing permission subscribed to by the terminal, and the fourth mapping relationship.

The fourth mapping relationship shown in Table 8 is used as an example.

For example, if the sensing permission subscribed to by the terminal is not allowed to be sensed, the SF may determine to reject the sensing request.

For another example, the sensing permission subscribed to by the terminal is allowed to be sensed when the terminal replies with consent or does not reply, with the need to notify the terminal. If the sensing notification feedback from the terminal indicates that the terminal does not reply, the SF may determine that the target service requirement is the service requirement 2.

For still another example, the sensing permission subscribed to by the terminal is allowed to be sensed only when the terminal replies with consent, with the need to notify the terminal. If the sensing notification feedback from the terminal is that the terminal replies with consent to being sensed, the SF may determine that the target service requirement is the service requirement 1.

In another implementation, the SF determines the target service requirement based on the sensing notification feedback from the terminal, the sensing permission subscribed to by the terminal, the location of the terminal, and the fifth mapping relationship. The location of the terminal may be obtained by initiating a positioning procedure for the terminal.

The fifth mapping relationship shown in Table 9 is used as an example.

For example, if the location of the terminal belongs to the area 2, the sensing permission subscribed to by the terminal in the area 2 is allowed to be sensed, and the SF may determine that the target service requirement is the service requirement 1.

For another example, if the location of the terminal belongs to the area 4, the sensing permission subscribed to by the terminal in the area 4 is allowed to be sensed when the terminal replies with consent or does not reply, with the need to notify the terminal. If the sensing notification feedback from the terminal is that the terminal does not reply, the SF may determine that the target service requirement is the service requirement 2.

In still another implementation, the SF determines the target service requirement based on the sensing notification feedback from the terminal, the sensing permission subscribed to by the terminal, time information of the sensing request, and the sixth mapping relationship. The location of the terminal may be obtained by initiating a positioning procedure for the terminal. The time information of the sensing request may indicate: time at which the AF initiates the sensing request or time at which the SF receives the sensing request.

The sixth mapping relationship shown in Table 10 is used as an example.

For example, if the time at which the SF receives the sensing request belongs to a time period C, the sensing permission subscribed to by the terminal in the time period C is allowed to be sensed, with the need to notify the terminal without requiring a reply from the terminal, and the SF may determine that the target service requirement is the service requirement 1.

For another example, if the time at which the SF receives the sensing request belongs to a time period E, the sensing permission subscribed to by the terminal in the time period E is allowed to be sensed only when the terminal replies with consent, with the need to notify the terminal. If the terminal does not reply, the SF may determine that the target service requirement is rejecting the sensing request.

The seventh mapping relationship in Table 11 is used as an example.

For example, if the time at which the SF receives the sensing request belongs to the time period C, and the location of the terminal belongs to the area 3, the sensing permission that is subscribed to by the terminal and that corresponds to the time period C and the area 3 is allowed to be sensed, with the need to notify the terminal without requiring a reply from the terminal, and the SF may determine that the target service requirement is the service requirement 1.

For another example, if the time at which the SF receives the sensing request belongs to the time period E, and the location of the terminal belongs to the area 5, the sensing permission that is subscribed to by the terminal and that correspond to the time period E and the area 5 is allowed to be sensed only when the terminal replies with consent, with the need to notify the terminal. If the terminal does not reply, the SF may determine that the target service requirement is rejecting the sensing request.

The foregoing examples, provided based on the fourth mapping relationship, the fifth mapping relationship, the sixth mapping relationship, and the seventh mapping relationship shown in Table 8, Table 9, Table 10, and Table 11, of the process in which the SF determines the target service requirement are merely used as examples, and should not constitute any limitation on this application.

Optionally, the method further includes: The SF obtains the mapping relationship for determining the target service requirement.

The mapping relationship may be configured in the SF, or may be preconfigured in the UDM. Correspondingly, the SF may locally obtain the mapping relationship, or may obtain the mapping relationship from the UDM.

A possible implementation in which the SF locally obtains the mapping relationship is that the mapping relationship may be manually stored in a memory of the SF, or may be sent to the SF in advance by using the AF, and the SF stores the received mapping relationship in the memory. That the SF locally obtains the mapping relationship may be specifically obtaining the mapping relationship from the memory.

Several possible implementations in which the SF obtains the mapping relationship from the UDM are as follows: For example, in step 6023a, the UDM may send the sensing authorization reply that carries the sensing permission subscribed to by the terminal and the mapping relationship, so that in step 603, the NEF may send the sensing permission subscribed to by the terminal and the mapping relationship to the SF via the sensing request. In this case, the SF may obtain, by using step 6023a and step 603, the mapping relationship for determining the target service requirement. For another example, in step 606, when obtaining, from the UDM, the sensing permission subscribed to by the terminal, the SF may also obtain the mapping relationship. In this case, the SF may obtain, by using step 605, the mapping relationship for determining the target service requirement. Certainly, the SF may alternatively request the mapping relationship from the UDM by using additional signaling. This is not limited in this application.

Another possible implementation of step 607 is shown in step 607b. The SF requests the target service requirement from the UDM.

For example, step 607b may specifically include the following step 6071b to step 6073b:
6071b: The SF sends a service requirement request to the UDM, where the service requirement request carries the sensing notification feedback from the terminal.
6072b: The UDM determines the target service requirement based on the service requirement request.
6073b: The UDM sends the target service requirement to the SF.

The service requirement request sent by the SF to the UDM carries the sensing notification feedback from the terminal. This is different from step 507b in the method 500. In other words, the service requirement request is not necessarily sent when sensing of the terminal is allowed, and the service requirement request does not indicate that sensing of the terminal is allowed. The UDM may determine the target service requirement based on the sensing notification feedback from the terminal, the sensing permission subscribed to by the terminal, and a mapping relationship.

A specific process in which the UDM determines the target service requirement based on the sensing notification feedback from the terminal, the sensing permission subscribed to by the terminal, and the mapping relationship is similar to the specific process in which the SF determines the target service requirement based on the sensing notification feedback from the terminal, the sensing permission subscribed to by the terminal, and the mapping relationship. For example, the target service requirement may be determined based on the sensing notification feedback from the terminal, the sensing permission subscribed to by the terminal, and a fourth mapping relationship, may be determined based on the sensing notification feedback from the terminal, the sensing permission subscribed to by the terminal, a location of the terminal, and a fifth mapping relationship, or may be determined based on the sensing notification feedback from the terminal, the sensing permission subscribed to by the terminal, time information, and a sixth mapping relationship, where the time information may be time information of the sensing request, and may indicate time at which the AF initiates the sensing request or time at which the SF receives the sensing request; or may be time information of the service requirement request, and may indicate time at which the SF sends the service requirement request or time at which the UDM receives the service requirement request.

For more specific content of determining, by the UDM, the target service requirement based on the sensing notification feedback from the terminal, the sensing permission subscribed to by the terminal, and the mapping relationship, refer to the related descriptions in step 607a. Details are not described again.

Certainly, the UDM may alternatively determine, based on the sensing permission subscribed to by the terminal and/or the sensing notification feedback, whether sensing of the terminal is allowed, and determine the target service requirement when sensing of the terminal is allowed. In this case, the UDM may use a manner similar to that in step 607a, that is, determine the target service requirement based on the sensing permission subscribed to by the terminal and the sensing notification feedback, or may determine the target service requirement based on the time information and/or location information; or may use a manner like that in step 5082b in the method 500, that is, determine a default service requirement as the target service requirement, determine a requested service requirement as the target service requirement, or determine the target service requirement based on the time information and/or location information. This is not limited in this application.

It may be understood that, if the target service requirement obtained by the SF is rejecting the sensing request, step 608 to step 611 may be skipped, to directly perform step 612: The SF sends a rejection message.

In step 608, the SF sends a service requirement confirmation request to the AF, where the service requirement confirmation request is for requesting to use the target service requirement.

In step 609, the AF sends a service requirement confirmation reply to the SF, where the service requirement confirmation reply indicates consent or non-consent to using the target service requirement.

In step 610, the SF initiates a sensing procedure for the terminal based on the target service requirement.

In step 611, the SF sends a sensing result to the AF.

In step 612, the SF sends the rejection message to the AF, where the rejection message indicates rejection of the sensing request.

For a specific process of step 608 to step 612, refer to the related descriptions in step 509 to step 513 in the foregoing method 500. Details are not described again.

It may be understood that, when the target service requirement is different from the requested service requirement, the SF may alternatively initiate the sensing procedure for the terminal based on the target service requirement, without confirming with the AF whether the AF consents to use the target service requirement. In this case, the SF does not need to determine whether the target service requirement is the same as the requested service requirement. In other words, step 609 and step 610 are optional steps, and do not necessarily need to be performed.

According to the foregoing solution, when receiving the sensing request, the SF may first obtain the sensing notification feedback from the terminal, and then obtain the target service requirement for a KPI for sensing the terminal, so that the sensing procedure initiated for the terminal is adaptive to the sensing permission of the terminal, instead of blindly and directly determining, based on a service requirement requested by the AF network element, an AS, or the like, the KPI for sensing the terminal. In other words, this application may be related to the sensing permission of the terminal, and the target service requirement is obtained at the granularity of a terminal. Therefore, on the network side, in consideration of security demands of different terminals, flexible responses to the sensing request are enabled based on the security demands of the different terminals, instead of blindly performing sensing based on the sensing request of the AF without distinguishing between the terminals. In addition, a correspondence between a service requirement and an area, a time period, a service type, or the like is preconfigured for each terminal, so that the SF can determine the target service requirement based on factors such as the terminal that is requested to be sensed, the location of the terminal, the time information of the sensing request, and the requested service type. In this way, a network can use different service requirements to sense the terminal in different areas, in different time periods, and with different service types, thereby providing a more flexible network exposure capability.

With reference to FIG. 6a and FIG. 6b, the foregoing shows a possible procedure of the method provided in this application. The steps shown in FIG. 5a and FIG. 5b are merely examples, and do not indicate that all steps in FIG. 6a and FIG. 6b necessarily need to be performed. For example, either step 603 or step 604 may be performed, either step 610 and step 611 or step 612 may be performed, and either step 607a or step 607b may be performed. Sequence numbers of the steps do not mean an execution sequence either, and an execution sequence of the steps should be determined based on functions and internal logic of the steps.

It can be learned from the foregoing methods shown in FIG. 5a, FIG. 5b, FIG. 6a, and FIG. 6b that the target service requirement may be determined when sensing of the terminal is allowed, or may be determined based on the sensing permission subscribed to by the terminal and the sensing notification feedback from the terminal. Whether sensing of the terminal is allowed is determined based on the sensing permission subscribed to by the terminal and/or the sensing notification feedback, and whether sensing of the terminal is allowed may be indicated by the sensing permission of the terminal. Therefore, in general, the target service requirement is related to the sensing permission of the terminal.

In the procedures shown in FIG. 5a, FIG. 5b, FIG. 6a, and FIG. 6b, the foregoing uses interaction between the AF, the NEF, the UDM, the SF, the terminal, and the like as an example to describe the sensing methods provided in this application. However, this should not constitute any limitation on this application. In another possible architecture, a network side may include a sensing server (also referred to as a sensing server side), and a sensing client (sensing client) may be installed on a terminal. The sensing server may be understood as a sensing service platform provided by a network and located at an upper layer of a protocol stack, and the sensing client may be understood as a sensing service platform, in UE, located at an upper layer of a protocol stack. User plane interaction may be implemented between the sensing server and the sensing client. The sensing server may be considered as a function network element configured to connect to an external application (for example, an AF or an AS), and user plane interaction may also be implemented between the sensing server and the AS. Considering that the network may provide multiple sensing functions, and a sensing request of an application may involve multiple or multiple times of sensing functions provided by the network, to avoid a case in which the external application (for example, the AF or the AS) needs to splitting a sensing request thereof into the multiple or the multiple times of sensing functions provided by the network for requesting, the network may use the sensing server to proxy the sensing request of the application and the multiple or the multiple times of sensing functions provided by the network. Specifically, the sensing server is configured to receive a sensing requirement of the external application (the AF or the AS), further interact with the network and the UE based on the sensing requirement, and feed back a sensing result.

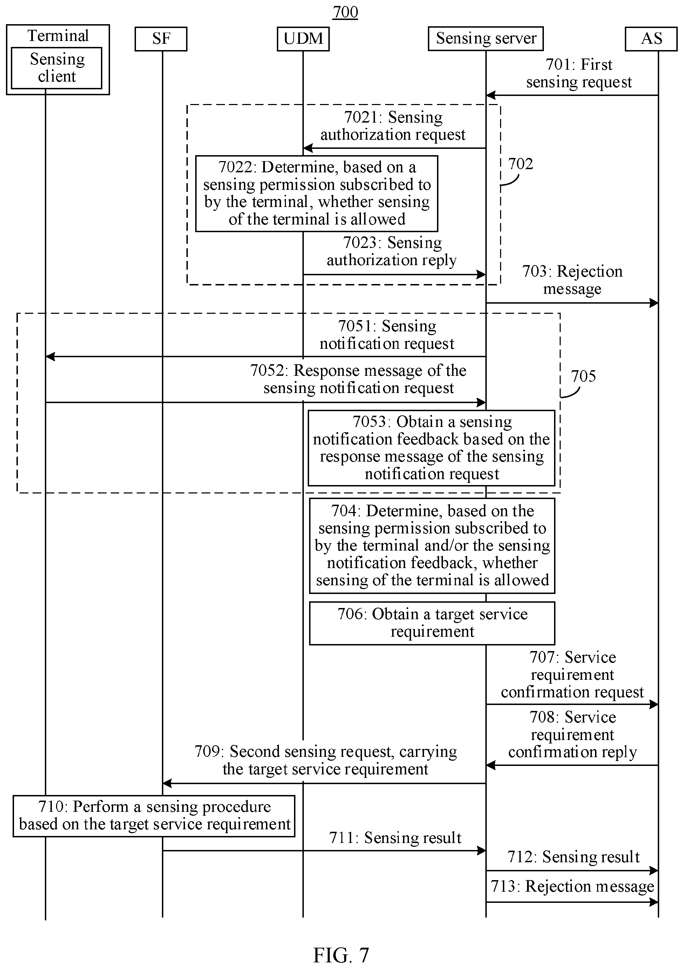

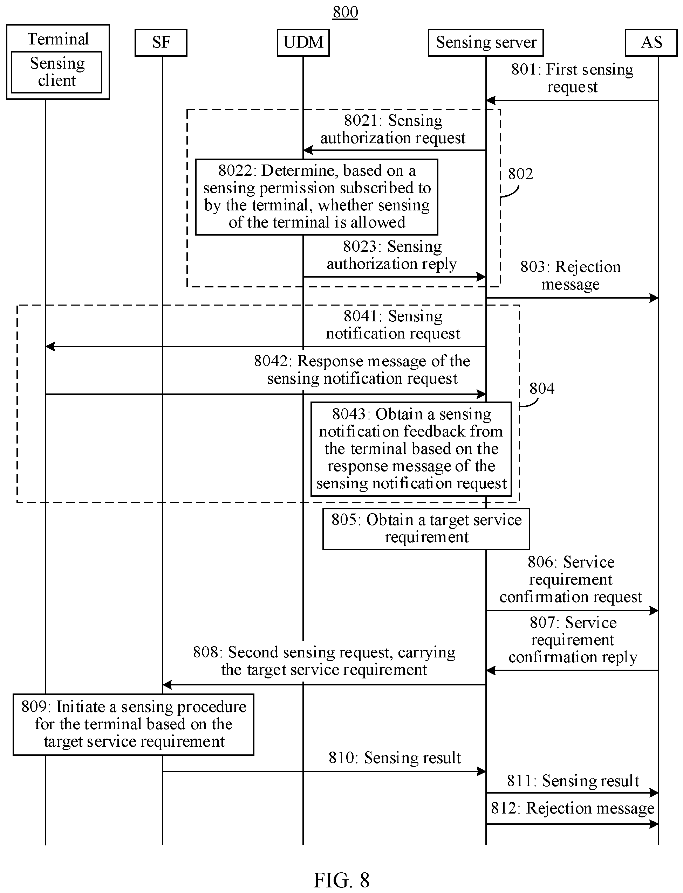

In embodiments of this application, the sensing server may be configured to implement some functions of the SF in the procedure shown in FIG. 5a and FIG. 5b, or FIG. 6a and FIG. 6b, and the sensing client may be configured to implement functions of the terminal in the procedure shown in FIG. 5a and FIG. 5b, or FIG. 6a and FIG. 6b. For ease of understanding, the following provides descriptions with reference to FIG. 7 and FIG. 8.

FIG. 7 is still another schematic flowchart of a sensing method according to an embodiment of this application. A processing procedure in FIG. 7 is similar to that of the method 500 shown in FIG. 5a and FIG. 5b. For descriptions of steps that are the same as or similar to those in the method 500 and terms that are the same as those in the method 500, refer to the related descriptions in the foregoing method 500. Details are not described again.

As shown in FIG. 7, the method 700 may include step 701 to step 713. The following describes the steps in the method 700 in detail.

In step 701, an AS sends a first sensing request to a sensing server, where the first sensing request is for requesting to sense a terminal.

The AS may perform user plane interaction with the sensing server. Therefore, the first sensing request is a user plane message. For example, the first sensing request carries an external identifier of the terminal and one or more of the following: an identifier of the AS, a requested service requirement, or a requested service type.

A process in which the AS sends the first sensing request to the sensing server is similar to the process in which the AF sends the sensing request to the NEF in step 501 in the foregoing method 500. For details, refer to the related descriptions in step 501 in the foregoing method 500. Details are not described again.

In step 702, the sensing server obtains authorization for the sensing request from a UDM.

For example, step 702 may include the following step 7021 to step 7023:
Step 7021: The sensing server sends a sensing authorization request to the UDM, where the sensing authorization request is for requesting the UDM to authorize the first sensing request, or is for requesting the UDM to perform an authorization check on the first sensing request.
Step 7022: The UDM determines, based on a sensing permission subscribed to by the terminal, whether sensing of the terminal is allowed.
Step 7023: The UDM sends a sensing authorization reply to the sensing server, where the sensing authorization reply indicates authorization or rejection of authorizing the first sensing request.

If the sensing authorization reply indicates rejection of authorizing the first sensing request, step 703 may be performed; or if the sensing authorization reply indicates authorization for the first sensing request, a part of step 704 to step 713 may be performed.

Optionally, when the sensing authorization reply indicates authorization for the first sensing request, the sensing authorization reply may further carry one or more of the following: an SUPI of the terminal, the sensing permission subscribed to by the terminal, or a mapping relationship for determining a target service requirement.

Optionally, when the sensing authorization reply indicates rejection of authorizing the first sensing request, the sensing authorization reply may further indicate a cause of the rejection.

For more detailed descriptions of step 702, refer to the related content in step 502 in the method 500. Details are not described again.

In step 703, the sensing server sends a rejection message to the AS.

A specific process in which the sensing server sends the rejection message to the AS is similar to the specific process in which the NEF sends the rejection message to the AF in step 503 in the method 500. Refer to the related descriptions in step 503 in the method 500. Details are not described again.

In step 704, the sensing server determines whether sensing of the terminal is allowed.

A specific process in which the sensing server determines whether sensing of the terminal is allowed is similar to that of step 505 in the method 500. Refer to the related descriptions in step 505 in the foregoing method 500. Details are not described again.

Optionally, the method further includes step 705: The sensing server obtains a sensing notification feedback from the terminal.

The sensing server may obtain the sensing notification feedback by sending a sensing notification request. The sensing notification request is for requesting the terminal to reply with consent or non-consent to being sensed. Optionally, step 705 specifically includes: The sensing server sends the sensing notification request. The sensing server obtains the sensing notification feedback based on a response message to the sensing notification request.

The sensing server may perform user plane interaction with a sensing client installed on the terminal, without an AMF and a RAN node. This is different from the method 500 and the method 600. Therefore, the sensing server may send the sensing notification request to the sensing client, and receive the response message to the sensing notification request from the sensing client.

The figure shows a possible implementation of step 705 from a perspective of device interaction. For example, step 705 includes the following step 7051 to step 7054:
Step 7051: The sensing server sends the sensing notification request to the sensing client.
Step 7052: The sensing client sends the response message to the sensing notification request to the sensing server, where the response message to the sensing notification request indicates that the terminal replies with consent to being sensed, that the terminal replies with non-consent to being sensed, or that the terminal does not reply.
Step 7053: The sensing server obtains the sensing notification feedback based on the response message to the sensing notification request.

For example, after receiving the sensing notification request sent by the sensing server, the sensing client may send the sensing notification request to an operating system (operating system, OS), to request the OS to obtain and feed back a reply from the user. After obtaining the reply from the user, an OS side may reply to the sensing notification request, for example, reply with consent to being sensed or non-consent to being sensed, or may not reply when no reply from the user is obtained.

In a possible case, the sensing client may receive a reply from the OS side, or may not receive the reply from the OS side. The sensing client may send the response message to the sensing notification request to the sensing server, to indicate that the terminal replies with consent to being sensed, indicate that the terminal replies with non-consent to being sensed, or indicate that the terminal does not reply. The sensing server may obtain the sensing notification feedback based on the response message, to the sensing notification request, from the sensing client, and further determine, based on the sensing permission subscribed to by the terminal and the sensing notification feedback, whether sensing of the terminal is allowed.

In another possible case, when receiving a reply from the OS side, the sensing client may indicate, by using the response message, to the sensing notification request, sent to the sensing server, that the terminal replies with consent to being sensed or the terminal replies with non-consent to being sensed. Alternatively, the sensing client may not obtain a reply from the OS side. In this case, the sensing client does not send the response message to the sensing notification request to the sensing server. The sensing server may determine, based on expiration of a local timer, that the terminal does not reply. In other words, step 7052 is not necessarily performed. That the sensing server may obtain the sensing notification feedback based on the response message, to the sensing notification request, from the sensing client may specifically include: The sensing server may obtain the sensing notification feedback based on information indicated by the response message, to the sensing notification request, from the sensing client, or depending on whether the response message, to the sensing notification request, from the sensing client is received.

For more detailed descriptions of step 705, refer to the related content in step 506 in the method 500. Details are not described again.

In step 706, the sensing server obtains the target service requirement.

Optionally, step 706 includes: The sensing server determines the target service requirement.

In a possible design, a service requirement may be pre-stored in an SF, and the service requirement may be referred to as a default (default) service requirement. The SF may directly determine the target service requirement when sensing of the terminal is allowed.

In another possible design, the sensing request may carry the requested service requirement, and the SF may determine the requested service requirement as the target service requirement when sensing of the terminal is allowed. In other words, the SF may define a default service requirement as the requested service requirement, and does not preconfigure the default service requirement.

In still another possible design, the target service requirement may be determined based on time information of the first sensing request and/or a location of the terminal. In other words, the sensing server may determine the target service requirement based on the time information of the first sensing request and/or the location of the terminal.

A possible implementation in which the sensing server determines the target service requirement based on the time information of the first sensing request and/or the location of the terminal is as follows: The sensing server determines the target service requirement based on a first mapping relationship and the time information of the first sensing request, where the first mapping relationship may include a correspondence between at least one service requirement and at least one time period.

Another possible implementation in which the sensing server determines the target service requirement based on the time information of the first sensing request and/or the location of the terminal is as follows: The sensing server determines the target service requirement based on the location of the terminal and a second mapping relationship, where the second mapping relationship includes a correspondence between at least one service requirement and at least one area.

Still another possible implementation of a possible implementation in which the sensing server determines the target service requirement based on the time information of the first sensing request and/or the location of the terminal is as follows: The sensing server determines the target service requirement based on the time information of the first sensing request, the location of the terminal, and a third mapping relationship, where the third mapping relationship includes a correspondence between at least one service requirement and at least one combination of an area and a time period.

For more detailed descriptions of determining, by the sensing server, the target service requirement based on the time information of the first sensing request and/or the location of the terminal, refer to the related content in step 508a in the method 500. Details are not described again.

Optionally, step 706 includes: The sensing server obtains the target service requirement from the UDM.

A specific process in which the sensing server obtains the target service requirement from the UDM is similar to the specific process in which the SF obtains the target service requirement from the UDM in step 508b in the foregoing method 500. Refer to the related descriptions in step 805b. Details are not described again.

For more detailed descriptions of step 706, refer to the related content in step 508 in the method 500. Details are not described again.

In step 707, the sensing server sends a service requirement confirmation request to the AS, where the service requirement confirmation request is for requesting to use the target service requirement.

In step 708, the AS sends a service requirement confirmation reply to the sensing server, where the service requirement confirmation reply indicates consent or non-consent to using the target service requirement.

A specific process of step 707 and step 708 is similar to that of step 509 and step 510 in the method 500. Refer to the related descriptions in step 509 and step 510 in the method 500. Details are not described again.

It may be understood that if the service requirement confirmation reply indicates consent to using the target service requirement, step 709 to step 712 may be performed. If the service requirement confirmation reply indicates non-consent to using the target service requirement, step 713 may be performed.

In step 709, the sensing server sends a second sensing request to the SF, where the second sensing request carries the target service requirement.

The sensing server may send the second sensing request to the SF when the AS consents to use the target service requirement, where the second sensing request carries the target service requirement.

The sensing server may process the first sensing request received in step 701, to obtain a second sensing requirement. For example, the sensing server may replace the external identifier of the terminal in the first sensing request with the SUPI of the terminal, and may include the target service requirement in the second sensing request. In other words, the second sensing request carries the SUPI of the terminal, the target service requirement, and one or two of the following: the identifier of an AS or the requested service type.

In step 710, the SF initiates a sensing procedure for the terminal based on the target service requirement.

After receiving the second sensing request, the SF may initiate the sensing procedure for the terminal based on the target service requirement carried in the second sensing request.

For specific content of initiating, by the SF, the sensing procedure for the terminal based on the target service requirement, refer to the related descriptions in step 511 in the method 500. Details are not described again.

In step 711, the SF sends a sensing result to the sensing server.

After completing the sensing procedure for the terminal, the SF may send the sensing result to the sensing server.

In step 712, the sensing server sends the sensing result to the AS.

The sensing server may send the sensing result to the AS by using a user plane.

In step 713, the sensing server sends a rejection message to the AS.

The sensing server may send the rejection message to the AS by using a user plane.

A specific process of step 711 to step 713 is similar to that of step 512 and step 513 in the method 500. Refer to the related descriptions in step 512 and step 513 in the method 500. Details are not described again.

With reference to FIG. 7, the foregoing shows another possible procedure of the method provided in this application. The steps shown in FIG. 7 are merely examples, and do not indicate that all steps in FIG. 7 necessarily need to be performed. For example, either step 703 or step 704 may be performed, and either step 709 to step 712 or step 713 may be performed. Sequence numbers of the steps do not mean an execution sequence either, and an execution sequence of the steps should be determined based on functions and internal logic of the steps.

It should be understood that the method 700 and the method 500 have same processing logic. Therefore, the method 700 has a technical effect similar to that of the method 500. Details are not described again.

FIG. 8 is yet another schematic flowchart of a sensing method according to an embodiment of this application. A processing procedure of the method 800 shown in FIG. 8 is similar to that of the method 600 shown in FIG. 6a and FIG. 6b, and the method 800 shown in FIG. 8 and the method 700 shown in FIG. 7 are applicable to a same network architecture. For descriptions of steps that are the same as or similar to those in the method 600 or 700 and terms that are the same as those in the method 600 or 700, refer to the related descriptions in the foregoing method 600 or 700. A processing procedure of the method 700 is similar to that of the method 500 in FIG. 5a and FIG. 5b. For descriptions of steps that are the same as or similar to those in the method 500 and terms that are the same as those in the method 500, also refer to the related descriptions in the foregoing method 500. Details are not described again.

As shown in FIG. 8, the method 800 may include step 801 to step 813. The following describes the steps in the method 800 in detail.

In step 801, an AS sends a first sensing request to a sensing server, where the first sensing request is for requesting to sense a terminal.

In step 802, the sensing server obtains authorization for the sensing request from a UDM.

The sensing server may obtain the authorization of the UDM for the first sensing request by sending a sensing authorization request to the UDM. The UDM may indicate the authorization or rejection of authorizing the first sensing request by using a sensing authorization reply. When the sensing authorization reply indicates the rejection of the authorization, step 803 may be performed. When the sensing authorization reply indicates authorization, a part of step 804 to step 813 may be performed.

In step 803, the sensing server sends a rejection message to the AS.

A specific process of step 801 to step 803 is the same as that of step 701 to step 703 in the method 700, and the specific process of step 701 to step 703 in the method 700 is similar to that of step 501 to step 503 in the method 500. Therefore, refer to the related descriptions in step 501 to step 503 in the method 500 and step 701 to step 703 in the method 700. Details are not described again.

In step 804, the sensing server obtains a sensing notification feedback from the terminal.

The sensing server may obtain the sensing notification feedback from the terminal by sending a sensing notification request. The sensing notification request is for requesting the terminal to reply with consent or non-consent to being sensed. Optionally, step 804 specifically includes: The sensing server sends the sensing notification request. The sensing server obtains the sensing notification feedback from the terminal based on a response message to the sensing notification request.

The sensing server may perform user plane interaction with a sensing client installed on the terminal, without an AMF and a RAN node. This is different from the method 500 and the method 600. Therefore, the sensing server may send the sensing notification request to the sensing client, and receive the response message to the sensing notification request from the sensing client.

The figure shows a possible implementation of step 804 from a perspective of device interaction. For example, step 804 includes the following step 8041 to step 8043:
Step 8041: The sensing server sends the sensing notification request to the sensing client.
Step 8042: The sensing client sends the response message to the sensing notification request to the sensing server, where the response message to the sensing notification request carries the sensing notification feedback.
Step 8043: The sensing server obtains the sensing notification feedback based on the response message to the sensing notification request.

For more detailed descriptions of step 804, refer to the related content in step 704 in the method 700. Details are not described again.

The sensing server may obtain the target service requirement without determining that sensing of the terminal is allowed. This is different from the method 700. Therefore, the sensing server does not need to first determine whether sensing of the terminal is allowed, but directly performs step 805.

In step 805, the sensing server obtains the target service requirement.

In an implementation, the sensing server may determine the target service requirement based on a sensing permission subscribed to by the terminal and/or the sensing notification feedback from the terminal. In another implementation, the sensing server may send a service requirement request to the data management function network element, where the service requirement request carries the sensing notification feedback from the terminal. The data management function network element may determine the target service requirement based on a sensing permission subscribed to by the terminal and/or the sensing notification feedback from the terminal.

Further, the target service requirement may be further determined based on a location of the terminal and/or time information. If the target service requirement is requested to be obtained by the sensing server by sending the service requirement request to the data management function network element, correspondingly, the service requirement request carries location information and/or the time information.

During specific implementation, the sensing server or the data management function network element may determine the target service requirement based on a mapping relationship and one or more of the following: the sensing permission subscribed to by the terminal, the sensing notification feedback, a time period, or an area.

A specific process in which the sensing server obtains the target service requirement is similar to that of step 607 in the method 600. Refer to the related descriptions in step 607 in the foregoing method 600. Details are not described again. In step 806, the sensing server sends a service requirement confirmation request to the AS, where the service requirement confirmation request is for requesting to use the target service requirement.

In step 807, the AS sends a service requirement confirmation reply to the sensing server, where the service requirement confirmation reply indicates consent or non-consent to using the target service requirement.

In step 808, the sensing server sends a second sensing request to an SF, where the second sensing request carries the target service requirement.

In step 809, the SF initiates a sensing procedure for the terminal based on the target service requirement.

After receiving the second sensing request, the SF may initiate the sensing procedure for the terminal based on the target service requirement carried in the second sensing request.

For specific content of initiating, by the SF, the sensing procedure for the terminal based on the target service requirement, refer to the related descriptions in step 511 in the method 500. Details are not described again.

In step 810, the SF sends a sensing result to the sensing server.

After completing the sensing procedure for the terminal, the SF may send the sensing result to the sensing server.

In step 811, the sensing server sends the sensing result to the AS.

The sensing server may send the sensing result to the AS by using a user plane.

In step 812, the sensing server sends a rejection message to the AS.

The sensing server may send the rejection message to the AS by using a user plane.

A specific process of step 806 to step 812 is the same as that of step 707 to step 713 in the method 700. Refer to the related descriptions in step 707 to step 713 in the method 700. Details are not described again.

With reference to FIG. 8, the foregoing shows another possible procedure of the method provided in this application. The steps shown in FIG. 8 are merely examples, and do not indicate that all steps in FIG. 8 necessarily need to be performed. For example, either step 803 or step 804 to step 812 may be performed, and either step 808 to step 811 or step 812 may be performed. Sequence numbers of the steps do not mean an execution sequence either, and an execution sequence of the steps should be determined based on functions and internal logic of the steps.

It should be understood that the method 800 and the method 600 have same processing logic. Therefore, the method 800 has a technical effect similar to that of the method 600. Details are not described again.

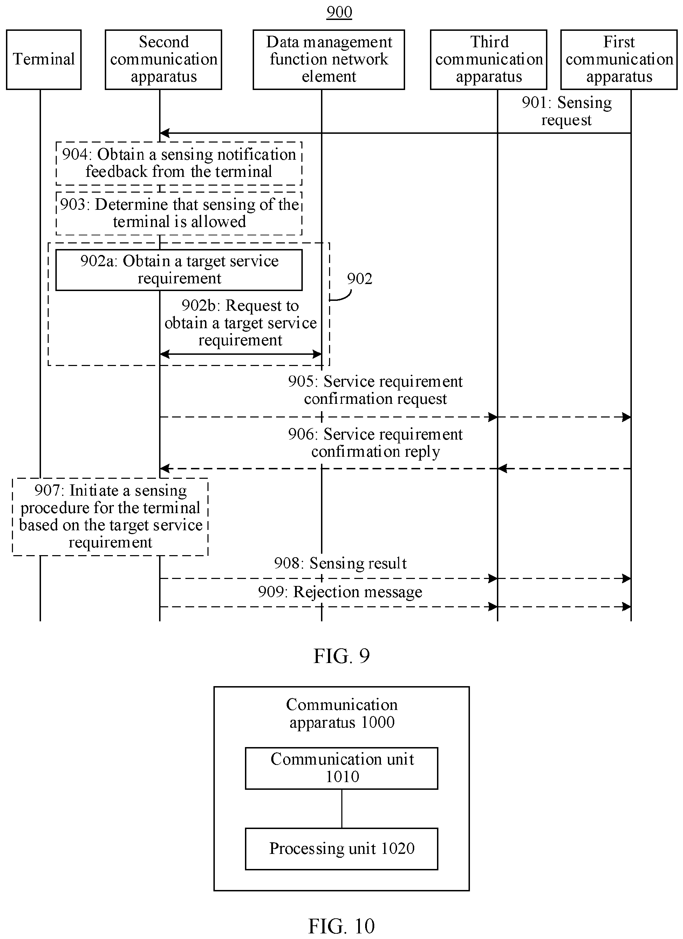

With reference to FIG. 5a to FIG. 8, the foregoing shows several possible procedures of the sensing methods provided in this application as examples. It is not difficult to learn that, in the embodiments shown in FIG. 5a to FIG. 8, the second communication apparatus (for example, the SF in FIG. 5a, FIG. 5b, FIG. 6a, and FIG. 6b or the sensing server in FIG. 7 and FIG. 8) may obtain the target service requirement after receiving the sensing request, and the target service requirement is related to the sensing permission of the terminal that is requested to be sensed. For ease of understanding, with reference to FIG. 9, the following briefly describes the sensing method provided in this application.

FIG. 9 is yet another schematic flowchart of a sensing method according to an embodiment of this application. FIG. 9 shows the method from a perspective of device interaction. As shown in FIG. 9, the method 900 includes step 901 to step 909.

The following describes the steps in the method 900 in detail.

In step 901, a second communication apparatus receives a sensing request.

The sensing request may be sent by a first communication apparatus and forwarded by a third communication apparatus to the second communication apparatus, for example, is sent by an AF to a NEF (namely, an example of the third communication apparatus), and then forwarded by the NEF to an SF. The third communication apparatus may process the sensing request and then forward a processed sensing request, or may directly forward the sensing request without processing. This is not limited in this application.

Alternatively, the sensing request may be directly sent by a first communication apparatus to the second communication apparatus, for example, be sent by an AS to a sensing server.

For example, the sensing request may carry an external identifier of a terminal that is requested to be sensed and one or more of the following: an identifier of the AF, a requested service type, a requested service requirement, or time information of the sensing request.

Step 901 may correspond to step 501 to step 503 in the method 500, step 601 to step 603 in the method 600, step 701 in the method 700, or step 801 in the method 800. Therefore, for a specific process of step 901, refer to the related descriptions in the corresponding step in the method 500, the method 600, the method 700, or the method 800. Details are not described again.

In step 902, the second communication apparatus obtains a target service requirement, where the target service requirement is related to a sensing permission of the terminal.

That the target service requirement is related to the sensing permission of the terminal includes: The target service requirement is obtained when it is determined that sensing of the terminal is allowed, and/or the target service requirement is determined based on the sensing permission of the terminal.

Therefore, this application provides at least two types of processing logic to obtain the target service requirement.

One type of processing logic is obtaining the target service requirement when it is determined that sensing of the terminal is allowed. Optionally, the method further includes step 903: The second communication apparatus determines that sensing of the terminal is allowed. The second communication apparatus may determine, based on the sensing permission subscribed to by the terminal and/or a sensing notification feedback from the terminal, that sensing of the terminal is allowed.

When determining that sensing of the terminal is allowed, the second communication apparatus may determine the target service requirement, as shown in 902a in the figure, or may request the target service requirement from a data management function network element, as shown in 902b in the figure. The target service requirement may be determined based on a location of the terminal and/or time information.

Step 903 may correspond to step 505 in the method 500 or step 704 in the method 700. Therefore, for a specific process of step 903, refer to the related descriptions in the corresponding step in the foregoing method 500 or 700. Details are not described again.

In such processing logic, step 902 may correspond to step 508 in the method 500 or step 706 in the method 700. Therefore, for a specific process of step 902, refer to the related descriptions in the corresponding step in the foregoing method 500 or 700. Details are not described again.

In another processing logic, the target service requirement is obtained without determining that sensing of the terminal is allowed. The target service requirement may be determined based on the sensing permission of the terminal, and may be specifically determined based on a sensing permission subscribed to by the terminal and a sensing notification feedback from the terminal.

After obtaining the sensing notification feedback from the terminal, the second communication apparatus may determine the target service requirement, as shown in 902a in the figure; or may send a service requirement request to a data management function network element, where the service requirement request carries the sensing notification feedback, and is for requesting to obtain the target service requirement; and the target service requirement is sent to the data management function network element, as shown in 902b in the figure. The target service requirement may be determined based on the sensing permission subscribed to by the terminal and/or the sensing notification feedback. Further, the target service requirement may be further determined based on a location of the terminal and/or time information.

In such processing logic, step 902 may correspond to step 607 in the method 600 or step 805 in the method 800. Therefore, for a specific process of step 903, refer to the related descriptions in the corresponding step in the foregoing method 600 or 800. Details are not described again.

It should be understood that the foregoing two types of processing logic used as examples are merely two possible implementations, and should not constitute any limitation on this application. It is not difficult to learn that the two types of processing logic are both essentially related to the sensing permission of the terminal, and the sensing permission of the terminal may include the sensing permission subscribed to by the terminal and/or the sensing notification feedback from the terminal. Therefore, it may alternatively be considered that the target service requirement is determined based on the sensing permission subscribed to by the terminal and/or the sensing notification feedback from the terminal. Therefore, during specific implementation, the two types of processing logic may be used independently or in combination. For example, after receiving the service requirement request that carries the sensing notification feedback from the terminal, the data management function network element may first determine, based on the sensing permission subscribed to by the terminal and/or the sensing notification feedback from the terminal, that sensing of the terminal is allowed, and then determine the target service requirement. This is not limited in this application.

Further, in the foregoing two types of processing logic used as examples, the second communication apparatus may first obtain the sensing notification feedback from the terminal, for example, obtain the sensing notification feedback from the terminal before step 903 or step 902.

Optionally, the method further includes step 904: Obtain the sensing notification feedback from the terminal, where the sensing notification feedback indicates that the terminal replies with consent to being sensed, that the terminal replies with non-consent to being sensed, or that the terminal does not reply. For example, the second communication apparatus may obtain the sensing notification feedback from the terminal by sending a sensing notification request.

Step 904 may correspond to step 506 in the method 500, step 606 in the method 600, step 705 in the method 700, or step 804 in the method 800. Therefore, for a specific process of step 904, refer to the related descriptions in the corresponding step in the method 500, the method 600, the method 700, or the method 800. Details are not described again.

Optionally, the method further includes step 905: The second communication apparatus sends a service requirement confirmation request to the first communication apparatus, where the service requirement confirmation request is for requesting to use the target service requirement. Accordingly, the first communication apparatus receives the service requirement confirmation request from the second communication apparatus.

The second communication apparatus may send the service requirement confirmation request to the first communication apparatus when the target service requirement is different from the requested service requirement carried in the sensing request.

Optionally, the method further includes step 906: The first communication apparatus sends a service requirement confirmation reply to the second communication apparatus, where the service requirement confirmation reply indicates consent or non-consent to using the target service requirement. Accordingly, the second communication apparatus receives the service requirement confirmation reply from the first communication apparatus.

Optionally, the method further includes step 907: The second communication apparatus initiates a sensing procedure for the terminal based on the target service requirement.

If the service requirement confirmation reply indicates consent to using the target service requirement, the second communication apparatus may initiate, based on the target service requirement, the sensing procedure for the terminal.

Optionally, the method further includes step 908: The second communication apparatus sends a sensing result to the first communication apparatus. Accordingly, the first communication apparatus receives the sensing result from the second communication apparatus.

After obtaining the sensing result, the second communication apparatus may send the sensing result to the first communication apparatus.

Optionally, the method further includes step 909: The second communication apparatus sends a rejection message to the first communication apparatus, where the rejection message is for rejecting the sensing request of the first communication apparatus. Accordingly, the first communication apparatus receives the rejection message from the second communication apparatus.

If the service requirement confirmation reply indicates non-consent to using the target service requirement, the second communication apparatus may reject the sensing request.

Step 905 to step 909 may correspond to step 509 to step 513 in the method 500, step 608 to step 612 in the method 600, step 707 to step 713 in the method 700, and step 806 to step 812 in the method 800. Therefore, for a specific process of step 905 to step 909, refer to the related descriptions in the corresponding step in the method 500, the method 600, the method 700, or the method 800. Details are not described again.

Optionally, the method further includes: The second communication apparatus obtains, from the data management function network element, the sensing permission subscribed to by the terminal and/or a mapping relationship for determining the target service requirement. Accordingly, the data management function network element sends, to the second communication apparatus, the sensing permission subscribed to by the terminal and/or the mapping relationship for determining the target service requirement.

In the solution provided in this application, the target service requirement for determining a KPI for sensing the terminal is related to the sensing permission of the terminal, so that the sensing procedure initiated for the terminal is adaptive to the sensing permission of the terminal, instead of blindly and directly determining, based on a service requirement requested by the AF network element, the AS, or the like, the KPI for sensing the terminal. In other words, in this application, the target service requirement may be obtained at the granularity of a terminal. Specifically, target service requirements of different terminals may be determined based on respective corresponding sensing permissions. Therefore, in consideration of security demands of the different terminals, the different target service requirements are obtained in a flexible manner based on sensing permissions of the different terminals, to initiate sensing procedures for the different terminals based on different KPIs, instead of blindly sensing, by using a same KPI based on service requirements requested by the AF network element or the AS, all terminals that are requested to be sensed.

With reference to the accompanying drawings, the foregoing describes in detail the sensing methods provided in embodiments of this application. With reference to the accompanying drawings, the following describes in detail apparatuses provided in embodiments of this application.

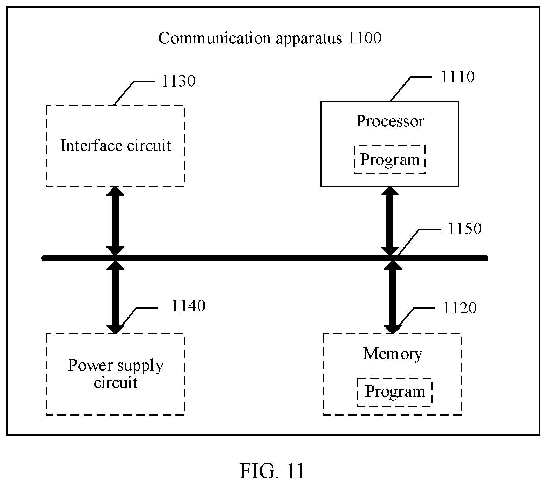

FIG. 10 and FIG. 11 are schematic block diagrams of possible communication apparatuses according to embodiments of this application. These communication apparatuses may be configured to implement a function of the second communication apparatus, a function of the data management function network element, or a function of the first communication apparatus in the foregoing method embodiments, and therefore can also implement the beneficial effects of the foregoing method embodiments.

A communication apparatus provided in this application is shown in FIG. 10. The communication apparatus 1000 includes a communication unit 1010 and a processing unit 1020.

In a possible design, the communication apparatus 1000 is configured to implement a function of the second communication apparatus in any one of the method embodiments shown in FIG. 5a to FIG. 9. For example, the notification apparatus may be the second communication apparatus in the method embodiment shown in FIG. 9, or the communication apparatus may be the SF in the method embodiment shown in FIG. 5a and FIG. 5b, or FIG. 6a and FIG. 6b, may be the sensing server in the method embodiment shown in FIG. 7 or FIG. 8, may be a component (for example, a chip, a chip system, or a processor) configured in the SF or the sensing server, or may be a logical module or software that can implement some or all functions of the SF or the sensing server.

For example, the communication unit 1010 is configured to receive a sensing request, where the sensing request is for requesting to sense a terminal; and the processing unit 1020 is configured to obtain a target service requirement, where the target service requirement is for determining a KPI for sensing the terminal, the target service requirement is related to a sensing permission of the terminal, and the sensing permission is for determining whether sensing of the terminal is allowed.

Optionally, the processing unit 1020 is specifically configured to obtain the target service requirement when determining that sensing of the terminal is allowed.

Optionally, the processing unit 1020 is specifically configured to determine, based on the sensing permission subscribed to by the terminal and/or a sensing notification feedback, that sensing of the terminal is allowed, where the sensing notification feedback indicates that the terminal consents to be sensed or that the terminal does not reply.

Optionally, the communication unit 1010 is further configured to obtain, from a data management function network element, the sensing permission subscribed to by the terminal.

Optionally, the communication unit 1010 is further configured to: send a service requirement request to the data management function network element, where the service requirement request indicates that sensing of the terminal is allowed; and receive the target service requirement from the data management function network element, where the target service requirement is determined based on the service requirement request.

Optionally, the communication unit 1010 is further configured to: send a service requirement request to the data management function network element; and receive the target service requirement from the data management function network element, where the target service requirement is determined based on the service requirement request.

Optionally, the service requirement request carries the sensing notification feedback, the sensing notification feedback indicates that the terminal replies to a sensing notification request with consent to being sensed or the terminal does not reply, and the sensing notification request is for requesting the terminal to reply with consent or non-consent to being sensed.

Optionally, the communication unit 1010 is further configured to send the sensing notification request, where the sensing notification request is for requesting the terminal to reply with consent or non-consent to being sensed; and the processing unit 1020 is further configured to obtain the sensing notification feedback based on a response message to the sensing notification request.

Optionally, the service requirement request message further includes location information of the terminal and/or time information of the sensing request.

Optionally, the sensing request indicates a requested service type, and the service requirement request message further indicates the service type.

Optionally, the processing unit 1020 is specifically configured to determine the target service requirement based on a location of the terminal and/or time information of the sensing request.

Optionally, the processing unit 1020 is specifically configured to determine the target service requirement based on the sensing permission subscribed to by the terminal, the sensing notification feedback, and a mapping relationship, where the sensing notification feedback indicates that the terminal consents to be sensed in response to the sensing notification request or that the terminal does not reply to the sensing notification request, the sensing notification request is for requesting the terminal to reply with consent or non-consent to being sensed, and the mapping relationship includes a correspondence between at least one service requirement and at least one combination of the sensing permission and the sensing notification feedback.

Optionally, the communication unit 1020 is further configured to receive the mapping relationship from the data management function network element.

Optionally, the sensing request is from a first communication apparatus, the sensing request further carries a requested service requirement, and the communication unit 1010 is further configured to: send a service requirement confirmation request to the first communication apparatus, where the service requirement confirmation request is for requesting to use the target service requirement, and the target service requirement is different from the requested service requirement; and receive a service requirement confirmation reply from the first communication apparatus, where the service requirement confirmation reply indicates consent or non-consent to using the target service requirement; and the processing unit 1020 is further configured to: when the service requirement confirmation reply indicates consent to using the target service requirement, initiate a sensing procedure for the terminal based on the target service requirement; or the communication unit 1010 is further configured to: when the service requirement confirmation reply indicates non-consent to using the target service requirement, send a rejection message to the first communication apparatus, where the rejection message is for rejecting the sensing request.

Optionally, the communication unit 1010 is further configured to: when determining that sensing of the terminal is not allowed, send a rejection message to a first communication apparatus, where the rejection message is for rejecting the sensing request.

Optionally, the rejection message further indicates a cause for rejecting the sensing request.

For more detailed descriptions of the communication unit 1010 and the processing unit 1020, directly refer to the related descriptions in the method embodiments shown in FIG. 5a to FIG. 9. Details are not described herein again.

In a possible design, the communication apparatus 1000 is configured to implement a function of the data management functional module (for example, the UDM) in any one of the method embodiments shown in FIG. 5a to FIG. 9. For example, the communication apparatus may be the UDM in any one of the method embodiments shown in FIG. 5a to FIG. 8, or the data management function network element in the method embodiment shown in FIG. 9, may be a component (for example, a chip, a chip system, or a processor) configured in the UDM or another data management function network element, or may be a logical module or software that can implement some or all functions of the UDM or the another data management function network element.

For example, the communication unit 1010 is configured to receive a service requirement request from a second communication apparatus, where the service requirement request is for requesting to obtain a target service requirement, and the target service requirement is for determining a KPI for sensing a terminal; the processing unit 1020 is configured to determine the target service requirement, where the target service requirement is related to a sensing permission of the terminal; and the communication unit 1010 is further configured to send the target service requirement to the second communication apparatus.

Optionally, the service requirement request carries a sensing notification feedback, the sensing notification feedback indicates that the terminal consents to be sensed in response to a sensing notification request or that the terminal does not reply to the sensing notification request, and the sensing notification request is for requesting the terminal to reply with consent or non-consent to being sensed. The processing unit 1020 is specifically configured to determine the target service requirement based on the sensing permission of the terminal, the sensing notification feedback, and a mapping relationship, where the mapping relationship includes a correspondence between at least one service requirement and at least one combination of the sensing permission and the sensing notification feedback.

Optionally, the service requirement request indicates that sensing of the terminal is allowed and one or more of the following: a location of the terminal, time information of a sensing request, or time information of the service requirement request, and the sensing request is for requesting to sense the terminal. The processing unit 1020 is specifically configured to determine the target service requirement based on one or more of the following: the location of the terminal, the time information of the sensing request, or the time information of the service requirement request.

Optionally, the communication unit 1020 is further configured to send a sensing permission subscribed to by the terminal to the second communication apparatus.

For example, the communication unit 1020 is configured to: receive a sensing authorization request from a third communication apparatus, where the sensing authorization request is for requesting to authorize the sensing request, and the sensing request is for requesting to sense the terminal; and send a sensing authorization reply to the third communication apparatus based on the sensing permission of the terminal, where the sensing authorization reply indicates authorization for the sensing request or rejection of authorizing the sensing request.

Optionally, the sensing authorization reply indicates authorization for the sensing request, the sensing authorization reply carries the sensing permission subscribed to by the terminal and/or the mapping relationship for determining the target service requirement, and the target service requirement is for determining the KPI for sensing the terminal.

For more detailed descriptions of the communication unit 1010 and the processing unit 1020, directly refer to the related descriptions in the method embodiments shown in FIG. 5a to FIG. 9. Details are not described herein again.

It should be noted that the communication unit may also be referred to as a transceiver unit, a transceiver module, a transceiver, a transceiver apparatus, or the like. The processing unit may also be referred to as a processor, a processing board, a processing module, a processing apparatus, or the like. Optionally, the communication unit is configured to perform a sending operation and a receiving operation of the second communication apparatus or the data management functional module in the foregoing methods. A device, in the communication unit, configured to implement a receiving function may be considered as a receiving unit, and a device, in the communication unit, configured to implement a sending function may be considered as a sending unit. That is, the communication unit includes the receiving unit and the sending unit.

It should be further noted that, in a possible design, the communication unit and/or the processing unit may be implemented by a virtual module. For example, the processing unit may be implemented by a software functional unit or a virtual apparatus, and the communication unit may be implemented by a software function or a virtual apparatus. In another possible design, the processing unit or the communication unit may alternatively be implemented by a physical apparatus. For example, if the apparatus is implemented by a chip/chip circuit, the communication unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

In embodiments of this application, division into the units is an example, and is merely logical function division. During actual implementation, another division manner may be used. In addition, functional modules in the examples in embodiments of this application may be integrated into one processor, or may exist alone physically, or two or more modules are integrated into one module. The integrated module may be implemented in a form of hardware, or may be implemented in a form of a software functional module.

Another communication apparatus provided in this application is shown in FIG. 11. The communication apparatus 1100 includes at least one processor 1110. The at least one processor 1110 may be configured to execute a computer program or instructions in a memory, to implement the step performed by the second communication apparatus (for example, the SF or the sensing server), the step performed by the data management function network element (for example, the UDM), or the step performed by the first communication apparatus (for example, the AS or the AF) in any one of the method embodiments shown in FIG. 5a to FIG. 9.

Optionally, the communication apparatus 1100 may further include at least one memory 1120, configured to store the instructions executed by the processor 1110, input data needed by the processor 1110 to run the instructions, or data generated by running the instructions by the processor 1110. The at least one processor 1110 and the at least one memory 1120 may be separately disposed. For example, each memory may be connected to one or more processors, so that the connected processor can read information from the memory, and store and/or write information into the memory. Alternatively, the at least one processor 1110 and the at least one memory 1120 may be integrated together. For example, one processor may be integrated with one or more memories.

Optionally, the communication apparatus 1100 further includes an interface circuit 1130, which may be for transmission of data and/or signaling. The at least one processor 1110 and the interface circuit 1130 are coupled to each other. It may be understood that the interface circuit 1130 may be a transceiver, an input/output circuit, a bus, a module, a pin, or another type of communication interface. In the input/output circuit, an input circuit may be for receiving, and an output interface may be for sending.

Optionally, the communication apparatus 1100 further includes a power supply circuit 1140, and the power supply circuit 1140 may be configured to supply power to the communication apparatus 1100.

When the communication apparatus 1100 is configured to implement the methods shown in FIG. 5a to FIG. 9, the processor 1111 is configured to perform a function of the processing unit, and the interface circuit 1120 is configured to perform a function of the receiving unit and/or the sending unit. Whether the interface circuit 1120 is for sending or receiving may specifically depend on whether the interface circuit 1120 is configured to perform a sending action or a receiving action in the solution performed by the communication apparatus 1100.

It may be understood that, when the communication apparatus 1100 is a communication device (for example, an SF, a sensing server, a data management function network element, an AF, or an AS), the interface circuit 1120 may be a transceiver, and may specifically include a transmitter and a receiver. The transmitter is configured to send a signal, and the receiver is configured to receive a signal. When the communication apparatus 1100 is a chip used in a communication device, the interface circuit 1120 may be an input/output circuit, a bus, a module, a pin, or another type of communication interface. In the input/output circuit, an input circuit may be for receiving, and an output interface may be for sending.

It should be understood that, in the communication apparatus 1100 shown in FIG. 11, the processor 1110 may correspond to the processing unit 1020 in the communication apparatus 1000, and the interface circuit 1120 may correspond to the communication unit 1010 in the communication apparatus 1000.

It should be further understood that coupling in embodiments of this application may be indirect coupling or a communication connection between apparatuses, units, or modules, may be in an electrical form, a mechanical form, or another form, and is for information exchange between the apparatuses, the units, or the modules. A specific connection medium between the at least one processor 1110, the at least one memory 1120, the interface circuit 1130, and the power supply circuit 1140 is not limited in this embodiment of this application. In this embodiment of this application, in FIG. 11, the processor 1110, the memory 1120, the interface circuit 1130, and the power supply circuit 1140 are connected through a bus 1150. The bus 1150 is represented by a bold line in FIG. 11, and a manner of connection between other components is merely described as an example, and does not constitute a limitation. The bus may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, only one bold line is for representation in FIG. 11, but this does not mean that there is only one bus or only one type of bus.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the methods in this specification aims to include, but not limited to, these and any memory of another appropriate type.

This application further provides a communication system. The communication system includes one or more of the foregoing first communication apparatus, second communication apparatus, or data management function network element.

For example, the communication system includes an SF and a UDM. Optionally, the communication system further includes a sensing server. Optionally, the communication system further includes a NEF.

This application further provides a computer program product. The computer program product includes a computer program (which may also be referred to as code or instructions). When the computer program is run, a computer is caused to perform the method performed by the second communication apparatus, the data management function network element, or the first communication apparatus in the embodiment shown in FIG. 9, a computer is caused to perform the method performed by the data management function network element in any one of the embodiments shown in FIG. 5a to FIG. 8, a computer is caused to perform the method performed by the SF in the embodiment shown in FIG. 5a and FIG. 5b, or FIG. 6a and FIG. 6b, or a computer is caused to perform the method performed by the sensing server in FIG. 7 or FIG. 8.

This application further provides a computer-readable storage medium. The computer-readable storage medium stores a computer program (which may also be referred to as code or instructions). When the computer program is run, a computer is caused to perform the method performed by the second communication apparatus, the data management function network element, or the first communication apparatus in the embodiment shown in FIG. 9, a computer is caused to perform the method performed by the data management function network element in any one of the embodiments shown in FIG. 5a to FIG. 8, a computer is caused to perform the method performed by the SF in the embodiment shown in FIG. 5a and FIG. 5b, or FIG. 6a and FIG. 6b, or a computer is caused to perform the method performed by the sensing server in FIG. 7 or FIG. 8.

Terms such as "unit" and "module" used in this specification may be for representing computer-related entities, hardware, firmware, combinations of hardware and software, software, or software being executed.

A person of ordinary skill in the art may be aware that, with reference to various illustrative logical blocks (illustrative logical blocks) and steps (steps) described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the foregoing apparatus embodiment is merely an example. For example, the division into the units is merely logical function division, and may be other division during actual implementation. For example, multiple units or components may be combined or integrated into another system, or some features may be ignored or not performed. In addition, the displayed or discussed mutual coupling, direct coupling, or communication connection may be implemented through some interfaces. The indirect coupling or communication connection between the apparatuses or the units may be implemented in electrical, mechanical, or other forms.

The units described as separate parts may or may not be physically separate, and parts displayed as units may or may not be physical units, that is, may be located at one location, or may be distributed on multiple network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used for implementation, all or some of the functions may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by the computer, or a data storage device, for example, a server or a data center, integrating one or more available media. The available medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions in this application essentially, in other words, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:
receiving a sensing request, wherein the sensing request is for requesting to sense a terminal; and
obtaining a target service requirement, wherein the target service requirement is for determining a key performance indicator KPI for sensing the terminal, the target service requirement is related to a sensing permission of the terminal, and the sensing permission is for determining whether sensing of the terminal is allowed.

2. The method according to claim 1, wherein the obtaining the target service requirement comprises:
obtaining the target service requirement when determining that sensing of the terminal is allowed.

3. The method according to claim 2, wherein the determining that sensing of the terminal is allowed comprises:
determining, based on a sensing permission subscribed to by the terminal and/or a sensing notification feedback from the terminal, that sensing of the terminal is allowed, wherein the sensing notification feedback indicates that the terminal consents to be sensed or that the terminal does not reply.

4. The method according to claim 3, wherein the method further comprises:
sending a sensing notification request, wherein the sensing notification request is for requesting the terminal to reply with consent or non-consent to being sensed; and
obtaining the sensing notification feedback based on a response message to the sensing notification request.

5. The method according to claim 3 or 4, wherein the method further comprises:
obtaining, from a data management function network element, the sensing permission subscribed to by the terminal.

6. The method according to any one of claims 1 to 5, wherein the obtaining the target service requirement comprises:
sending a service requirement request to the data management function network element; and
receiving the target service requirement from the data management function network element, wherein the target service requirement is determined based on the service requirement request.

7. The method according to claim 6, wherein the service requirement request carries the sensing notification feedback, the sensing notification feedback indicates that the terminal consents to be sensed in response to the sensing notification request or that the terminal does not reply, and the sensing notification request is for requesting the terminal to reply with consent or non-consent to being sensed.

8. The method according to claim 6 or 7, wherein the service requirement request message further comprises location information of the terminal and/or time information of the sensing request.

9. The method according to any one of claims 6 to 8, wherein the sensing request indicates a requested service type, and the service requirement request message further indicates the service type.

10. The method according to any one of claims 2 to 5, wherein the obtaining the target service requirement comprises:
determining the target service requirement based on a location of the terminal and/or time information of the sensing request.

11. The method according to any one of claims 1 to 5, wherein the obtaining the target service requirement comprises:
determining the target service requirement based on a sensing permission subscribed to by the terminal, the sensing notification feedback, and a mapping relationship, wherein the sensing notification feedback indicates that the terminal consents to be sensed in response to the sensing notification request or that the terminal does not reply to the sensing notification request, the sensing notification request is for requesting the terminal to reply with consent or non-consent to being sensed, and the mapping relationship comprises a correspondence between at least one service requirement and at least one combination of the sensing permission and the sensing notification feedback.

12. The method according to claim 11, wherein the method further comprises:
receiving the mapping relationship from the data management function network element.

13. The method according to any one of claims 1 to 12, wherein the sensing request is from a first communication apparatus, the sensing request further carries a requested service requirement, and the method further comprises:
sending a service requirement confirmation request to the first communication apparatus, wherein the service requirement confirmation request is for requesting to use the target service requirement, and the target service requirement is different from the requested service requirement;
receiving a service requirement confirmation reply from the first communication apparatus, wherein the service requirement confirmation reply indicates consent or non-consent to using the target service requirement; and
when the service requirement confirmation reply indicates consent to using the target service requirement, initiating a sensing procedure for the terminal based on the target service requirement; or
when the service requirement confirmation reply indicates non-consent to using the target service requirement, sending a rejection message to the first communication apparatus, wherein the rejection message is for rejecting the sensing request.

14. The method according to claim 1, wherein the sensing request is from a first communication apparatus, and the method further comprises:
when determining that sensing of the terminal is not allowed, sending a rejection message to the first communication apparatus, wherein the rejection message is for rejecting the sensing request.

15. The method according to claim 13 or 14, wherein the rejection message further indicates a cause for rejecting the sensing request.

16. A sensing method, comprising:
receiving a service requirement request from a second communication apparatus, wherein the service requirement request is for requesting to obtain a target service requirement, and the target service requirement is for determining a key performance indicator KPI for sensing a terminal;
determining the target service requirement, wherein the target service requirement is related to a sensing permission of the terminal; and
sending the target service requirement to the second communication apparatus.

17. The method according to claim 16, wherein the service requirement request carries a sensing notification feedback, the sensing notification feedback indicates that the terminal consents to be sensed in response to a sensing notification request or that the terminal does not reply to the sensing notification request, and the sensing notification request is for requesting the terminal to reply with consent or non-consent to being sensed; and
the determining the target service requirement comprises:
determining the target service requirement based on the sensing permission of the terminal, the sensing notification feedback, and a mapping relationship, wherein the mapping relationship comprises a correspondence between at least one service requirement and at least one combination of the sensing permission and the sensing notification feedback.

18. The method according to claim 16, wherein the service requirement request indicates that sensing of the terminal is allowed and one or more of the following: a location of the terminal, time information of a sensing request, or time information of the service requirement request, and the sensing request is for requesting to sense the terminal; and
the determining the target service requirement comprises:
determining the target service requirement based on one or more of the following: the location of the terminal, the time information of the sensing request, or the time information of the service requirement request.

19. The method according to any one of claims 16 to 18, wherein the method further comprises:
sending the sensing permission subscribed to by the terminal to the second communication apparatus.

20. The method according to any one of claims 16 to 19, wherein the method further comprises:
receiving a sensing authorization request from a third communication apparatus, wherein the sensing authorization request is for requesting to authorize the sensing request, and the sensing request is for requesting to sense the terminal; and
sending a sensing authorization reply to the third communication apparatus based on the sensing permission of the terminal, wherein the sensing authorization reply indicates authorization for the sensing request or rejection of authorizing the sensing request.

21. The method according to claim 20, wherein the sensing authorization reply indicates authorization for the sensing request, and the sensing authorization reply carries a sensing permission subscribed to by the terminal and/or the mapping relationship for determining the target service requirement.

22. A sensing method, comprising:
receiving a sensing authorization request, wherein the sensing authorization request is for requesting to authorize a sensing request, and the sensing request is for requesting to sense a terminal; and
sending a sensing authorization reply based on a sensing permission subscribed to by the terminal, wherein the sensing authorization reply indicates authorization for the sensing request or rejection of authorizing the sensing request.

23. The method according to claim 22, wherein the sensing authorization reply indicates authorization for the sensing request, the sensing authorization reply carries the sensing permission subscribed to by the terminal and/or a mapping relationship for determining a target service requirement, and the target service requirement is for determining a key performance indicator KPI for sensing the terminal.

24. The method according to any one of claims 1 to 23, wherein the sensing permission subscribed to by the terminal is: not allowed to be sensed; allowed to be sensed; allowed to be sensed, with a need to notify the terminal but without requiring a feedback from the terminal; allowed to be sensed when the terminal replies with consent or does not reply, with a need to notify the terminal; or allowed to be sensed only when the terminal replies with consent, with a need to notify the terminal.

25. A sensing method, comprising:
receiving a service requirement confirmation request from a second communication apparatus, wherein the service requirement confirmation request is for requesting to use a target service requirement, and the target service requirement is different from a requested service requirement; and
sending a service requirement confirmation reply to the second communication apparatus, wherein the service requirement confirmation reply indicates consent or non-consent to using the target service requirement.

26. The method according to claim 25, wherein the method further comprises:
receiving a rejection message from the second communication apparatus, wherein the rejection message is for rejecting a sensing request, and the sensing request is for requesting to sense a terminal.

27. The method according to claim 26, wherein the rejection message further indicates a cause for rejecting the sensing request.

28. A sensing method, comprising:
receiving, by a second communication apparatus, a sensing request, wherein the sensing request is for requesting to sense a terminal; and
obtaining, by the second communication apparatus, a target service requirement from a data management function network element, wherein the target service requirement is for determining a KPI for sensing the terminal.

29. The method according to claim 28, wherein the obtaining, by the second communication apparatus, the target service requirement from the data management function network element comprises:
when determining that sensing of the terminal is allowed, sending, by the second communication apparatus, a service requirement request to the data management function network element, wherein the service requirement request indicates that sensing of the terminal is allowed;
determining, by the data management function network element, the target service requirement; and
sending, by the data management function network element, the target service requirement to the second communication apparatus.

30. The method according to claim 29, wherein the target service requirement carries one or more of the following: a location of the terminal, time information of the sensing request, or time information of the service requirement request.

31. The method according to claim 29 or 30, wherein determining, by the second communication apparatus, that sensing of the terminal is allowed comprises:
determining, by the second communication apparatus based on a sensing permission subscribed to by the terminal and/or a sensing notification feedback from the terminal, that sensing of the terminal is allowed, wherein the sensing notification feedback indicates that the terminal consents to be sensed or that the terminal does not reply.

32. The method according to claim 31, wherein the method further comprises:
sending, by the second communication apparatus, a sensing notification request to the terminal, wherein the sensing notification request is for requesting the terminal to reply with consent or non-consent to being sensed; and
obtaining, by the second communication apparatus, the sensing notification feedback based on a response message to the sensing notification request, wherein the sensing notification feedback indicates that the terminal consents to be sensed or that the terminal does not reply.

33. The method according to claim 31 or 32, wherein the method further comprises:
obtaining, by the second communication apparatus from the data management function network element, the sensing permission subscribed to by the terminal.

34. The method according to any one of claims 29 to 33, wherein determining, by the data management function network element, the target service requirement comprises:
determining, by the data management function network element, the target service requirement based on a mapping relationship, wherein the mapping relationship comprises a correspondence between at least one service requirement and one or more of the following: the sensing permission subscribed to by the terminal, the sensing notification feedback from the terminal, the location of the terminal, the time information of the sensing request, or the time information of the service requirement request.

35. A communication system, comprising one or more of a first communication apparatus, a second communication apparatus, or a data management function network element, wherein
the second communication apparatus is configured to perform the sensing method according to any one of claims 1 to 15, the data management network element is configured to perform the sensing method according to any one of claims 16 to 24, and the first communication apparatus is configured to perform the sensing method according to any one of claims 25 to 27.

36. A communication apparatus, comprising one or more functional units, configured to implement the method according to any one of claims 1 to 27.

37. A communication apparatus, comprising a processor, wherein the processor is configured to execute program code, to cause the communication apparatus to implement the method according to any one of claims 1 to 27.

38. A computer-readable storage medium, storing a computer program, wherein when the computer program is executed by a processor, the method according to any one of claims 1 to 27 is caused to be performed.

39. A computer program product, comprising a computer program, wherein when the computer program is run, the method according to any one of claims 1 to 27 is caused to be performed.
